# EUROPÄISCHE PATENTSCHRIFT

(11) **EP 3 683 691 B1**
(45) Veröffentlichungstag und Bekanntmachung des Hinweises auf die Patenterteilung: **27.07.2022**
(21) Anmeldenummer: 20161907.9
(22) Anmeldetag: 19.12.2017
(51) Int. Cl.: G06F 13/42

(54) **VORRICHTUNG ZUM ANSCHLIESSEN ALS BUSKNOTEN AN EINEN DIFFERENTIELLEN ZWEIDRAHTDATENBUS EINES DATENBUSSYSTEMS ZUR ÜBERTRAGUNG VON BELEUCHTUNGSDATEN FÜR LEUCHTMITTEL**
DEVICE FOR CONNECTING AS BUS NODE TO A DIFFERENTIAL TWO-WIRE DATA BUS OF A DATA BUS SYSTEM FOR TRANSMITTING ILLUMINATION DATA FOR LAMPS
DISPOSITIF POUR LA CONNEXION EN TANT QUE NOEUD DE BUS À UN BUS DE DONNÉES DIFFÉRENTIEL À DEUX FILS D'UN SYSTÈME DE BUS DE DONNÉES POUR LA TRANSMISSION DE DONNÉES D'ÉCLAIRAGE POUR DES MOYENS D'ÉCLAIRAGE

(30) Priorität: 21.12.2016 DE 102016125290; 16.01.2017 DE 102017100718
(43) Veröffentlichungstag der Anmeldung: 22.07.2020
(62) Teilanmeldung aus: 17837876.6
(73) Patentinhaber: Elmos Semiconductor SE, 44227 Dortmund (DE)
(72) Erfinder: Schmitz, Christian, 44575 Castrop-Rauxel (DE)
(74) Vertreter: dompatent von Kreisler Selting Werner - Partnerschaft von Patent- und Rechtsanwälten mbB

(56) Entgegenhaltungen:
- EP-A2- 2 323 463
- EP-A2- 2 400 608
- EP-A2- 2 571 200
- WO-A1-2013/095133
- DE-B3-102015 004 434
- DE-U1-202008 012 029
- DE-U1-202013 103 146
- US-A1- 2003 009 715
- US-A1- 2009 021 955
- US-A1- 2009 235 136
- US-A1- 2011 309 746
- US-A1- 2012 188 738
- US-A1- 2014 101 351
- US-A1- 2016 047 860
- US-A1- 2016 138 768

## Beschreibung

Die Erfindung betrifft eine Vorrichtung zum Anschließen als Busknoten an einen differentiellen Zweidrahtdatenbus.

### Einleitung

In der Automobilindustrie sollen in Zukunft Leuchtbänder aus Leuchtdioden (LEDs) mit vorzugsweise mehreren Farben eingesetzt werden können. Diese LEDs sollen mittels den bekannten Puls-Modulations-Verfahren wie z.B. Puls-Weiten-Modulation (PWM), Puls-Code-Modulation (PCM), Puls-Count-Modulation (PCM), Phasen-Offset-Modulation (POM), Puls-Dichte-Modulation (PDM), Puls-Frequenz-Modulation (PFM) etc. angesteuert und mit Energie versorgt werden. Die entsprechenden Modulationsarten kann der Fachmann der einschlägigen Literatur entnehmen. Wenn im Folgenden von PWM die Rede ist, sind damit im Rahmen der Erfindung sämtliche Pulsmodulationsarten gemeint, die derzeit im Stand der Technik bekannt sind. Je nach dem mittleren Spannungs- oder Strompegel, der an die jeweilige LED gelegt wird, kann die LED in der Helligkeit und gegebenenfalls in gewissem Umfang auch in der Farbtemperatur eingestellt werden. Somit bestimmen beispielsweise im Falle einer PWM-Modulation Duty-Cycle und Pegel Helligkeitserscheinung und wahrgenommene Farbtemperatur.

Die LEDs des Leuchtbandes sind üblicherweise über die Länge des Leuchtbandes gleichmäßig verteilt.

Im Stand der Technik ist es üblich, mehrere integrierte Schaltungen, die sich als Busknoten mehr oder weniger ebenfalls gleichverteilt auf dem Leuchtband befinden, zur Ansteuerung der LEDs zu benutzen. Typischerweise sind jedem Busknoten dabei mehrere Leuchtmittel, vorzugsweise LEDs, zugeordnet, die von einem Busknoten dann jeweils gesteuert werden.

Diese Ansteuerung erfolgt für die einzelne integrierte Schaltung für eine einzelne LED oder für mehrere auf dem Leuchtband typischerweise hintereinander angeordnete LEDs, also für einen Leuchtbandabschnitt, der dieser integrierten Schaltung zugeordnet ist.

Im Stand der Technik ist es nun üblich, diese integrierten Schaltungen jeweils mit einem Schieberegister mit einem Eingang und einem Ausgang zu versehen. Der Eingang eines nachfolgenden Schieberegisters einer auf dem Leuchtband nachfolgenden integrierten Schaltung ist dabei mit dem Ausgang des Schieberegisters der in dem Leuchtband vorausgehenden integrierten Schaltung verbunden. Die erste integrierte Schaltung des Leuchtbandes ist statt mit einer vorausgehenden integrierten Schaltung mit einem Bus-Master (BM) verbunden, der die Daten und den Schiebetakt erzeugt. Typischerweise handelt es sich um einen Micro-Controller.

Der Bus-Master (BM) versorgt über eine Taktleitung (TCK) alle Schieberegistersegmente aller integrierten Schaltungen entlang einer derartig zusammengesetzten Schieberegisterkette mit dem notwendigen Schiebetakt und einem Übernahmesignal, das über eine Testdatenleitung (TDI) im Zeitmultiplex oder eine Test-Mode-Signalleitung (TMS) im Raummultiplex übermittelt wird, mit dem die aktuellen Werte in den Segmenten der Schieberegisterkette in Schatten-Register der integrierten Schaltungen geladen werden.

Um die benötigten Informationen zu übertragen, erzeugt der Bus-Master (BM) also einen seriellen Datenstrom, der die Informationen über Helligkeit und/oder Farbtemperatur enthält, schiebt diese in der bit-richtigen Reihenfolge in die Schieberegisterkette und signalisiert im korrekten Takt den integrierten Schaltkreisen die Übernahme, woraufhin diese ihre Schattenregister entsprechend laden und die PWM-Modulation der LED-Treiber bezüglich Amplitude und Duty-Cycle bzw. Füllfaktor entsprechend den somit geladenen Helligkeits- und Farbtemperaturwerten einstellen.

Hierbei treten bei der Verwendung im Automobil mehrere Probleme auf, die zu lösen sind.

Zum Ersten erfordert die aus dem Stand der Technik bekannte Vorgehensweise und die aus dem Stand der Technik bekannte Anordnung zur Steuerung eines derartigen Leuchtbandes eine Versorgungsspannungsleitung, eine Masseleitung, eine Taktleitung, eine Signalisierungsleitung und eine Datenleitung, also insgesamt fünf Leitungen. Als Masseleitung kann gegebenenfalls die Karosserie des Autos genutzt werden, wenn diese nicht aus nicht leitendem Kunststoff oder einem anderen Isolator ist. Es verbleibt dann immer noch die Notwendigkeit von vier Leitungen. Dies führt zu Kosten und einer Gewichtszunahme.

Zum Zweiten ist kein Rückkanal vorgesehen, um beispielsweise Fehlerfälle erkennen zu können und/oder die Temperatur am Ort der LED messen zu können und/oder einen Selbsttest durchführen zu können etc.

Zum Dritten reicht die erzielbare Geschwindigkeit für viele Anwendungen nicht aus. Bei einer weiteren Erhöhung der Datenrate kann es zu Abstrahlungen kommen.

Es ist also eine Lösung erforderlich, die die Programmierung und das Auslesen der integrierten Schaltungen über eine einzige Datenleitung ermöglicht.

Aus dem Stand der Technik ist das JTAG-Protokoll bekannt. Das JTAG-Protokoll hat sich zu einer der führenden Hilfsmittel bei der Programmierung, dem Test, dem Debugging und der Emulation von integrierten Schaltkreisen entwickelt. In einem Verfahren, das als Boundary-Scan-Verfahren bezeichnet wird, kann ein Host-Prozessor den Zustand einer integrierten Schaltung kontrollieren. Insbesondere ist der Host-Prozessor als Bus-Master über eine spezielle Schnittstelle, die JTAG-Schnittstelle nach IEEE 1149 Standard, in der Lage, die integrierte Schaltung als Busknoten geeignet zu programmieren und gegebenenfalls zu initialisieren. Des Weiteren ist der Host-Prozessor als Bus-Master in der Lage, den Zustand der integrierten Schaltung nach einer vorbestimmten Anzahl von Systemtaktperioden der JTAG-Schnittstelle nach IEEE 1149 Standard oder bei Erkennung eines vorbestimmten Ereignisses auszulesen oder während des Betriebs der integrierten Schaltung, also des Busknotens, abzuändern. Dies umfasst auch das Anhalten einer Programmausführung durch die integrierte Schaltung und das Anhalten des zeitlichen Ablaufs eines endlichen Automaten der integrierten Schaltung oder den zwangsweisen Wechsel in andere Zustände oder das Ändern von Speicherinhalten. Das JTAG-Protokoll ist aber eine Punkt-zu-Punkt-Verbindung und damit für die Steuerung automobiler Leuchtbänder ungeeignet. Aus EP-B-0 503 117 ist zwar eine Verkettung von JTAG-Testschnittstellen seit langem bekannt. Die EP-B-0 503 117 offenbart aber die Verkettung von Vierdraht-JTAG-Schnittstellen. Damit erfüllt die Technik der EP-B-0 503 117 die Anforderung an einen Zweidrahtdatenbus für die Steuerung automobile LED basierender Lichtbänder nicht.

Der im weiteren Verlauf beschriebene Vorschlag betrifft die Steuerung und/oder Programmierung mehrerer integrierter Schaltungen, wie z.B. Mikrosysteme wie mikroelektromechanische Systeme (MEMS) und integrierte mikroelektrooptische Systeme (MEOS) mittels eines Zweidrahtdatenbusses, wobei die zu steuernden integrierten Schaltungen, Mikrosysteme inkl. mikroelektromechanischen Systemen (MEMS) und integrierten mikroelektrooptischen Systeme (MEOS) jeweils die Rolle eines Busknotens einnehmen. Bei solchen Systemen ist es bereits heute üblich, diese für den Fertigungstest über einen JTAG-Test-Bus nach IEEE 1149 Standard in reiner Punkt-zu-Punkt-Konfiguration anzusteuern. Diese standardgemäße JTAG-Schnittstelle verfügt über einen Testdaten-Port mit typischerweise vier Testanschlüssen, nämlich über
1. mindestens einen seriellen Dateneingang (Testdateneingang) TDI,
2. mindestens einen seriellen Datenausgang (Testausgang) TDo,
3. mindestens einen Mode-Eingang (Testmode-Eingang) TMS,
4. mindestens einen Takteingang (Testtakteingang) TCK,
5. einen optionalen Rücksetzeingang (Testrücksetzeingang) TRST.

Da das Verfahren seit mehreren Jahrzehnten bekannt ist, wird an dieser Stelle auf die entsprechende Fachliteratur und auf andere Publikationen verwiesen (z.B. den IEEE 1149 Standard).

Hier sei nur so viel kurz beschrieben: Das JTAG-Protokoll nach dem IEEE 1149-Standard umfasst im Basisstandard fünf Signalgruppen, die zwischen der Emulationseinheit, die den Host-Prozessor enthält und damit als Bus-Master fungiert, und der integrierten Schaltung als Slave, im Folgenden jeweils mit Busknoten bezeichnet, ausgetauscht werden. Das TCK-Signal stellt den Systemtakt dar und synchronisiert zeitlich die interne Zustandsmaschine des Test-Controllers (TAPC) der JTAG-Testschnittstelle nach IEEE 1149-Standard der integrierten Schaltung. Das TMS-Signal steuert den Zustand dieses Test-Controllers (TAPC) der JTAG-Schnittstelle des Busknotens. Je nach Zustand des Test-Controllers (TAPC) führt die JTAG-Testschnittstelle des Busknotens unterschiedliche Operationen durch. Der TDI-Eingang stellt einen seriellen Dateneingang dar. Der TDo-Ausgang stellt einen seriellen Datenausgang dar. Die beiden Eingänge TMS und TDI werden typischerweise, aber nicht notwendigerweise, mit der steigenden TCK-Flanke abgetastet. Der Datenausgang (TDo) wechselt sein Datum typischerweise mit der fallenden Flanke des TCK-Signals. Die TCK-, TMS- und TDI-Einzelsignale bilden im Stand der Technik die Testdateneingangssignale. Im Zusammenhang mit dem Vorschlag bilden sie die Dateneingangssignale. Das TDo-Signal stellt das Ausgangssignal dar. Mit der steigenden Systemtaktflanke (TCK-Flanke) und bei geeigneter Einstellung eines Test-Controller (TAPC) internen Instruktionsregisters (IR) eines Test-Controllers (TAPC) werden die Daten seriell über den seriellen Dateneingang TDI in verschiedene Schieberegisterketten, sogenannte Scan-Pfade, in die integrierte Schaltung als Busknoten hinein verschoben. Gleichzeitig wird der ursprüngliche Inhalt der betreffenden Scan-Kette am seriellen Datenausgang (TDo) ausgegeben. Hierbei können Zustandsvektoren endlicher Automaten innerhalb des Busknotens Teil der Scan-Kette sein. Somit ist eine Änderung der Inhalte und Zustände bzw. die Kontrolle dieser Inhalte und Zustände der Speicherzellen der Scan-Ketten über diese Schnittstelle im Stand der Technik leicht möglich. Hier sei nochmals auf die Fachliteratur verwiesen.

### Fig. 1 (Stand der Technik)

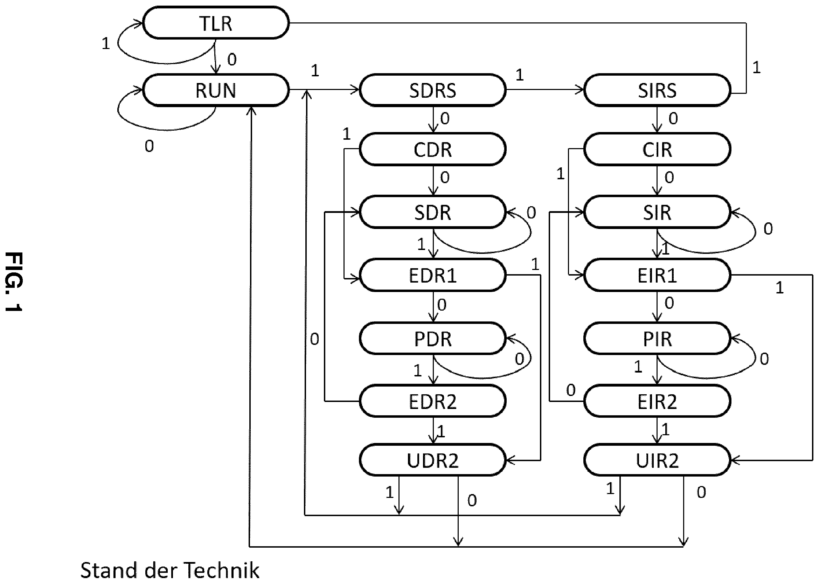

Fig. 1 zeigt das standardisierte Zustandsdiagramm für einen JTAG-Test-Controller (TAPC) entsprechend dem Stand der Technik und der relevanten Normen. Nach dem Zurücksetzen des Systems befindet sich der Test-Controller (TAPC) in dem Zustand "Test-Logik zurücksetzen" (TLR). In diesem verbleibt er, solange das Test-Mode-Signal (TMS) 1 ist. Wird das Test-Mode-Signal (TMS) 0, so wechselt der Test-Controller (TAPC) synchron zum Systemtakt (TCK) in den "Wartezustand" (RUN). In diesem verbleibt der Test-Controller (TAPC), bis am Test-Mode-Signal (TMS) eine 1 anliegt. Dann wechselt der Test-Controller (TAPC) in den Zustand "Start des Datenregisterschiebens" (SDRS). Sofern das Test-Mode-Signal (TMS) auch beim nächsten Mal wieder eine 1 zeigt, wechselt der Test-Controller (TAPC) dann in den Zustand "Start Instruktionsregisterschieben" (SIRS). Sofern auch dann mit dem nächsten Takt wieder eine 1 auf dem Test-Mode-Signal (TMS) anliegt, wechselt der Test-Controller (TAPC) wieder in den Zustand "Testlogik zurücksetzen" (TLR) und setzt die Datenschnittstellenlogik zurück.

Liegt jedoch im Zustand "Start des Instruktionsregisterschiebens" (SIRS) eine 0 auf dem Test-Mode-Signal (TMS) vor, so wechselt der Test-Controller (TAPC) in den Zustand "Instruktionsregisterdaten laden" (CIR) in dem die Daten, die in einem Instruktionsschattenregister verfügbar sind, in das Instruktionsregister (IR) geladen werden. Insofern ist das Instruktionsregister (IR) ein zweistufiges Register, bei dem der Vordergrund durch ein Schieberegister gebildet wird und die eigentlichen Daten sich in einem Schattenregister befinden, das nur in diesem Zustand gelesen wird. Das Schieberegister des Instruktionsregisters (IR) dient der Zu- und Abführung der Daten, während das Schattenregister des Instruktionsregisters (IR) die eigentlichen, gültigen Daten enthält. Diese Zweistufigkeit gilt für alle Register, insbesondere auch für die Datenregister (DR) der JTAG-Schnittstelle und auch für die im Folgenden beschriebenen Register der Schnittstelle. Gegebenenfalls kann das Schattenregister des Instruktionsregisters (IR) noch ganz oder teilweise in eines für Lese- und eines für Schreibvorgänge unterteilt sein. Weitere Sichtbarkeits- und Zugriffsmöglichkeitenänderungen in Abhängigkeit von inneren Zuständen sind möglich. Liegt im Zustand "Instruktionsregisterdaten laden" (CIR) beim nächsten Takt des Test-Mode-Signals (TMS) eine 1 an, so wechselt der Test-Controller (TAPC) direkt in den später beschriebenen Zustand "Instruktionsregister Exit 1" (EIR1). Liegt jedoch eine 0 an, so wechselt der Test-Controller (TAPC) in den Zustand "Schieben Instruktionsregister" (SIR) in dem er verbleibt, solange eine 0 am Test-Mode-Signal (TMS) anliegt. Nur in diesem Zustand wird das Schieberegister des Instruktionsregisters (IR) in der Funktion eines Schieberegisters betrieben und sein Dateninhalt mit jedem Takt des Systemtakts (TCK) um ein Bit in Richtung auf den seriellen Datenausgang (TDo) verschoben, mit dem die letzte Speicherzelle des Schieberegisters des Instruktionsregisters (IR) verbunden ist. Das Schattenregister des Instruktionsregisters (IR) wird diesem Schiebevorgang nicht unterworfen. Die am Dateneingang (TDI) anliegende Dateninformation wird mit jedem Takt des Systemtakts (TCK) in die erste Zelle des Schieberegisters des Instruktionsregisters (IR) geladen und von dort während des Schiebens mit jedem weiteren Takt weiterbefördert. Sofern aber bei einem Takt eine 1 an dem Test-Mode-Signal anliegt, verlässt der Test-Controller (TAPC) den Zustand "Instruktionsregister schieben" (SIR) und wechselt in den schon zuvor erwähnten Zustand "Instruktionsregister Exit 1" (EIR1). Sofern beim nächsten Takt des Systemtakts (TCK) wieder eine 1 anliegt, wechselt der Test-Controller (TAPC) in den Zustand "Instruktionsregister schreiben" (UIR2), in dem der Wert des Schieberegisterteils des Instruktionsregisters (IR) in das Schattenregister des Instruktionsregisters (IR) geschrieben wird. Liegt jedoch im Zustand "Instruktionsregister Exit 1" (EIR1) eine 0 am Test-Mode-Signal (TMS) an, so wechselt der Test-Controller (TAPC) in den Zustand "Pause Instruktionsregister" (PIR), wo er verbleibt, solange als Test-Mode-Signal (TMS) eine 0 anliegt. Liegt im Zustand "Pause Instruktionsregister" (PIR) eine 1 auf dem Test-Mode-Signal (TMS) an, so wechselt der Test-Controller (TAPC) in den Zustand "Instruktionsregister Exit 2" (EIR2). Sofern mit dem nächsten Systemtakt (TCK) eine 0 auf dem Test-Mode-Signal (TMS) anliegt, wechselt der Test-Controller (TAPC) wieder zum bereits beschriebenen Zustand "Instruktionsregister schieben" (SIR) zurück. Sofern jedoch im Zustand "Instruktionsregister Exit 2" (EIR2) mit dem nächsten Systemtakt (TCK) eine 1 auf dem Test-Mode-Signal (TMS) anliegt, wechselt der Test-Controller (TAPC) in den Zustand "Instruktionsregister schreiben" (UIR2). Im darauf folgenden Takt wechselt der Test-Controller (TAPC) in den Zustand "Start des Datenregisterschiebens" (SDRS), wenn bei diesem Takt als Test-Mode-Signal (TMS) eine 1 anliegt, und in den Zustand "Warten" (RUN), wenn eine 0 anliegt.

Liegt im Zustand "Start des Datenregisterschiebens" (SDRS) als Test-Mode-Signal (TMS) eine 0 vor, so wechselt der Test-Controller (TAPC) in den Zustand "Datenregisterdaten laden" (CDR) in dem die Daten, die in einem Datenschattenregister verfügbar sind, in das jeweilige Datenregister (DR) geladen werden. Welches Datenregister (DR) von mehreren Datenregistern ausgewählt wird, bestimmen dabei standardgemäß zumindest ein Teil der gültigen Bits des Schattenregisters des Datenregisters (DR). Auch hier ist typischerweise das Datenregister (DR) ein zweistufiges Register, bei dem der Vordergrund durch ein Schieberegister gebildet wird und die eigentlichen Daten sich in einem Schattenregister befinden, das nur in diesem Zustand gelesen wird. Das Schieberegister des Datenregisters (DR) dient auch hier der Zu- und Abführung der Daten, während das Schattenregister des Datenregisters (DR) die eigentlichen Daten enthält. Diese Zweistufigkeit gilt, wie gesagt, für alle Register der JTAG-Schnittstelle, auch die im Folgenden beschriebenen Register der Schnittstelle, die standardgemäß als Datenregister (DR) ausgeführt werden. Gegebenenfalls kann das Schattenregister des Datenregisters (DR) wieder ganz oder teilweise in eines für Lese- und eines für Schreibvorgänge unterteilt sein. Weitere Sichtbarkeits- und Zugriffsmöglichkeitenänderungen in Abhängigkeit von inneren Zuständen sind auch hier möglich. Liegt im Zustand "Datenregisterdaten laden" (CDR) beim nächsten Takt des Test-Mode-Signals (TMS) eine 1 an, so wechselt der Test-Controller (TAPC) direkt in den später beschriebenen Zustand "Datenregister Exit 1" (EDR1). Liegt jedoch eine 0 an, so wechselt der Test-Controller (TAPC) in den Zustand "Schieben Datenregister" (SDR) in dem er verbleibt, solange eine 0 am Test-Mode-Signal (TMS) anliegt. Nur in diesem Zustand und sonst nicht, wird das Schieberegister des Datenregisters (DR) in der Funktion eines Schieberegisters betrieben und sein Dateninhalt mit jedem Takt des Systemtakts (TCK) um ein Bit in Richtung auf den seriellen Datenausgang (TDo) verschoben, mit dem die letzte Speicherzelle des Schieberegisters des Datenregisters (DR) verbunden ist. Das Schattenregister des Datenregisters (DR) wird diesem Schiebevorgang nicht unterworfen. Die am Dateneingang (TDI) anliegende Dateninformation wird mit jedem Takt des Systemtakts (TCK) in die erste Zelle des Schieberegisters des Datenregisters (DR) geladen und von dort während des Schiebens mit jedem weiteren Takt weiterbefördert. Sofern aber bei einem Takt als Test-Mode-Signal (TMS) eine 1 anliegt, verlässt der Test-Controller (TAPC) den Zustand "Datenregister schieben" (SDR) und wechselt in den schon zuvor erwähnten Zustand "Datenregister Exit 1" (EDR1). Sofern beim nächsten Takt des Systemtakts (TCK) wieder eine 1 anliegt, wechselt der Test-Controller (TAPC) in den Zustand "Datenregister schreiben" (UDR2), bei dem der Wert des Schieberegisterteils des Datenregisters (DR) in das Schattenregister des Datenregisters (DR) geschrieben wird. Liegt jedoch im Zustand "Datenregister Exit 1" (EDR1) als Test-Mode-Signal (TMS) eine 0 an, so wechselt der Test-Controller (TAPC) in den Zustand "Pause Datenregister" (PDR), in dem er verbleibt, solange als Test-Mode-Signal (TMS) eine 0 anliegt. Liegt im Zustand "Pause Datenregister" (PDR) als Test-Mode-Signal (TMS) eine 1 an, so wechselt der Test-Controller (TAPC) in den Zustand "Datenregister Exit 2" (EDR2). Sofern mit dem nächsten Systemtakt (TCK) als Test-Mode-Signal (TMS) eine 0 anliegt, wechselt der Test-Controller (TAPC) wieder zum bereits beschriebenen Zustand "Datenregister schieben" (SDR) zurück. Sofern jedoch im Zustand "Datenregister Exit 2" (EDR2) mit dem nächsten Systemtakt (TCK) eine 1 auf dem Test-Mode-Signal (TMS) anliegt, wechselt der Test-Controller (TAPC) in den Zustand "Datenregister schreiben" (UDR2). Im darauf folgenden Takt wechselt der Test-Controller (TAPC) in den Zustand "Start des Datenregisterschiebens" (SDRS), wenn bei diesem Takt Test-Mode-Signal (TMS) eine 1 anliegt, und in den Zustand "Warten" (RUN), wenn eine 0 anliegt.

Es ist besonders sinnvoll, dieses Zustandsschema des IEEE 1149 JTAG-Standards zu verwenden, um kompatibel zu dem bereits großflächig im Einsatz befindlichen Standard auf Software-Ebene zu bleiben. Selbstverständlich sind Abweichungen von diesem JTAG-Standard denkbar. Die Beschreibung erfolgt anhand des Beispiels, dass dieser JTAG-Standard für das Zustandsdiagramm des Test-Controllers (TAPC) eingehalten wird.

Die Halbleiterindustrie hat in den vergangenen Jahren mehrfach versucht, die Anzahl der zu verwendenden Anschlüsse für solche JTAG-Schnittstellen zu reduzieren, um die Größe der benötigten Gehäuse und damit die Herstellkosten zu beschränken. In US-A-2007/0033465 ist eine Technik beschrieben, die keine konsistente Wandlung der Daten des IEEE 1149.1 4-Wire-JTAG-Protokolls in die Daten des dort beschriebenen Verfahrens und umgekehrt erlaubt. Die dort beschriebene Vorrichtungsanordnung und das dort beschriebene Verfahren erfordern synchronisierte Zeitschlitze zwischen dem Bus-Master, also dem Host-Prozessor und dem Busknoten als Slave, also der integrierten Schaltung, die getestet, programmiert oder debugged werden soll. Im Falle einer fehlenden zeitlichen Synchronisation des Zugriffs von Bus-Master und Busknoten auf den Testdatenbus kann der TDo-Ausgangstreiber des Busknotens und der Bus-Master-Ausgangstreiber (typischerweise eine Push-Pull-Stufe) bei gleichzeitigem sendenden Zugriff auf die Testdatenleitung einen Kurzschluss erzeugen. Außerdem offenbart sie nur eine Punkt-zu-Punkt-Verbindung.

Aus der US-A-2007/0033465 und der US-A-2011/0150065 sind Mehrpegel-Eindraht-Punkt-zu-Punkt-Anordnungen bekannt, die bereits nur mit einer Datenleitung auskommen, aber nicht für eine Ansteuerung mehrerer Busknoten geeignet sind. Die Erweiterung durch die in der EP-B-0 503 117 offengelegten Verkettungsmethoden ist nicht möglich, da diese keine geeignete Methode zur bidirektionalen Weiterschaltung der Zwischenpegel offenbart.

Verschiedene Ausgestaltungen von Datenübertragungsbussystemen sind beschrieben in DE-A-102 56 631, DE-B-102 61 174, DE-A-10 2010 042 311, DE-B-10 2015 004 434, US-A-6 105 077, US-A-2004/0208200, US-A-2011/0150065, US-A-2012/0144078, US-A-2013/0073761 und US-A-2014/0281076.

Aus US-B-8 492 983 ist eine Verkettung mittels einer Eindraht-Punkt-zu-Punkt Datenleitung (Bezugszeichen 11 in US-B-8 492 983) bekannt. Diese benötigt jedoch eine Rückleitung (Fig. 4 der US-B-8 492 983). Somit wird der Vorteil der einzigen Datenleitung durch die Notwendigkeit einer Rückleitung wieder aufgegeben.

Es sind ferner verschiedene Druckschriften bekannt, die sich ebenfalls mit der Datenübertragung befassen. Zu nennen sind hier die DE-C-196 43 013, die DE-A-102 15 720, die DE-A-2006 022 985, die DE-B-10 2007 060 441, die US-A-2009/0252210 und die US-A-2008/0255791. Eindraht-Datenbussysteme sowie Zweidrahtdatenbussysteme, die gegebenenfalls differentiell betrieben werden, sind für die Ansteuerung von LEDs grundsätzlich beispielsweise aus DE-U-20 2008 012 029, US-A-5 859 657, US-B-6 297 724, US-A-2010/0109530 und US-A-2014/0333207 bekannt. Bei all diesen Systemen jedoch wird in den Busknoten keine JTAG-Schnittstelle verwendet, wie sie herkömmlicherweise für beispielsweise den Boundary-Scan-Test eingesetzt wird. Keine der hier genannten Schriften legt offen, wie der Bus-Master (BM) im Falle einer Verkettung von Busknoten diese mittels einer JTAG-Schnittstellen steuern kann.

Dies trifft auch auf die US-A-2014/0281076 zu, die eine Stern-Topologie offenbart. Eine solche Stern-Topologie eines Netzwerks lässt eine Korrelation zwischen physikalischer Position und logischer Adresse nicht zu und ist daher für die Anwendung eines Verfahrens zur Vergabe von Busadressen (Autoadressierung) nicht geeignet. Die Anwendbarkeit eines solchen Verfahrens ist aber Voraussetzung für die Verwendung in der Automobilindustrie.

Aus der US-A-2014/0333207 sind eine Vorrichtung und ein Verfahren zum Betrieb eines Beleuchtungssystems bekannt, wobei Botschaften von "intelligenten" Knoten empfangen und weitergeleitet werden. Der Betrieb des bekannten Beleuchtungssystems führt innerhalb der Knoten zu einem Zeitverzug bei der Umsetzung der Daten zwischen den Datenbusabschnitten, was für die schnelle Einstellung von Lichtszenen ungeeignet ist.

Aus der US-A-2012/0144078 ist ein Verfahren zum unidirektionalen Übertragen von Takt und Daten von einem Slave zu einem Master bekannt. Der Takt wird dabei mit einer ersten Flanke des kombinierten Takt-/ Datenstroms vom Master zum Slave übertragen, während die Daten vom Slave zum Master mit einer zweiten Flanke des kombinierten Takt-/ Datenstroms übertragen werden. Das Verfahren ist nicht bidirektional.

US-A-2009/0021955 offenbart die Steuerung einer LED-Innenbeleuchtung über einen hierarchischen Zweidrahtdatenbus, der als Serienanordnung ausgeführt sein kann (Abschnitt [0033] der US-A-2009/0021955). Die technische Lehre der US-A-2009/0021955 betrifft aber auch sternförmige Topologien. Der Busmaster und die Slaves wechseln sich im Zeitschlitzverfahren ab. Die Übertragung des Systemtakts und der Daten sowie die Steuerung der Busknoten und die Adressvergabe werden nicht erläutert. Insbesondere ist der Bus-Master nicht in der Lage, die in dem jeweiligen Bus-Slave verbauten Testresourcen gezielt auf physikalischer Ebene anzusprechen.

Aus DE-U-20 2013 103 146 ist ein Busknoten in einem differentiellen Zweidrahtdatenbussystem zur Steuerung mindestens einer Ansteuerungsvorrichtung mindestens eines Leuchtmittels einer Leuchtkette durch einen Busknoten bekannt.

US-A-2013/0009715 beschreibt einen Busknoten, der mit einer JTAG-Schnittstelle ausgerüstet ist.

Aus EP-A-2 571 200 ist ein Verfahren zur Initialisierung eines Datenbusses zwischen einer ersten Teilvorrichtung, dem Bus-Master, und mindestens zwei weiteren Teilvorrichtungen, den Busknoten bekannt.

Aus US-A-2014/101351 ist ein Zweidrahtdatenbussystem mit einem differenziellen Zweidrahtdatenbus zur Übertragung von Daten zwischen einem Bus-Master und zwischen mindestens zwei Busknoten bekannt.

Aus US-A-2012/188738 ist eine Vorrichtung mit einem Gehäuse und einem Leuchtmittel bekannt, das in einer Aussparung des Gehäuses angeordnet ist. Das Gehäuse weist mehrere Reihen von Anschlüssen auf.

Aus EP-A-2 400 608 ist eine Vorrichtung zum Anschließen als Busknoten an einen differenziellen Zweidrahtdatenbus eines Datenbussystems zur Übertragung von Beleuchtungsdaten für Leuchtmittel bekannt.

### Aufgabe der Erfindung

Es ist die Aufgabe der Erfindung, eine bidirektionale, frei konfigurierbare Übertragung von Beleuchtungsdaten mit zwei Datenleitungen für mehr als einen Busknoten (BS1, BS2, BS3) als Slave eines Bus-Masters (BM) zu ermöglichen.

Diese Aufgabe wird durch den Gegenstand des Anspruchs 1 gelöst, wobei einzelne Ausgestaltungen der Erfindung Gegenstand der abhängigen Patentansprüche sind.

Die Erfindung umfasst eine Vorrichtung zum Anschließen als Busknoten an einen differenziellen Zweidrahtdatenbus (b1b2b3) eines Datenbussystems zur Übertragung von Beleuchtungsdaten für Leuchtmittel (LED1, LED2, LED3, LED4), wobei der Zweidrahtdatenbus (b1b2b3) mehrere durch Busknoten unterteilte Zweidrahtdatenbusabschnitte (b1, b2, b3) aufweist und wobei die Vorrichtung versehen ist mit
- einem Gehäuse (GH),
- wobei das Gehäuse (GH) mindestens drei Reihen von Anschlüssen, nämlich eine erste Anschlussreihe (V_{bat}, b1a, b1b), eine zweite Anschlussreihe (GND, b2a, b2b) und eine dritte Anschlussreihe (V_{bat}, b3a, b3b) und gegebenenfalls eine vierte Anschlussreihe (GND, b4a, 4b4) aufweist,
- wobei an dem Gehäuse (GH) jede der drei bzw. vier Anschlussreihen mindestens eine benachbarte Anschlussreihe aufweist, die in einem Winkel, insbesondere in einem spitzen Winkel oder in einem stumpfen Winkel oder in einem Winkel von 90° zur besagten Anschlussreihe angeordnet ist,
- wobei jede Anschlussreihe einen Anschluss für entweder ein erstes, insbesondere negatives Versorgungspotential (GND) oder ein zweites, insbesondere positives Versorgungspotential (V_{bat}) aufweist,
- wobei von zwei benachbarten Anschlussreihen des Gehäuses (GH) die eine Anschlussreihe einen Anschluss für das erste Versorgungspotential (GND) und die andere Anschlussreihe einen Anschluss für das zweite Versorgungspotential (V_{bat}) aufweist,
- wobei der jeweilige Versorgungspotentialanschluss sämtlicher Anschlussreihen des Gehäuses (GH) bezogen auf eine Zählrichtung im Uhrzeigersinn oder gegen den Uhrzeigersinn jeweils der erste Anschluss der Anschlussreihe ist,
- wobei jede Anschlussreihe zwei Busanschlüsse (bla, b1b, b2a, b2b, b3a, b3b, b4a, b4b) für jeweils einen Zweidrahtdatenbusabschnitt (b1, b2, b3) umfasst,
- wobei die beiden Busanschlüsse (bla, b1b, b2a, b2b, b3a, b3b, b4a, b4b) für einen Zweidrahtdatenbusabschnitt (b1, b2, b3) benachbart zu dem Versorgungspotentialanschluss der betreffenden Anschlussreihe liegen und
- mindestens einem Leuchtmittel (LED1, LED2, LED3),
- wobei das mindestens eine Leuchtmittel (LED1, LED2, LED3) in einer Aussparung (ASP) des Gehäuses (GH) oder auf dem Gehäuse (GH) angeordnet ist.

Bei einer derartigen Vorrichtung kann ein elektrisch leitendes Montageelement (Lead-Frame) zum Herausführen von Kontaktfeldern eines in dem Gehäuse (GH) eingebetteten, eine IC-Schaltung aufweisenden Die aus dem Gehäuse (GH) heraus vorgesehen sein, wobei das Gehäuse (GH) zwei gegenüberliegende Anschlussreihen aufweist, von denen jede einen Versorgungspotentialanschluss für entweder das erste Versorgungspotential (GND) oder das zweite Versorgungspotential (V_{bat}) aufweist, und wobei die Versorgungspotentialanschlüsse dieser beiden Anschlussreihen durch das Montageelement (Lead-Frame) elektrisch leitend miteinander verbunden sind.

Ferner ist es möglich, dass das Montageelement (Lead-Frame) ein das Die tragendes Stützteil (Die-Paddle) aufweist und dass das Stützteil die beiden Versorgungspotentialanschlüsse für entweder das erste Versorgungspotential (GND) oder das zweite Versorgungspotential (V_{bat}) der beiden besagten gegenüberliegenden Anschlussreihen elektrisch leitend miteinander verbindet.

Bei dieser Weiterbildung der Erfindung ist vorgesehen, dass entweder die V_{bat}-Anschlüsse jedes Gehäuses oder die GND-Anschlüsse jedes Gehäuses über das Die-Paddle des Lead-Frame miteinander verbunden sind. Die jeweils anderen Versorgungspotentialanschlüsse (GND bzw. V_{bat}) werden über eine im Die ausgebildete Leiterbahn oder aber durch eine auf einem PCB, auf dem sich das Die befindet, ausgebildeten Leiterbahn verbunden.

Hierbei können mindestens drei Gruppen von Leuchtmitteln (LED1, LED2, LED3) mit jeweils mindestens einem Leuchtmittel (LED1, LED2, LED3) vorgesehen sein, die entweder außerhalb des Gehäuses (GH) angeordnet sind oder in der Aussparung (ASP) des Gehäuses (GH) und/oder auf dem Gehäuse (GH) angeordnet sind, wobei das mindestens eine Leuchtmittel (LED1, LED2, LED3) jeder Gruppe von Leuchtmitteln (LED1, LED2, LED3) eine gegenüber dem jeweils mindestens einen Leuchtmittel (LED1, LED2, LED3) jeder anderen Gruppe von Leuchtmitteln (LED1, LED2, LED3) eine unterschiedliche Leuchtfarbe aufweist.

Ferner können mindestens zwei Gruppen von Leuchtmitteln (LED1, LED2, LED3, LED4) mit jeweils einem Leuchtmittel (LED1, LED2, LED3, LED4) oder mindestens drei Gruppen von Leuchtmitteln (LED1, LED2, LED3, LED4) mit jeweils einem Leuchtmittel (LED1, LED2, LED3, LED4) vorgesehen sein, wobei die Helligkeit des mindestens einen Leuchtmittels (LED1, LED2, LED3, LED4) je einer Gruppe von Leuchtmitteln (LED1, LED2, LED3, LED4) in Abhängigkeit von dem Dateninhalt eines Beleuchtungsregisters (ILR) durch Einstellung der Leuchtstärke gegenüber dem mindestens einen Leuchtmittel (LED1, LED2, LED3, LED4) jeder anderen Gruppe von Leuchtmitteln (LED1, LED2, LED3, LED4) unterschiedlich einstellbar ist.

### Beschreibung der Erfindung

Erfindungsgemäß wurde erkannt, dass sich ein Zweidrahtdatenbus bestehend aus zwei Eindraht-Test-Bussen, wie sie einschließlich des zugehörigen Betriebsverfahrens beispielsweise in den Schriften DE-B-10 2015 004 433, DE-B-10 2015 004 434, DE-B-10 2015 004 435 und DE-B-10 2015 004 436 beschrieben ist, deren Inhalte hiermit durch Bezugnahme zum Gegenstand der vorliegenden Anmeldung gehören, ganz besonders für die Übertragung solcher Daten, insbesondere für die Steuerung der Leuchtmittel von Leuchtbändern, eignet, wenn jeder Busknoten eine geeignete Teilvorrichtung zur bidirektionalen Weiterschaltung aufweist. Die Nutzung eines differentiellen Mehr-Pegel-JTAG-Busses für die Steuerung der Energieversorgung wird bereits in den Schriften DE-B-10 2016 100 837, DE-B-10 2016 100 838, DE-B-10 2016 100 839, DE-B-10 2016 100 840, DE-B-10 2016 100 841, DE-B-10 2016 100 842, DE-B-10 2016 100 843, DE-B-10 2016 100 845, DE-B-10 2016 100 847 und DE-B-10 2016 101 181 aufgegriffen, deren Inhalte hiermit durch Bezugnahme zum Gegenstand der vorliegenden Patentanmeldung gehören.

Im Gegensatz zum Gegenstand der DE-B-10 2015 004 433, DE-B-10 2015 004 434, DE-B-10 2015 004 435 und DE-B-10 2015 004 436 werden nun jedoch keine Testdaten, sondern Nutzdaten, insbesondere zur Beleuchtungssteuerung, differentiell übertragen. Letzteres erlaubt eine wesentlich höhere Datenübertragungsrate bei geringerer EMV-Abstrahlung. Im Gegensatz zum bekannten CAN-Protokoll wird der Datentakt mit übertragen, was eine aufwendige Rekonstruktion des Datentakts in den Busknoten überflüssig macht und so die Kosten für die Transceiver in den Busknoten (BS₁ bis BSₙ) merklich senkt. Des Weiteren ist auch der in DE-B-10 2015 004 433, DE-B-10 2015 004 434, DE-B-10 2015 004 435 und DE-B-10 2015 004 436 offenbarte Test-Bus nur für eine Punkt-zu-Punkt-Verbindung ausgelegt. Es ist also einerseits notwendig, diesen Test-Bus so zu modifizieren, dass mehrere Bus-Slaves als Busknoten angesteuert und betrieben werden können und andererseits den Test-Bus so zu modifizieren, dass er mit einer erhöhten Datenrate betrieben werden kann. Letzteres wird durch die Verwendung eines Zweidrahtdatenbusses aus zwei Eindrahtdatenbussen erreicht. Die Steuerdaten werden dabei in ein spezielles Datenregister (DR) einer JTAG-Schnittstelle über den Zweidrahtdatenbus geschrieben bzw. von einem solchen gelesen.

Die Erfindung umfasst also ein passendes Gehäuse (GH) für einen Busknoten (BSn), der für den Einsatz in einem Datenbussystem zur Übertragung von Beleuchtungsdaten für Leuchtmittel (LM1, LM2, LM3) mittels eines differentiellen Zweidrahtdatenbusses (b1b2b3) vorgesehen. Der Zweidrahtdatenbus (b1b2b3) dient dabei zur Übertragung von Daten zwischen dem Bus-Master (BM) und zwischen mindestens zwei Busknoten (BS1, BS2, BS3), insbesondere Leuchtmittel-Busknoten. Der Zweidrahtdatenbus (b1b2b3) wird wieder durch die Busknoten (BS1, BS2, BS3) in mindestens zwei Zweidrahtdatenbusabschnitte (b1, b2, b3) unterteilt. Der Zweidrahtdatenbus (b1b2b3) wird durch einen Busknoten, den abschließenden Busknoten (BS3) abgeschlossen. Vorzugsweise ist, bis auf einen ersten Busknoten (BS1) jeder der Busknoten (BS2, BS3) durch einen vorausgehenden Zweidrahtdatenbusabschnitt (b2, b3) der Zweidrahtdatenbusabschnitte (b1, b2, b3) mit einem vorausgehenden Busknoten (BS1, BS2) der Busknoten (BS1, BS2, BS3) verbunden. Der erste Busknoten (BS1) ist durch einen ersten Zweidrahtdatenbusabschnitt (b1) der Zweidrahtdatenbusabschnitte (b1, b2, b3) mit dem Bus-Master (BM) verbunden. Vorzugsweise ist, bis auf einen abschließenden Busknoten (BS3) jeder Busknoten (BS1, BS2, BS3) durch einen nachfolgenden Zweidrahtdatenbusabschnitt (b2, b3) der Zweidrahtdatenbusabschnitte (b1, b2, b3) mit einem nachfolgenden Busknoten (BS2, BS3) der Busknoten (BS1, BS2, BS3) verbunden. Das Gehäuse (GH) des Busknotens (BSn), der für den Einsatz in einem solchen Datenbussystem vorgesehen ist, weist vorzugsweise mindestens zwei Reihen von Anschlüssen auf, nämlich eine erste Anschlussreihe (LED1, LED2, GND, b1a, b1b, V_{bat}) und eine zweite Anschlussreihe (LED3, LED4, GND, b2a, b2b, V_{bat}) auf. Diese mindestens zwei Anschlussreihen sind am Gehäuse (GH) gegenüberliegend angeordnet. Vorzugsweise jede der Anschlussreihen umfasst einen Anschluss für die negative Versorgungsspannung, das zweite Bezugspotenzial (GND), und jeweils einen Anschluss für die positive Versorgungsspannung (V_{bat}). Die Anschlüsse für die negative Versorgungsspannung und die positive Versorgungsspannung sind dabei so in jeder Anschlussreihe angeordnet, dass sie kreuzungsfrei verbunden werden können, wenn der Anschluss (GND) für die negative Versorgungsspannung und derjenige für das zweite Bezugspotenzial (GND) der ersten Anschlussreihe mit dem Anschluss (GND) für die negative Versorgungsspannung bzw. demjenigen für das zweite Bezugspotenzial (GND), der zweiten Anschlussreihe verbunden wird und wenn der Anschluss für die positive Versorgungsspannung (V_{bat}) der ersten Anschlussreihe mit dem Anschluss für die positive Versorgungsspannung (V_{bat}) der zweiten Anschlussreihe verbunden wird. Dies hat den Vorteil, dass bei einer Leuchtmittelkette die Gehäuse (GH) hintereinander angeordnet werden können, ohne Durchkontaktierungen zu erfordern.

Die zwei Anschlüsse (bla, b1b) für einen vorausgehenden Zweidrahtdatenbusabschnitt (bn) des betrachteten Busknotens (BSn) in der ersten Anschlussreihe sind zwischen dem Anschluss (GND) für die negative Versorgungsspannung und dem Anschluss für das zweite Bezugspotenzial (GND) der ersten Anschlussreihe und dem Anschluss für die positive Versorgungsspannung (V_{bat}) der ersten Anschlussreihe angeordnet. Hierdurch wird elektromagnetische Abstrahlung des Zweidrahtdatenbusses (b1b2b3) minimiert. Die zwei Anschlüsse (b2a, b2b) für einen nachfolgenden Zweidrahtdatenbusabschnitt (b2) des Busknotens in der zweiten Anschlussreihe sind zwischen dem Anschluss (GND) für die negative Versorgungsspannung und dem Anschluss für das zweite Bezugspotenzial (GND) der zweiten Anschlussreihe und dem Anschluss für die positive Versorgungsspannung (V_{bat}) der zweiten Anschlussreihe angeordnet. Auch hierdurch wird die Abstrahlung des Zweidrahtdatenbusses (b1b2b3) minimiert.

Die Anschlüsse für die Versorgung und/oder für die Ansteuerung von Leuchtmitteln (LED1, LED2, LED3, LED4) in ihrer jeweiligen Anschlussreihe sind so angeordnet, dass in der jeweiligen Anschlussreihe der Anschluss für diejenige Versorgungsspannung, über die der elektrische Strom, der aus diesen Anschlüssen für die Versorgung und/oder die Ansteuerung der Leuchtmittel (LED1, LED2, LED3, LED4) durch die Leuchtmittel (LED1, LED2, LED3, LED4) fließt, wieder abgeführt wird, in der jeweiligen Anschlussreihe zwischen den beiden Anschlüssen (bla, b1b bzw. b2a, b2b) für den zugehörigen Zweidrahtdatenbusabschnitt (b1 bzw. b2) und den Anschlüssen für die Versorgung und/ oder die Ansteuerung der Leuchtmittel (LED1, LED2, LED3, LED4) platziert sind. Dies hat den Vorteil, dass die Leuchtmittel (hier Leuchtdioden LED1, LED2, LED3, LED4) kreuzungsfrei mit dem Busknoten verbunden werden können.

Das derart ausgestaltete Gehäuse ist daher geeignet, im Zusammenwirken mit dem hier beschriebenen Bussystem parasitäre elektromagnetische Abstrahlungen zu minimieren.

Die vorgeschlagene Vorrichtung umfasst auch ein Lichtmodul mit einem Gehäuse (GH) für einen Busknoten (BSn). Dieser Busknoten (BSn) stellt einen der oben beschriebenen Busknoten dar und wird vorzugsweise in Form einer integrierten Schaltung ausgeführt. Das Lichtmodul ist dazu vorgesehen in einem Datenbussystem zur Übertragung von Beleuchtungsdaten für Leuchtmittel (LED1, LED2, LED3) mittels eines differentiellen Zweidrahtdatenbusses (b1b2b3) eingesetzt zu werden. Vorzugsweise ist der Datenbus differentiell ausgeführt. Der Zweidrahtdatenbus (b1b2b3) dient dabei zur Übertragung von Daten zwischen einem Bus-Master (BM) und mindestens zwei Busknoten (BS1, BS2, BS3), hier Leuchtmittel-Busknoten. Der Zweidrahtdatenbus (b1b2b3) wird durch die Busknoten (BS1, BS2, BS3) in mindestens zwei Zweidrahtdatenbusabschnitte (b1, b2, b3) unterteilt.

Dies ermöglicht es, eine Autoadressierung der Lichtmodule vorzunehmen. Aus dem Stand der Technik sind verschiedene Autoadressierungsmethoden für die Teilnehmer von seriellen Bussystemen bekannt. Als Beispiele für Autoadressierungsmethoden aus dem Stand der Technik können hier die Schriften DE-B-10 256 631, DE-A-10 2014 003 066, EP-B-1 364 288, und EP-B-1 490 772 genannt werden.

Eine Stern-Struktur ist für eine Autoadressierung nicht geeignet. Durch das zuvor beschriebene Transfer-Gate in Kombination mit einer eigenen Busmasterschnittstelle in den Busknoten kann zwischen einer linearen Struktur zur Durchführung der Autoadressierung und einer Stern-Struktur im Betrieb gewechselt werden. Hierdurch können im Betrieb bei Bedarf auch sehr viele Busknoten durch einen Datenbefehl gleichzeitig angesprochen werden, ohne den Vorteil der Autoadressierung zu verlieren.

Typischerweise ist bis auf einen ersten Busknoten (BS1) jeder der Busknoten (BS2, BS3) dazu vorgesehen, durch einen vorausgehenden Zweidrahtdatenbusabschnitt (b2, b3) der Zweidrahtdatenbusabschnitte (b1, b2, b3) mit einem vorausgehenden Busknoten (BS1, BS2) der Busknoten (BS1, BS2, BS3) oder dem Busmaster (BM) verbunden zu werden.

Das Gehäuse (GH) des Busknotens (BSn) weist mindestens zwei Reihen von Anschlüssen auf, nämliche eine erste Anschlussreihe (GND, b1a, b1b, V_{bat}) und eine zweite Anschlussreihe (GND, b2a, b2b, V_{bat}) auf.

Zumindest diese mindestens zwei Anschlussreihen sind am Gehäuse (GH) gegenüberliegend angeordnet.

Jede der Anschlussreihen umfasst jeweils einen Anschluss (GND) für die negative Versorgungsspannung, das zweite Bezugspotenzial (GND), und für die positive Versorgungsspannung (V_{bat}). Die Anschlüsse für die negative Versorgungsspannung und die positive Versorgungsspannung sind so in jeder Anschlussreihe angeordnet, dass sie kreuzungsfrei verbunden werden können, wenn der Anschluss (GND) für die negative Versorgungsspannung und derjenige für das zweite Bezugspotenzial (GND) der ersten Anschlussreihe mit dem Anschluss (GND) für die negative Versorgungsspannung bzw. mit demjenigen für das zweite Bezugspotenzial (GND) der zweiten Anschlussreihe verbunden wird und wenn der Anschluss für die positive Versorgungsspannung (V_{bat}) der ersten Anschlussreihe mit dem Anschluss für die positive Versorgungsspannung (V_{bat}) der zweiten Anschlussreihe verbunden wird. Die zwei Anschlüsse (bla, b1b) für einen vorausgehenden Zweidrahtdatenbusabschnitt (b1) des Busknotens sind in der ersten Anschlussreihe zwischen dem Anschluss (GND) für die negative Versorgungsspannung und demjenigen für das zweite Bezugspotenzial (GND) der ersten Anschlussreihe und dem Anschluss für die positive Versorgungsspannung (V_{bat}) der ersten Anschlussreihe angeordnet. Die zwei Anschlüsse (b2a, b2b) für einen nachfolgenden Zweidrahtdatenbusabschnitt (b2) des Busknotens sind in der zweiten Anschlussreihe zwischen dem Anschluss (GND) für die negative Versorgungsspannung und demjenigen für das zweite Bezugspotenzial (GND) der zweiten Anschlussreihe und dem Anschluss für die positive Versorgungsspannung (V_{bat}) der zweiten Anschlussreihe angeordnet.

Mindestens ein Leuchtmittel (LED1, LED2, LED3) ist in einer Aussparung (ASP) des Gehäuses angeordnet. Ein solches Gehäuse bietet den Vorteil, dass große Datenmengen bei geringer parasitärer Abstrahlung an das Leuchtmittel übertragen werden können. Solche Gehäuse eignen sich daher besonders für die Verwendung in bildgebenden Leuchtmodulgruppen. Hierbei werden die Leuchtmodule seriell hintereinander angeordnet.

In einer weitergehenden Ausprägung des Gehäuses sind mindestens drei Leuchtmittel (LED1, LED2, LED3) in einer Aussparung (ASP) des Gehäuses angeordnet. Diese mindestens drei Leuchtmittel (LED1, LED2, LED3) weisen bevorzugt für die menschliche Wahrnehmung jeweils eine unterschiedliche Leuchtfarbe auf, so dass über die Einstellung unterschiedlicher Leuchtstärken für die unterschiedlichen Leuchtmittel ein Farbeindruck hervorgerufen werden kann.

Die Anwendung der oben beschriebenen Vorrichtung ermöglicht nun ein Lichtmodul, das ein Gehäuse (GH) für eine integrierte Schaltung als Busknoten (BSn) umfasst. Das Leuchtmodul soll in einem mehrdimensionalen Datenbussystem zur Übertragung von Beleuchtungsdaten für Leuchtmittel (LED1, LED2, LED3) mittels eines differentiellen Zweidrahtdatenbusses (b1b2b3) eingesetzt werden. Die oben vorgeschlagene Buskonstruktion erlaubt es, auch bei einer Array-Anordnung von Leuchtmitteln eine Autoadressierung durchzuführen und Broadcast-Botschaften nach der Initialisierung an alle Leuchtmodule abzusetzen. Der Zweidrahtdatenbus (b1b2b3) ist wieder zur Übertragung von Daten zwischen einen Bus-Master (BM) und zwischen mindestens zwei Busknoten (BS1, BS2, BS3), insbesondere Leuchtmittel-Busknoten, vorgesehen. Der Zweidrahtdatenbus (b1b2b3) wird durch die Busknoten (BS1, BS2, BS3) in mindestens zwei Zweidrahtdatenbusabschnitte (b1, b2, b3) unterteilt. Diese müssen nun aber nicht mehr linear hintereinander liegen, sondern können schachbrettartig angeordnet werden. Lediglich zu Beginn ist eine Initialisierung notwendig. Bis auf einen ersten Busknoten (BS1) ist nun jeder der Busknoten (BS2, BS3) dazu vorgesehen, durch einen vorausgehenden Zweidrahtdatenbusabschnitt (b2, b3) der Zweidrahtdatenbusabschnitte (b1, b2, b3) mit einem vorausgehenden Busknoten (BS1, BS2) der Busknoten (BS1, BS2, BS3) oder dem Busmaster (BM) verbunden zu werden. Mindestens ein Busknoten (BSn) kann mit mindestens drei Zweidrahtdatenbusabschnitten (b1, b2, b3) verbunden werden. Hierdurch wird eine Verzweigung des Datenbusses möglich. Hierfür muss der betreffende Busknoten (BSn) zwei separate Master-Zweidrahtdatenbusschnittstellen (OWMa, OWMb) und/oder zwei Transfer-Gates (TGa, TGb) aufweisen, um die nunmehr zwei nachfolgenden Zweidrahtdatenbusabschnitte ansteuern zu können. Eine weitere Variante ist eine Konfiguration mit drei separaten Master-Zweidrahtdatenbusschnittstellen (OWMa, OWMb, OWMc) und/oder drei Transfer-Gates (TGa, TGb, TGc), um drei nachfolgende Zweidrahtdatenbusabschnitte ansteuern zu können. Dies ist jedoch nicht unbedingt nötig. Grundsätzlich reicht die Konfiguration mit zwei separaten Master-Zweidrahtdatenbusschnittstellen (OWMa, OWMb, OWMc) und/oder zwei Transfer-Gates (TGa, TGb, TGc) vollkommen aus, um eine zweidimensionale Fläche mit Leuchtmodulen füllen zu können. Daher sollte das Gehäuse (GH) des Busknotens (BSn) mindestens drei Reihen von Anschlüssen aufweisen, nämlich eine erste Anschlussreihe (V_{bat}, b1a, b1b), eine zweite Anschlussreihe (GND, b2a, b2b) sowie eine dritte Anschlussreihe (V_{bat}, b3a, b3b) und gegebenenfalls eine vierte Anschlussreihe (GND, b4a, b4b). Zumindest diese mindestens drei bzw. vier Anschlussreihen am Gehäuse (GH) sind zueinander im Winkel von 90° angeordnet. Dabei liegen zwei Anschlussreihen einander direkt gegenüber. Jede der drei bzw. vier Anschlussreihen hat dabei mindestens eine benachbarte Anschlussreihe, die im Winkel von 90° zu ihr angeordnet ist. Jede der Anschlussreihen umfasst genau einen Anschluss für eine Versorgungsspannung (GND, V_{bat}). Jede der Anschlussreihen, die einer anderen Anschlussreihe benachbart ist, weist einen Anschluss für eine andere Versorgungsspannung auf, als die Versorgungsspannung, deren Anschluss von der benachbarten Anschlussreihe umfasst ist. Dieser Anschluss der Versorgungsspannung ist bei allen Anschlussreihen jeweils der erste Anschluss in der Anschlussreihe bei gleicher Zählrichtung im Uhrzeigersinn oder gegen den Uhrzeigersinn. Jede Anschlussreihe umfasst die beiden Anschlüsse eines Zweidrahtdatenbusabschnitts. Diese beiden Anschlüsse dieses einen Zweidrahtdatenbusabschnitts liegen jeweils dem Anschluss für die Versorgungsspannung in der betreffenden Anschlussreihe benachbart. Mindestens ein Leuchtmittel (LED1, LED2, LED3) ist in einer Aussparung (ASP) des Gehäuses (GH) oder auf dem Gehäuse (GH) angeordnet.

In einer besonderen Ausführung dieses Leuchtmoduls liegt ein erster Anschluss einer ersten Versorgungsspannung in einer ersten Anschlussreihe, während ein zweiter Anschluss dieser ersten Versorgungsspannung liegt in einer zweiten Anschlussreihe. Die erste Anschlussreihe ist der zweiten Anschlussreihe gegenüber angeordnet. Der erste Anschluss ist durch einen Montageträger (englisch Lead-Frame) elektrisch leitend mit dem gegenüber liegenden zweiten Anschluss verbunden. Hierdurch können die Versorgungsleitungen kreuzungsfrei verlegt werden.

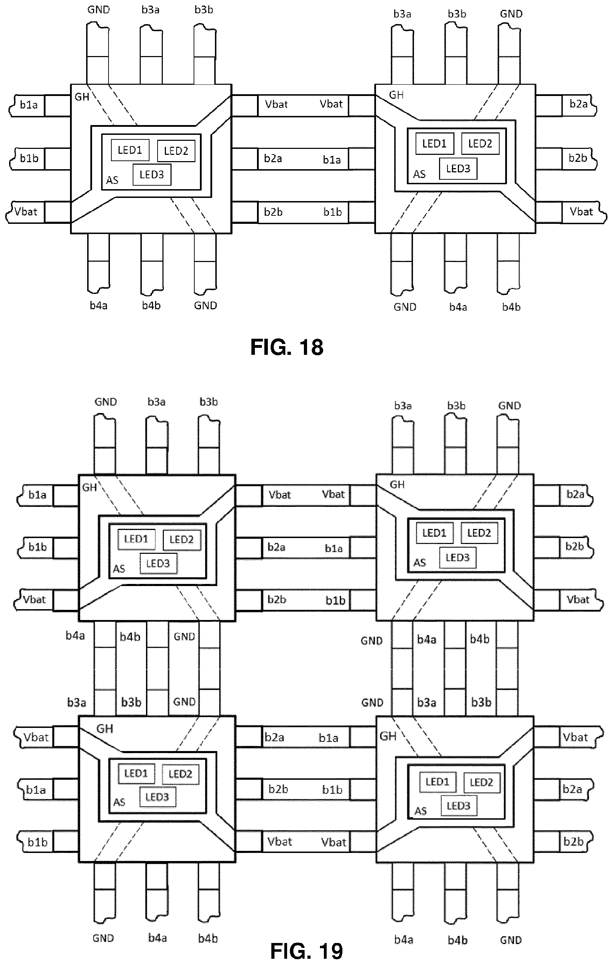

Besonders vorteilhaft ist es, wenn das Lichtmodul dazu vorgesehen ist, mit einem Lichtmodul mit einer horizontal und vertikal gespiegelten Lage der Versorgungsspannungsanschlüsse (GND, V_{bat}) zu einem Lichtmodulsystem verbaut zu werden. (siehe Fig. 18)

### Beschreibung der Figuren

Nachfolgend werden die Zeichnungen näher erläutert.
- Fig. 1: zeigt das Zustandsdiagramm eines Test-Controllers gemäß dem IEEE 1149 Standard. Die Fig. 1 wurde in der Einleitung erläutert.
- Fig. 2: zeigt die grundlegenden Signalformen eines JTAG-Datenprotokolls aus dem Stand der Technik.
- Fig. 3: zeigt die grundlegenden Signalformen des vorgeschlagenen Datenprotokolls auf dem Zweidrahtdatenbus (b1b2b3) oder einem angeschlossenen Zweidrahtdatenbusabschnitt (b1, b2, b3) des Zweidrahtdatenbusses (b1b2b3).
- Fig. 4: zeigt beispielhafte Pegelfolgen für jeweils ein Zeitschlitzpaket der Dauer T aus drei aufeinanderfolgenden Zeitschlitzen.
- Fig. 5: zeigt beispielhaft die Extraktion der Daten im betreffenden Busknoten (BSn) für drei aufeinander folgende Zeitschlitze.
- Fig. 6: zeigt schematisch ein beispielhaftes Zweidrahtdatenbussystem.
- Fig. 7: zeigt ein Detail aus dem beispielhaften Zweidrahtdatenbussystem: Die Verbindung zweier aufeinanderfolgender Busknoten.
- Fig. 8: zeigt schematisch vereinfacht eine beispielhafte Implementierung einer Bus-Master-Zweidrahtdatenbusschnittstelle.
- Fig. 9: zeigt schematisch vereinfacht eine beispielhafte Implementierung einer Busknoten-Zweidrahtdatenbusschnittstelle.
- Fig. 10: zeigt vereinfacht eine JTAG-Schnittstelle mit Beleuchtungsregister (ILR).
- Fig. 11: zeigt vereinfacht eine JTAG-Schnittstelle mit Beleuchtungsregister (ILR) und separatem zuschaltbaren seriellen Dateneingang für das Beleuchtungsregister.
- Fig. 12: zeigt schematisch ein beispielhaftes Zweidrahtdatenbussystem mit separatem seriellem Datenbus für Beleuchtungsdaten.
- Fig. 13: zeigt vereinfacht eine JTAG-Schnittstelle mit Beleuchtungsregister (ILR) und Transfer-Gate-Control-Register (TGCR).
- Fig. 14: zeigt schematisch ein beispielhaftes Zweidrahtdatenbussystem, wobei jeder Busknoten über eine Bus-Masterschnittstelle zur Ansteuerung eines nachfolgenden Busknotens verfügt.
- Fig. 15: zeigt vereinfacht eine JTAG-Schnittstelle mit Beleuchtungsregister (ILR) und Bus-Master-Control-Register (OWMCR).
- Fig. 16: zeigt eine besonders günstige Anordnung der Anschlüsse für eine erfindungsgemäße Vorrichtung.
- Fig. 17: zeigt ein besonders geeignetes Gehäuse (GH) für die Verwendung mit dem hier beschriebenen Datenbussystem.
- Fig. 18: zeigt zwei Lichtmodule für den flächenhaften Verbau als Flächenleuchte.
- Fig. 19: zeigt mehrere Lichtmodule gemäß Fig. 18, verbaut für eine Flächenleuchte,
- Fig. 20: zeigt eine flächenförmige Verkettung von sechs Lichtmodulen entsprechend Fig. 17 mit je zwei Zweidraht-Bus-Master-Schnittstellen (OWM1a bis OWM6a und OWM1b bis OWM6b) und einer Zweidrahtdatenbusschnittstelle (OWS1 bis OWS6).
- Fig. 21: zeigt vereinfacht eine JTAG-Schnittstelle mit Beleuchtungsregister (ILR), Busknotenadressregister (BKADR) und Senderegister (SR).

### Fig. 2

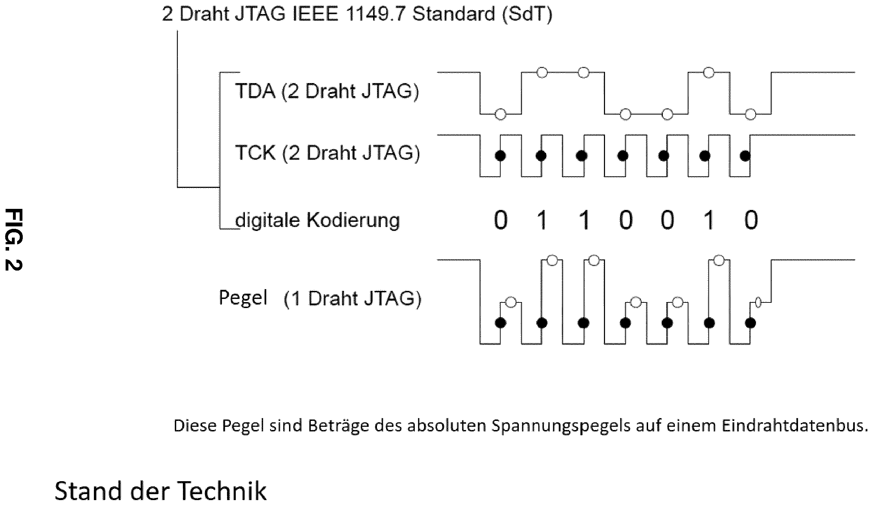

Fig. 2 zeigt die grundlegenden Signalformen des Datenprotokolls auf dem Zweidrahtdatenbus (b1b2b3) oder einem angeschlossenen Zweidrahtdatenbusabschnitt (b1, b2, b3) des Zweidrahtdatenbusses (b1b2b3). Im oberen Teil der Fig. 2 sind die Signalformen der differentiellen Pegel für einen Zweidraht-Test-Bus analog dem IEEE 1149 Standard schematisch skizziert. Das oberste Signal (TDA) zeigt das Datensignal. Das zweite Signal (TCK) zeigt den zugehörigen Systemtakt (TCK). Beide Signale sind, auch wenn sie hier einen differentiellen Pegel bezeichnen, als Stand der Technik markiert und gehören zum 2-Draht-JTAG-Standard. Darunter ist beispielhaft die digitale Kodierung vermerkt. Hierbei wird noch nicht dargestellt, ob der betreffende Busknoten (BSn) oder der Bus-Master (BM) sendet. Hier ist nur die Signalform skizziert.

### Fig. 3

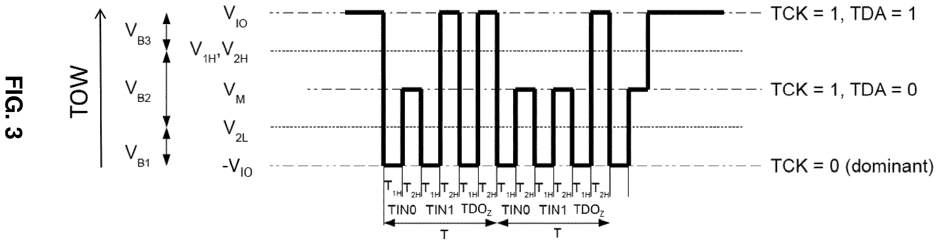

Fig. 3 zeigt eine vorgeschlagene Signalform in Form des differentiellen Signalpegels (TOW) auf dem Zweidrahtdatenbus (b1b2b3) oder einem angeschlossenen Zweidrahtdatenbusabschnitt (b1, b2, b3) des Zweidrahtdatenbusses (b1b2b3), die den Takt und die Daten kombiniert.

Es sind verschiedene differentielle Spannungspegel skizziert. Das differentielle Signal (TOW) weist beim Senden drei differentielle Spannungspegelbeträge auf:
1. einen dritten differentiellen Spannungsbetragspegel (V_{IO}),
2. einen mittleren zweiten differentiellen Spannungsbetragspegel (V_{M}) und
3. einen ersten differentiellen Spannungsbetragspegel (-V_{IO}).

Für die Extraktion des Systemtaktes ist ein zweiter Schwellwert (V_{2L}) in Form eines zweiten Schwellspannungsbetrages definiert, der zwischen dem ersten differentiellen Spannungsbetragspegel (-V_{IO}) und dem mittleren zweiten differentiellen Spannungsbetragspegel (V_{M}) liegt.

Für die Extraktion der Daten ist ein erster Schwellspannungsbetrag, der erste Schwellwert (V_{1H}), des Bus-Masters (BM) und ein dritter Schwellspannungsbetrag, der dritte Schwellwert (V_{2H}), der Busknoten (BS1, BS2, BS3) definiert, die zwischen dem dritten differentiellen Spannungsbetragspegel (V_{IO}) und dem mittleren zweiten differentiellen Spannungsbetragspegel (V_{M}) liegen und in etwa gleich sein sollten.

Durch den zweiten Schellwert (V_{2L}) in Form des zweiten Schwellspannungsbetrags der Busknoten (BS1, BS2, BS3) und den ersten differentiellen Spannungsbetragspegel (-V_{IO}) wird ein erster Spannungsbetragsbereich (V_{B1}) definiert und begrenzt.

Durch den dritten Schwellspannungsbetrag, den dritten Schwellwert (V_{2H}), der Busknoten (BS1, BS2, BS3) bzw. den ersten Schwellspannungsbetrag des ersten Schwellwerts (V_{1H}) des Bus-Masters (BM) einerseits und den zweiten Schwellspannungsbetrag des zweiten Schwellwerts (V_{2L}) der Busknoten (BS1, BS2, BS3) andererseits wird ein zweiter Spannungsbetragsbereich (V_{B2}) definiert und begrenzt.

Durch den dritten Schwellspannungsbetrag, den dritten Schwellwert (V_{2H}), der Busknoten (BS1, BS2, BS3) bzw. den ersten Schwellspannungsbetrag (V_{1H}) des Bus-Masters (BM) einerseits und den dritten differentiellen Spannungsbetragspegel (V_{IO}) andererseits wird ein dritter Spannungsbetragsbereich (V_{B3}) definiert und begrenzt.

Zeitlich gliedert sich das Signal auf dem Zweidrahtdatenbus (b1b2b3) oder einem angeschlossenen Zweidrahtdatenbusabschnitt (b1, b2, b3) des Zweidrahtdatenbusses (b1b2b3) in Zeitschlitzpakete mit mindestens drei Zeitschlitzen (TINO, TIN1, TDO_{z}). Die Zeitschlitzpakete folgen typischerweise aufeinander mit einer Systembasistaktperiode (T). Die Reihenfolge der Zeitschlitze innerhalb eines Zeitschlitzpaketes kann für ein System beliebig, aber vorzugsweise für alle Zeitschlitzpakete gleich gewählt werden. Jede Systembasistaktperiode (T) gliedert sich in mindestens drei Zeitschlitze mit typischerweise jeweils zwei Halbtaktperioden (T_{1H}, T_{2H}), deren Länge vorzugsweise aber nicht notwendigerweise gleich ist.

In einer Halbtaktperiode der mindestens zwei Halbtaktperioden (T_{1H}, T_{2H}) wird vorzugsweise jeweils der Systemtakt übertragen.

Hierbei befindet sich der Betrag des differentiellen Signalpegels (TOW) auf dem Zweidrahtdatenbus (b1b2b3) oder auf dem angeschlossenen Zweidrahtdatenbusabschnitt (b1, b2, b3) des Zweidrahtdatenbusses (b1b2b3) in einer Halbtaktperiode der mindestens zwei Halbtaktperioden (T_{1H}, T_{2H}) im ersten Spannungsbetragsbereich (V_{B1}). Hierdurch wird ein erster logischer Wert des Systemtaktes übertragen. In dem Beispiel reicht es aus, dass der Betrag des Signalpegels (TOW) auf dem Zweidrahtdatenbus (b1b2b3) oder dem angeschlossenen Zweidrahtdatenbusabschnitt (b1, b2, b3) des Zweidrahtdatenbusses (b1b2b3) sich unterhalb der zweiten Spannungsbetragsschwelle, dem zweiten Schwellwert (V_{2L}), befindet. Der erste Spannungsbetragsbereich (V_{B1}) kann in vielen Anwendungsfällen auch als nach unten offen angesehen werden.

In der anderen Halbtaktperiode der mindestens zwei Halbtaktperioden (T_{1H}, T_{2H}) befindet sich der differentielle Signalpegel (TOW) auf dem Zweidrahtdatenbus (b1b2b3) oder dem angeschlossenen Zweidrahtdatenbusabschnitt (b1, b2, b3) des Zweidrahtdatenbusses (b1b2b3) im zweiten Spannungsbetragsbereich (V_{B2}) oder dritten Spannungsbetragsbereich (V_{B3}). Hierdurch wird ein zweiter logischer Wert des Systemtaktes übertragen, der vom ersten logischen Wert des Systemtaktes verschieden ist. In dem Beispiel reicht es aus, dass der differentielle Signalpegel (TOW) auf dem Zweidrahtdatenbus (b1b2b3) oder dem angeschlossenen Zweidrahtdatenbusabschnitt (b1, b2, b3) des Zweidrahtdatenbusses (b1b2b3) sich oberhalb der zweiten Spannungsbetragsschwelle in Form des zweiten Schwellwerts (V_{2L}) befindet. Eine Begrenzung nach oben durch die Versorgungsspannung (V_{bat}) oder eine andere Obergrenze (V_{IO}) ist für die Entscheidung, ob der Signalpegel (TOW) auf dem Zweidrahtdatenbus (b1b2b3) oder dem angeschlossenen Zweidrahtdatenbusabschnitt (b1, b2, b3) des Zweidrahtdatenbusses (b1b2b3) sich im zweiten Spannungsbetragsbereich (V_{B2}) oder dritten Spannungsbetragsbereich (V_{B3}) befindet, nicht relevant und wird daher in der Praxis nicht verwendet. Daher kann der dritte Spannungsbetragsbereich (V_{B3}) in vielen Anwendungsfällen auch als nach oben offen angesehen werden.

Da es für die Extraktion des Systemtaktes innerhalb dieser anderen Halbtaktperiode der mindestens zwei Halbtaktperioden (T_{1H}, T_{2H}) nicht relevant ist, ob der Signalpegel (TOW) auf dem Zweidrahtdatenbus (b1b2b3) oder dem angeschlossenen Zweidrahtdatenbusabschnitt (b1, b2, b3) des Zweidrahtdatenbusses (b1b2b3) sich im dritten Spannungsbetragsbereich (V_{B3}) oder zweiten Spannungsbetragsbereich (V_{B2}) befindet, können nun durch eine Unterscheidung zwischen dem dritten Spannungsbetragsbereich (V_{B3}) und dem zweiten Spannungsbetragsbereich (V_{B2}) innerhalb dieser anderen Halbtaktperiode der mindestens zwei Halbtaktperioden (T_{1H}, T_{2H}) Daten übertragen werden.

In dieser anderen Halbtaktperiode der mindestens zwei Halbtaktperioden (T_{1H}, T_{2H}) befindet sich der differentielle Signalpegel (TOW) auf dem Zweidrahtdatenbus (b1b2b3) oder dem angeschlossenen Zweidrahtdatenbusabschnitt (b1, b2, b3) des Zweidrahtdatenbusses (b1b2b3) im zweiten Spannungsbetragsbereich (V_{B2}), wenn ein erster logischer Datenwert übertragen wird und im dritten Spannungsbetragsbereich (V_{B3}), wenn ein zweiter logischer Datenwert übertragen wird.

Rechts neben dem unteren Signal sind zur besseren Verdeutlichung beispielhafte logische Zustände für die drei differentiellen Pegel eingezeichnet.

Der obere differentielle Pegel entspricht in dem Beispiel einem beispielhaften logischen Wert des Systemtakts (TCK) von 1 und einem beispielhaften logischen Wert des Datensignals (TDA) von 1.

Der mittlere differentielle Pegel entspricht in dem Beispiel einem beispielhaften logischen Wert des Systemtakts (TCK) von 1 und einem beispielhaften logischen Wert des Datensignals (TDA) von 0.

Der untere differentielle Pegel entspricht in dem Beispiel einem beispielhaften logischen Wert des Systemtakts (TCK) von 0.

### Fig. 4

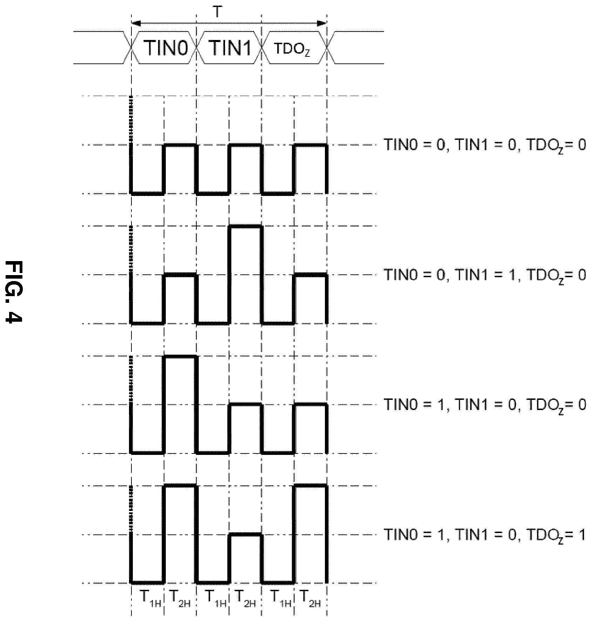

Fig. 4 zeigt eine beispielhafte Protokollsequenz von drei aufeinander folgenden Zeitschlitzen (TINO, TIN1, TDO_{z}). In anderen Implementierungen kann ein Zeitschlitzpaket auch mehr als drei Zeitschlitze (TINO, TIN1, TDO_{z}) umfassen. Im ersten Zeitschlitz (TIN0) werden typischerweise Kontrolldaten übertragen, die dem TMS-Signal des Standard-Boundary-Scan (IEEE1149) entsprechen. Dieses Signal steuert typischerweise den Zustand des endlichen Automaten gemäß Zustandsdiagram in Fig. 1. Im zweiten Zeitschlitz (TIN1) werden typischerweise die Daten übertragen, die dem TDI -Signal des Standard-Boundary-Scans (IEEE 1149) entsprechen. In diesen beiden Zeitschlitzen überträgt der Bus-Master (BM) Daten auf den Busknoten. Sollte parallel auch der Busknoten senden, so überschreibt der Busknoten den Bus-Master (BM), wenn dessen schaltbare Stromquelle (T1a, T1b) ausgeschaltet ist. Umgekehrt kann der Bus-Master (BM) den Busknoten überschreiben, wenn die schaltbare Stromquelle (T3a, T3b) des Busknotens ausgeschaltet ist. Ein Überschreiben des Bus-Masters (BM) durch den Busknoten kann der Bus-Master (BM) dadurch detektieren, dass die gesendeten Daten (TMS_TDI) im Hinblick auf ihren logischen Inhalt darauf hin durch eine Logik im Bus-Master (BM) überprüft werden, ob diese mit den empfangenen Daten (TDo) in der betreffenden Halbtaktperiode übereinstimmen, in der der Systemtakt (TCK) den dominierenden Schalter (T1a, T1b) nicht schließt. Im Falle einer solchen Asynchronizität kann der Bus-Master (BM) durch permanentes Halten des differentiellen Signalpegels (TOW) auf dem Zweidrahtdatenbus (b1b2b3) oder dem angeschlossenen ersten Zweidrahtdatenbusabschnitt (b1) des Zweidrahtdatenbusses (b1b2b3) im dritten Spannungsbetragsbereich (V_{B3}) bei geeigneter Auslegung der State-Machine der Test-Controller (TAPC) der Busknoten diese wieder re-synchronisieren. Hierzu muss die State-Machine der Test-Controllers (TAPC) der Busknoten so ausgelegt sein, dass ein permanentes Halten im dritten Spannungsbetragsbereich (V_{B3}) im Kontrollfeld, also hier beispielsweise im ersten Zeitschlitz (TIN0), zu einem Reset in Form der Einnahme eines sogenannten "Idle-States" (TLR) als einem abwartenden Zustand der Test-Controller (TAPC) führt. Dies ist bei einem Zustandsdiagramm eines JTAG-Controllers gemäß IEEE 1149 Standard der Fall. Dieses permanente Halten des differentiellen Signalpegels (TOW) auf dem Zweidrahtdatenbus (b1b2b3) oder dem angeschlossenen ersten Zweidrahtdatenbusabschnitt (b1) des Zweidrahtdatenbusses (b1b2b3) im dritten Spannungsbetragsbereich (V_{B3}) kann durch ein dauerhaftes Einschalten der schaltbaren Stromquelle (T2a, T2b) des Bus-Masters (BM) für die Dauer des Reset-Vorgangs erfolgen.

### Fig. 5

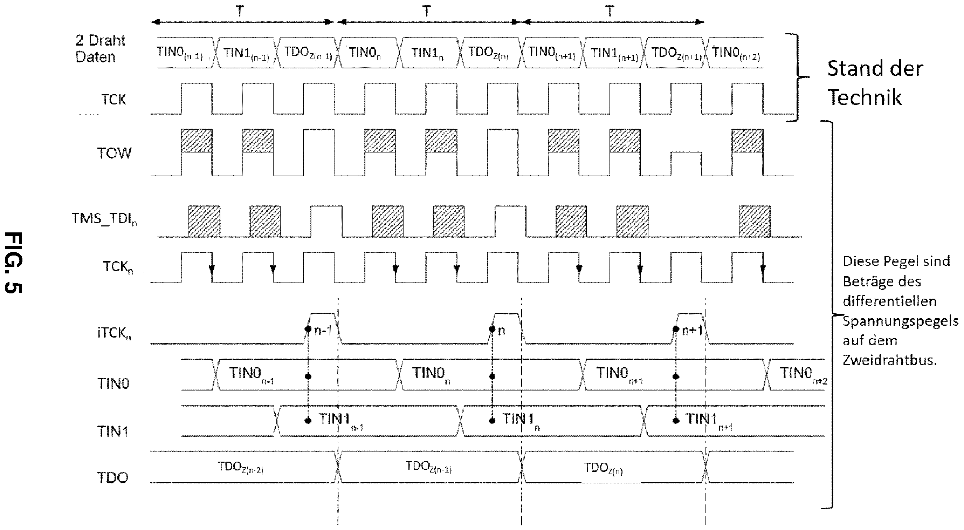

Fig. 5 zeigt eine beispielhafte Abfolge von differentiellen Signalen. Eingabe sind die mit "2 Draht Daten" bezeichneten Zweidraht basierenden Daten, die nicht differentiell sind. In dem Beispiel werden drei aufeinanderfolgende Zeitschlitzpakete (n-1, n, n+1) mit beispielhaft je drei Zeitschlitzen (TINO, TIN1, TDO_{z}) dargestellt. Die Verwendung von mehr als drei Zeitschlitzen je Zeitschlitzpakete ist natürlich denkbar. Die Bedeutung der jeweiligen Zeitschlitze innerhalb eines Zeitschlitzpakets hängt nur von der zeitlichen Position ab und ändert sich nicht. Wenn in dieser Beschreibung vom ersten Zeitschlitz (TIN0), zweiten Zeitschlitz (TIN1) und dritten Zeitschlitz (TDO_{z}) die Rede ist, so ist das eine reine Bezeichnung und bezieht sich nicht auf die Position innerhalb eines Zeitschlitzpaketes. Vorzugsweise ist die zeitliche Positionierung der einzelnen mindestens drei Zeitschlitze (TINO, TIN1, TDO_{z}) innerhalb der Zeitschlitzpakete immer gleich oder zumindest durch einen Algorithmus vorhersagbar. Auch zeigt die Figur den zugehörigen Systemtakt (nicht differentieller 2 Draht Takt). Im Zeitschlitzpaket n-1 liefert der betroffene Busknoten (BSn) im Zeitschlitz TDO_{z(n-1)} eine logische 1 und im Zeitschlitzpaket n im Zeitschlitz TDO_{z(n)} eine logische 1 und im Zeitschlitzpaket n+1 im Zeitschlitz TDO_{z(n+1)} eine logische 0. Die vom Bus-Master (BM) gesendeten Daten in den Zeitschlitzen TIN0ₙ₋₁, TIN1ₙ₋₁, TIN0ₙ, TIN1ₙ, TIN0ₙ₊₁, TIN1ₙ₊₁ sind in ihrem logischen Gehalt nicht beispielhaft festgelegt und darum schraffiert. Das mit "TOW" bezeichnete Signal soll den differentiellen Potenzialverlauf des differentiellen Signalpegels (TOW) auf dem Zweidrahtdatenbus (b1b2b3...bₙ..bₘ) oder einem angeschlossenen n-ten Zweidrahtdatenbusabschnitt (bₙ) des Zweidrahtdatenbusses (b1b2b3...bₙ..bₘ) schematisch veranschaulichen. Aus diesem Potenzialverlauf der Potentialdifferenz auf dem betroffenen Zweidrahtdatenbusabschnitt (bₙ) erzeugt beispielhaft der dritte Komparator (cmp3) des betroffenen Busknotens (BSn) die durch den betroffenen Busknoten (BSn) empfangenen Daten (TMS_TDIₙ). Der zweite Komparator (cmp2) des betroffenen Busknotens (BSn) erzeugt beispielhaft aus dem differentiellen Potenzialverlauf des differentiellen Signalpegels (TOW) auf dem betroffenen Zweidrahtdatenbusabschnitt (bₙ) das durch den betreffenden Busknoten (BSn) empfangene Taktsignal (TCKₙ), das dem rekonstruierten Systemtakt (TCK) entspricht. Bei geeigneter Synchronisierung von betroffenem Busknoten (BSn) und Bus-Master (BM), erzeugt der betroffene Busknoten (BSn) einen internen Systembasistakt (iTCKₙ), der erst in der zweiten Halbtaktperiode (T_{2H}) des dritten Zeitschlitzes (TDO_{z}) der Systembasistaktperiode (T) des n-ten Zeitschlitzpaketes einen Puls mit der Dauer einer Halbtaktperiode zeigt. Mit der steigenden Flanke dieses Systembasistakt-Signals übernimmt der betroffene Busknoten (BSn) in diesem Beispiel die logischen Werte der vom Bus-Master (BM) gesendeten Daten (TMS_TDIₙ), welche mittels der fallenden Flanke von TCKₙ detektiert wurden. Mit der fallenden Flanke des Taktsignals (TCKₙ) zu Beginn des nächsten Zeitschlitzpaketes wird der in diesem Beispiel vom betroffenen Busknoten (BSn) zu sendende Wert (TDOₙ) geändert. TDOₙ wird jedoch erst im dritten Zeitschlitz (TDO_{z(n+1)}) des folgenden (n+1)-ten Zeitschlitzpaketes aktiv, wenn der betroffene Busknoten (BSn) senden darf. Dem Fachmann ist klar, dass die Steuerung nicht nur mittels der in Fig. 5 dargestellten Steuerung über die fallende Flanke des Systemtaktes (TCKₙ) möglich ist, sondern auch über die steigenden Flanke.

### Fig. 6

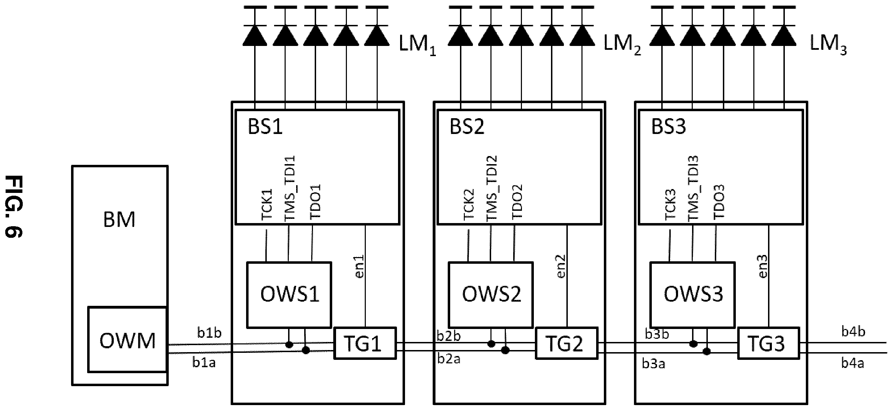

Fig. 6 zeigt einen beispielhaften Zweidrahtdatenbus (b1b2b3) mit drei Busknoten (BS1, BS2, BS3), drei Zweidrahtdatenbusabschnitten (b1, b2, b3) und mit einem Bus-master (BM). Der erste Zweidrahtdatenbusabschnitt (b1) verbindet den Busmaster (BM) mit dem ersten Busknoten (BS1).

Der zweite Zweidrahtdatenbusabschnitt (b2) verbindet den zweiten Busknoten (BS2) mit dem ersten Busknoten (BS1). Der dritte Zweidrahtdatenbusabschnitt (b3) verbindet den dritten Busknoten (BS3) mit dem zweiten Busknoten (BS2).

Der Zweidrahtdatenbus wird durch einen Bus-Master (BM) mittels einer Master-Zweidrahtdatenbusschnittstelle (OWM) gesteuert, an die der erste Zweidrahtdatenbusabschnitt (b1) angeschlossen ist.

Die erste Zweidrahtdatenbusschnittstelle (OWS1) ist mit dem ersten Zweidrahtdatenbusabschnitt (b1) verbunden. Sie empfängt über diesen ersten Zweidrahtdatenbusabschnitt (b1) Daten vom Bus-Master und sendet solche zu diesem. Intern stellt sie einen ersten rekonstruierten Systemtakt (TCK1) bereit, mit dem die interne JTAG-Schnittstelle des ersten Busknotens (BS1) betrieben wird. Des Weiteren stellt sie das erste kombinierte TMS-TDI-Signal (TMS_TDI1) bereit, das in diesem Beispiel im Zeitmultiplex das Test-Mode-Signal (TMS) und das Dateneingangssignal (TDI) umfasst. Mit dem Test-Mode-Signal (TMS) wird der endliche Automat (finite state machine) des Test-Controllers (TAPC) der JTAG-Schnittstelle des ersten Busknotens (BS1) gesteuert. Die Daten des TDI-Signalanteils werden zum Beschicken der Schieberegister der JTAG-Schnittstelle des ersten Busknotens (BS1) benutzt. Umgekehrt liefert die JTAG-Schnittstelle mit dem seriellen TDo Ausgangssignal Daten aus den Registern der JTAG-Schnittstelle des ersten Busknotens (BS1) zurück. Durch ein erstes Transfer-Gate (TG1) kann der erste Zweidrahtdatenbusabschnitt (b1) mit dem nachfolgenden zweiten Zweidrahtdatenbusabschnitt (b2) verbunden werden. Hierzu beschreibt der Bus-Master (BM) ein hier nicht gezeichnetes Transfer-Gate-Control-Register (TGCR) des ersten Busknotens (BS1) über den Zweidrahtdatenbus (b1) und setzt ein Flag in dem besagten Transfer-Gate-Control-Register (TGCR) des ersten Busknotens (BS1), das die erste Enable-Leitung (en₁) innerhalb des ersten Busknotens (BS1) setzt oder löscht. In Abhängigkeit von dieser ersten Enable-Leitung (en₁) des ersten Busknotens (BS1) wird das erste Transfer-Gate (TG1) des ersten Busknotens (BS1) geöffnet und geschlossen. Somit kann mittels eines Befehls vom Bus-Master (BM) an den ersten Busknoten (BS1) der Zweidrahtdatenbus (b1b2b3) verlängert und verkürzt werden.

Die zweite Zweidrahtdatenbusschnittstelle (OWS2) ist mit dem zweiten Zweidrahtdatenbusabschnitt (b2) verbunden. Sie empfängt über diesen zweiten Zweidrahtdatenbusabschnitt (b2) Daten vom Bus-Master (BM), wenn der erste Busknoten (BS1) sein Transfer-Gate (TG1) geschlossen hat. Die zweite Zweidrahtdatenbusschnittstelle (OWS2) sendet auch solche Daten zu dem Bus-Master (BM). Intern stellt sie einen zweiten rekonstruierten Systemtakt (TCK2) bereit, mit dem die interne JTAG-Schnittstelle des zweiten Busknotens (BS2) betrieben wird. Des Weiteren stellt sie das zweite kombinierte TMS-TDI-Signal (TMS_TDI2) bereit, das in diesem Beispiel im Zeitmultiplex das Test-Mode-Signal (TMS) und das Dateneingangssignal (TDI) umfasst. Mit dem Test-Mode-Signal (TMS) wird der endliche Automat (finite state machine) des Test-Controllers (TAPC) der JTAG-Schnittstelle des zweiten Busknotens (BS2) gesteuert. Die Daten des TDI-Signalanteils werden zum Beschicken der Schieberegister der JTAG-Schnittstelle des zweiten Busknotens (BS2) benutzt. Umgekehrt liefert die JTAG-Schnittstelle des zweiten Busknotens (BS2) mit dem seriellen TDo Ausgangssignal Daten aus den Registern der JTAG-Schnittstelle des zweiten Busknotens (BS2) zurück. Durch ein zweites Transfer-Gate (TG2) kann der zweite Zweidrahtdatenbusabschnitt (b2) mit dem dritten Zweidrahtdatenbusabschnitt (b3) verbunden werden. Hierzu beschreibt der Bus-Master (BM) ein hier nicht gezeichnetes Transfer-Gate-Control-Register (TGCR) des zweiten Busknotens (BS2) über den ersten Zweidrahtdatenbusabschnitt (b1) und den zweiten Zweidrahtdatenbusabschnitt (b2) und setzt ein Flag in dem Transfer-Gate-Control-Register (TGCR) des zweiten Busknotens (BS2), das die zweite Enable-Leitung (en2) des zweiten Busknotens (BS2) setzt oder löscht. In Abhängigkeit von dieser zweiten Enable-Leitung (en2) des zweiten Busknotens (BS2) wird das zweite Transfer-Gate (TG2) des zweiten Busknotens (BS2) geöffnet und geschlossen. Somit kann mittels eines Befehls vom Bus-Master (BM) der Zweidrahtdatenbus (b1b2b3) noch weiter verlängert und verkürzt werden.

Die dritte Zweidrahtdatenbusschnittstelle (OWS3) ist mit dem dritten Zweidrahtdatenbusabschnitt (b3) verbunden. Sie empfängt über diesen dritten Zweidrahtdatenbusabschnitt (b3) Daten vom Bus-Master (BM), wenn der erste Busknoten (BS1) sein Transfer-Gate (TG1) geschlossen hat und wenn der zweite Busknoten (BS2) ebenfalls sein zweites Transfer-Gate (TG2) geschlossen hat. Die dritte Zweidrahtdatenbusschnittstelle (OWS3) sendet auch solche Daten zu dem Bus-Master (BM). Intern stellt sie einen dritten rekonstruierten Systemtakt (TCK3) bereit, mit dem die interne JTAG-Schnittstelle des dritten Busknotens (BS2) betrieben wird. Des Weiteren stellt sie das dritte kombinierte TMS-TDI-Signal (TMS_TDI3) bereit, das in diesem Beispiel im Zeitmultiplex das Test-Mode-Signal (TMS) und das Dateneingangssignal (TDI) für die JTAG-Schnittstelle des dritten Busknotens (BS3) umfasst. Mit dem Test-Mode-Signal (TMS) wird der endliche Automat (finite state machine) des Test-Controllers (TAPC) der JTAG-Schnittstelle des dritten Busknotens (BS3) gesteuert. Die Daten des TDI-Signalanteils werden zum Beschicken der Schieberegister der JTAG-Schnittstelle des dritten Busknotens (BS3) benutzt. Umgekehrt liefert die JTAG-Schnittstelle des dritten Busknotens (BS3) mit dem seriellen TDo-Ausgangssignal Daten aus den Registern der JTAG-Schnittstelle des dritten Busknotens (BS3) zurück. Durch ein drittes Transfer-Gate (TG3) des dritten Busknotens (BS3) kann der dritte Zweidrahtdatenbusabschnitt (b3) mit weiteren Zweidrahtdatenbusabschnitten (bₙ) verbinden. Hier soll der dritte Busknoten aber beispielhaft den Zweidrahtdatenbus (b1b2b3) abschließen.

Jeder der Busknoten (BS1, BS2, BS3) ist mit Gruppen von Leuchtmitteln (LM1, LM2, LM3) verbunden, die durch den jeweiligen Busknoten (BS1, BS2, BS3) gesteuert werden. Andere Verbraucher elektrischer Energie sind natürlich denkbar.

### Fig. 7

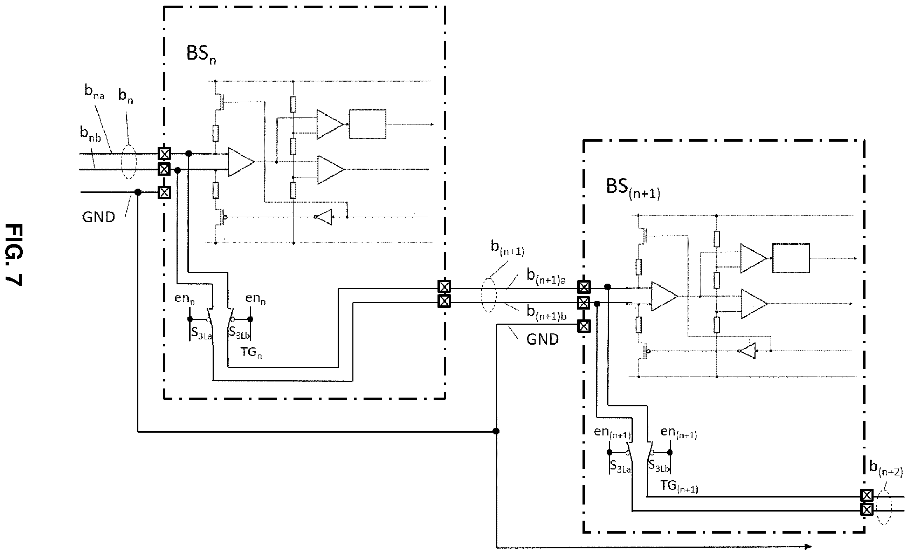

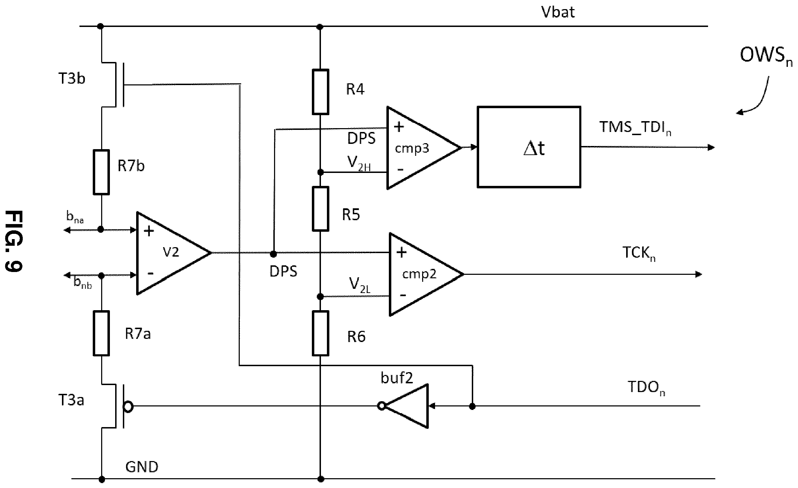

Fig. 7 entspricht der Aneinanderreihung zweier Busknotendatenbusschnittstellen in Form von zwei rechten Hälften der nachfolgenden Fig. 9. Ein vorausgehender n-ter Zweidrahtdatenbusabschnitt (bₙ) ist mit einem n-ten Busknoten (BSₙ) verbunden. Dieser n-te Busknoten (BSₙ) kann mittels seines Transfer-Gate (TGn) diesen vorausgehenden n-ten Zweidrahtdatenbusabschnitt (bₙ) mit dem nachfolgenden (n+1)-ten Zweidrahtdatenbusabschnitt (b₍ₙ₊₁₎) verbinden. Sofern das Transfer-Gate (TGₙ) des n-ten Busknotens (BSₙ) geöffnet ist, legt ein nicht gezeigter differentieller Schalter den differentiellen Pegel (TOW) des (n+1)-ten Zweidrahtdatenbusabschnitts(b₍ₙ₊₁₎) und damit auf allen nachfolgenden Zweidrahtdatenbusabschnitte (b(ₙ₊ᵢ)mit i > n+1), sofern vorhanden bzw. über Transfer-Gates zugeschaltet, vorzugsweise auf eine definierte differentielle Potenzialdifferenz und verhindert damit eine versehentliche Datenübertragung.

Der (n+1)-te Busknoten (BS₍ₙ₊₁₎) kann mittels seines Transfer-Gates (TG₍ₙ₊₁₎) wieder diesen vorausgehenden (n+1)-ten Zweidrahtdatenbusabschnitt (b₍ₙ₊₁₎) mit dem (n+2)-ten Zweidrahtdatenbusabschnitt (b₍ₙ₊₂₎) verbinden. Sofern das Transfer-Gate (TG₍ₙ₊₁₎) des (n+1)-ten Busknotens (BS₍ₙ₊₁₎) geöffnet ist, legt ein nichtgezeichneter differentieller Schalter wieder den differentiellen Signalpegel (TOW) auf dem (n+2)-ten Zweidrahtdatenbusabschnitts(b₍ₙ₊₂₎) und damit auf allen nachfolgenden Zweidrahtdatenbusabschnitte (b₍ₙ₊₃₎), sofern vorhanden bzw. über Transfer-Gates zugeschaltet, auf eine definierte differentielle Potenzialdifferenz und verhindert damit die versehentliche Datenübertragung.

### Fig. 8

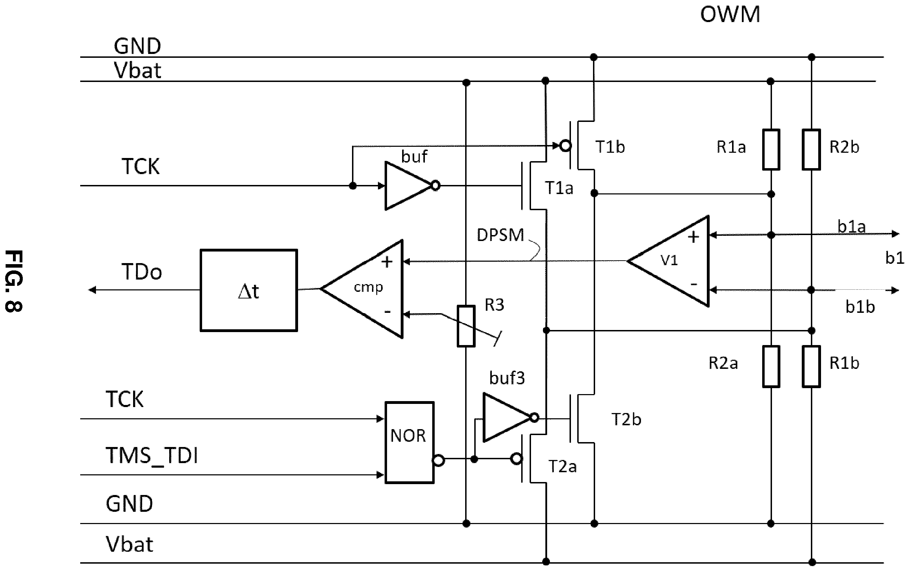

Fig. 8 zeigt die Implementierung für eine Master-Zweidrahtdatenbusschnittstelle (OWM).

In den Fign. 7 und 8 sind die wichtigsten Teile einer Schnittstelle zur Realisierung des Protokolls für einen dem Eindrahtdatenbus oder dem hier beispielhaft angeschlossenen ersten Zweidrahtdatenbusabschnitt (b1) des Zweidrahtdatenbusses (b1b2b3) zwischen dem Bus-Master und dem betreffenden Busknoten (BSn) dargestellt. Als Bezugspotenzial für die Signale auf dem Zweidrahtdatenbus (b1b2b3) und dem angeschlossenen ersten Zweidrahtdatenbusabschnitt (b1) des Zweidrahtdatenbusses (b1b2b3) dient hier das zweite Bezugspotenzial (GND) der Bezugspotenzialleitung (GND), welche beispielhaft auf Masse liegt.

Durch den differentiellen Spannungsteiler aus
- einem unteren Widerstand (R2a) zwischen dem ersten Eindrahtdatenbus (bla, b2a, b3a) und damit dem angeschlossenen ersten Eindrahtdatenbusabschnitt (b1a) des ersten Eindrahtdatenbusses (bla, b2a, b3a) des Zweidrahtdatenbusses (b1b2b3) und Bezugspotenzialleitung (GND) mit dem zweiten Bezugspotenzial (GND) und
- einem weiteren unteren Widerstand (R2b) zwischen dem zweiten Eindrahtdatenbus (b1b, b2b, b3b) und damit dem angeschlossenen zweiten Eindrahtdatenbusabschnitt (b1b) des zweiten Eindrahtdatenbusses (b1b, b2b, b3b) des Zweidrahtdatenbusses (b1b2b3) und Bezugspotenzialleitung (GND)) mit dem zweiten Bezugspotenzial (GND) und
- einem oberen Widerstand (R1a) zwischen dem ersten Eindrahtdatenbus (bla, b2a, b3a) und damit dem angeschlossenen ersten Eindrahtdatenbusabschnitt (b1a) des ersten Eindrahtdatenbusses (bla, b2a, b3a) des Zweidrahtdatenbusses (b1b2b3) und der Versorgungsspannung (V_{bat}) mit einem Potenzial (V_{IO}) und
- einem weiteren oberen Widerstand (R1b) zwischen dem zweiten Eindrahtdatenbus (b1b, b2b, b3b) und damit dem angeschlossenen zweiten Eindrahtdatenbusabschnitt (b1b) des zweiten Eindrahtdatenbusses (b1b, b2b, b3b) des Zweidrahtdatenbusses (b1b2b3) und der Versorgungsspannung (V_{bat}) mit einem Potenzial (V_{IO})
wird der Zweidrahtdatenbus (b1b2b3) in Form des angeschlossenen ersten Zweidrahtdatenbusabschnitts (b1) hinsichtlich des Betrags des differentiellen Signalpegels (TOW) zunächst auf einem mittleren zweiten differentiellen Spannungsbetragspegel (V_{M}) zwischen diesen beiden Potenzialen (-V_{IO}, V_{IO}) gehalten. Auf der Master-Seite werden nun immer in einer Halbtaktperiode der mindestens zwei Halbtaktperioden (T_{1H}, T_{2H}) vorzugsweise jedes Zeitschlitzes der drei Zeitschlitze einer Systembasistaktperiode (T) des Systembasistaktes die dominierenden Schalter (T1a, T1b) geschlossen. Hierdurch wird ein maximaler differentieller Signalpegel (TOW) auf dem Zweidrahtdatenbus (b1b2b3) erzwungen. Da der Innenwiderstand der dominierenden Schalter (T1a, T1b) vorzugsweise kleiner als der Innenwiderstand des differentiellen Spannungsteilers aus den beiden oberen Widerständen (R1a, R1b) und den beiden unteren Widerständen (R2a, R2b) ist, wird dadurch in der betreffenden Halbtaktperiode der mindestens zwei Halbtaktperioden (T_{1H}, T_{2H}) vorzugsweise jedes Zeitschlitzes der drei Zeitschlitze einer Systembasistaktperiode (T) durch das Schließen der dominierenden Schalter (T1a, T1b) der differentielle Spannungspegel, der der differentielle Signalpegel (TOW) ist, auf dem Zweidrahtdatenbus (b1b2b3) von dem besagten mittleren zweiten differentiellen Spannungsbetragspegel (V_{M}) in einem zweiten Spannungsbetragsbereich (V_{B2}) zumindest auf den ersten differentiellen Spannungsbetragspegel (-V_{IO}), der sich im ersten Spannungsbetragsbereich (V_{B1}) befindet, gezogen. Die dominierenden Schalter (T1a, T1b) werden dabei durch den Systemtakt auf Masterseite (TCK) angesteuert. Sind diese dominierenden Schalter (T1a, T1b) nicht geschlossen, so können Daten bidirektional in den anderen Halbtaktperioden der mindestens zwei Halbtaktperioden (T_{1H}, T_{2H}) vorzugsweise jedes Zeitschlitzes der typischerweise drei Zeitschlitze (TINO, TIN1, TDO_{z}) einer Systembasistaktperiode (T) übertragen werden. Auf der Bus-Master-Seite speist dazu eine geschaltete Stromquelle (T2a, T2b) Strom in den Zweidrahtdatenbus (b1b2b3) ein, wenn die Sendeleitung (TMS_TDI) aus dem Inneren des Bus-Masters (BM) aktiv ist. Hierzu schließt die Sendeleitung (TMS_TDI) aus dem Inneren des Bus-Masters (BM) die Schalter (T2a, T2b) der steuerbaren Stromquelle. Vorzugsweise handelt es sich also um Transistoren (MOS-Transistoren im Speziellen), die als Stromquellen im eingeschalteten Zustand betrieben werden. Ganz besonders eignen sich also Stromspiegelschaltungen für deren Ansteuerung. Hierdurch liefern die so ausgebildeten Transistorstromquellen der steuerbaren differentiellen Stromquelle (T2a, T2b) Strom in den Zweidrahtdatenbus (b1b2b3). Vorzugsweise ist dieser Strom betragsmäßig jeweils größer als der Betrag des Stromes, den der differentielle Pull-Schaltkreis bestehend aus den oberen Widerständen (R1a, R1b) und den unteren Widerständen (R2a, R2b) abführen kann. Somit wandert der differentielle Signalpegel (TOW) in Form der Potenzialdifferenz auf dem Zweidrahtdatenbus (b1b2b3) oder zumindest auf dem angeschlossenen ersten Zweidrahtdatenbusabschnitts (b1) des Zweidrahtdatenbusses (b1b2b3) in diesem Fall betragsmäßig vom mittleren zweiten differentiellen Spannungsbetragspegel (V_{M}) in einem zweiten Spannungsbetragsbereich (V_{B2}) zu einem Potenzial nahe der Versorgungsspannung (V_{IO1}) für die schaltbare differentielle Stromquelle (T2a, T2b) des Bus-Masters (BM) in dem dritten Spannungsbetragsbereich (V_{B3}). Werden jedoch die dominierenden Schalter (T1a, T1b) geschlossen, so überschreiben diese den Einfluss der schaltbaren differentiellen Stromquelle (T2a, T2b) des Bus-Masters (BM) und des Pull-Schaltkreises bestehend aus den oberen Widerständen (R1a, R1b) und den unteren Widerständen (R2a, R2b). Diese sind bei geeigneter Auslegung der dominierenden Schalter (T1a, T1b) nicht in der Lage, den Betrag des Signalpegels (TOW) auf dem Zweidrahtdatenbus (b1b2b3) oder zumindest dem beispielhaft angeschlossenen ersten Zweidrahtdatenbusabschnitt (b1) des Zweidrahtdatenbusses (b1b2b3) gegen die dominierenden Schalter (T1a, T1b) zu bestimmen.

In gleicher Weise arbeitet die zweite schaltbare Stromquelle auf der Busknoten-Seite, siehe Fig. 9. Auf der Busknoten-Seite speist dazu eine geschaltete Stromquelle (T3a, T3b) Strom in den Zweidrahtdatenbus (b1b2b3) bzw. den angeschlossenen Zweidrahtdatenbusabschnitt (b1, b2, b3) des Zweidrahtdatenbusses (b1b2b3) ein, wenn die Sendeleitung (TDOₙ) aus dem Inneren des Busknotens aktiv ist. Hierzu schließt die Sendeleitung (TDOₙ) aus dem Inneren des betrachteten Busknotens (BSn) die Schalter (T3a, T3b) der steuerbaren Stromquelle. Vorzugsweise werden also der in der Fig. 8 gezeigte dritte Transistor (T3a) und der weitere dritte Transistor (T3b) als schaltbare Stromquelle betrieben. Hierdurch liefert die Stromquelle der steuerbaren Stromquelle (T3a, T3b) Strom in den Zweidrahtdatenbus (b1b2b3) bzw. den angeschlossenen Zweidrahtdatenbusabschnitt (bn) des Eindrahtdatenbusses. Vorzugsweise ist dieser Strom wieder größer als der Strom, den der Pull-Schaltkreis bestehend aus den oberen Widerständen (R1a, R1b) und den unteren Widerständen (R2a, R2b) abführen kann. Somit wandert der Betrag des differentiellen Signalpegels (TOW) des Zweidrahtdatenbusses (b1b2b3) bzw. des angeschlossenen Zweidrahtdatenbusabschnitts (bn) in diesem Fall vom mittleren zweiten differentiellen Spannungsbetragspegel (V_{M}) in einem zweiten Spannungsbetragsbereich (V_{B2}) zu einem Potenzial nahe der Versorgungsspannung (V_{IO2}) für die schaltbare Stromquelle (T3a, T3b) des betrachteten Busknotens (BSn) in dem dritten Spannungsbetragsbereich (V_{B3}). Werden jedoch die dominierenden Schalter (T1a, T1b) im Bus-Master (BM) geschlossen, so überschreiben diese wieder den Einfluss der schaltbaren Stromquelle (T3a, T3b) des betrachteten Busknotens (BSn) und des differentiellen Pull-Schaltkreises (R1a, R1b, R2a, R2b). Beide sind bei geeigneter Auslegung der dominierenden Schalters (T1a, T1b) nicht in der Lage, den differentiellen Signalpegel (TOW) auf dem Zweidrahtdatenbus (b1b2b3) oder dem angeschlossenen Zweidrahtdatenbusabschnitt (bn) des Zweidrahtdatenbusses (b1b2b3) gegen die dominierenden Schalter (T1a, T1b) des Busmasters (BM) zu bestimmen. Auch wenn die schaltbaren Stromquellen (T2a, T2b) des Bus-Masters (BM) ebenfalls hinzugeschaltet werden, werden bei geeigneter Auslegung der dominierenden Schalter (T1a, T1b) des Bus-Masters (BM) diese den differentiellen Signalpegel (TOW) auf dem Zweidrahtdatenbus (b1b2b3) oder dem angeschlossenen Zweidrahtdatenbusabschnitt (bn) des Zweidrahtdatenbusses (b1b2b3) weiterhin bestimmen.

Auf der Busknoten-Seite vergleicht ein dritter Komparator (cmp3) den Betrag des differentiellen Signalpegels (TOW) auf dem Zweidrahtdatenbus (b1b2b3) oder dem angeschlossenen Zweidrahtdatenbusabschnitt (bn) des Zweidrahtdatenbusses (b1b2b3) mit einem dritten Schwellwert (V_{2H}). Gleichzeitig vergleicht ein zweiter Komparator (cmp2) den Betrag des differentiellen Signalpegels (TOW) auf dem Zweidrahtdatenbus (b1b2b3) oder dem angeschlossenen Zweidrahtdatenbusabschnitt (bn) des Zweidrahtdatenbusses (b1b2b3) mit einem zweiten Schwellwert (V_{2L}). Der zweite Schwellwert (V_{2L}) unterscheidet sich vom dritten Schwellwert (V_{2H}) und bestimmt die Grenze zwischen dem ersten Spannungsbetragsbereich (V_{B1}) und dem zweiten Spannungsbetragsbereich (V_{B2}). Der dritte Schwellwert (V_{2H}) bestimmt die Grenze zwischen dem zweiten Spannungsbetragsbereich (V_{B2}) und dem dritten Spannungsbetragsbereich (V_{B3}). Der zweite Komparator (cmp2) gewinnt den Systemtakt aus dem differentiellen Signalpegel (TOW) auf dem Zweidrahtdatenbus (b1b2b3) oder dem angeschlossenen Zweidrahtdatenbusabschnitt (bn) des Zweidrahtdatenbusses (b1b2b3) zurück. Dieses Signal wird ins Innere des betrachteten Busknotens (BSn) als durch den betrachteten Busknoten (BSn) empfangenes Taktsignal (TCKₙ) weitergegeben. Der dritte Komparator (cmp3) gewinnt die Dateninformation aus dem differentiellen Signalpegel (TOW) auf dem Zweidrahtdatenbus (b1b2b3) oder dem angeschlossenen Zweidrahtdatenbusabschnitt (bn) des Zweidrahtdatenbusses (b1b2b3) als durch den betrachteten Busknoten (BSn) empfangene Daten (TMS_TDIₙ) zurück. Dabei enthalten die durch den betrachteten Busknoten (BSn) empfangenen Daten auch noch Anteile des Systemtaktes. Dies kann durch einfaches Abtasten beispielsweise in einem Flip-Flop mit der Flanke eines leicht verzögerten rekonstruierten Systemtakts (TCKₙ) oder alternativ durch Verzögerung der empfangenen Daten und Abtastung mit einem nicht verzögerten rekonstruierten Systemtakt (TCKₙ) leicht behoben werden. Gegebenenfalls müssen die Signale vor der Verwendung noch aufbereitet werden.

In einer Ausprägung könnte das Datenausgangssignal (TMS_TDIₙ) auf 1 durch den dritten Komparator (cmp3) geschaltet werden, wenn der differentielle Signalpegel (TOW) auf dem Zweidrahtdatenbus (b1b2b3) oder dem angeschlossenen ersten Zweidrahtdatenbusabschnitt (bn) des Zweidrahtdatenbusses (b1b2b3) höher als der dritte Schwellwert (V_{2H}) ist, und umgekehrt auf 0 geschaltet werden, wenn der Betrag des differentiellen Signalpegels (TOW) niedriger als dieser dritte Schwellwert (V_{2H}) ist. In einer Ausprägung könnte der rekonstruierte Systemtakt (TCKₙ) auf 1 durch den zweiten Komparator (cmp2) geschaltet werden, wenn der differentielle Signalpegel (TOW) auf dem Zweidrahtdatenbus (b1b2b3) oder dem angeschlossenen Zweidrahtdatenbusabschnitt (bn) des Zweidrahtdatenbusses (b1b2b3) höher als der zweite Schwellwert (V_{2L}) ist, und umgekehrt auf 0 geschaltet werden, wenn der differentielle Signalpegel (TOW) niedriger als dieser zweite Schwellwert (V_{2L}) ist.

In ähnlicher Weise tastet der Bus-Master (BM) mittels eines ersten Komparators (cmp) den differentielle Signalpegel (TOW) auf dem Zweidrahtdatenbus (b1b2b3) oder dem angeschlossenen Zweidrahtdatenbusabschnitt (bn) des Zweidrahtdatenbusses (b1b2b3) ab. Hierzu vergleicht der erste Komparator (cmp) den differentiellen Signalpegel (TOW) auf dem Zweidrahtdatenbus (b1b2b3) oder dem angeschlossenen Zweidrahtdatenbusabschnitt (bn) des Zweidrahtdatenbusses (b1b2b3) mit einem ersten Schwellwert (V_{1H}) und gewinnt dadurch die auf der Datenleitung befindlichen Daten zurück, die jedoch auch hier noch Anteile des Systemtaktes aufweisen. Auch hier hilft eine geeignete Abtastung. Auf diese Weise werden die durch den Bus-Master (BM) empfangenen Daten (TDo) gewonnen. In einer Ausprägung könnte das Datenausgangssignal (TDo) auf 1 durch den ersten Komparator (cmp) geschaltet werden, wenn der Betrag des differentielle Signalpegels (TOW) auf dem Zweidrahtdatenbus (b1b2b3) oder dem angeschlossenen Zweidrahtdatenbusabschnitt (bn) des Zweidrahtdatenbusses (b1b2b3) höher als der erste Schwellwert (V_{1H}) ist, und umgekehrt auf 0 geschaltet werden, wenn das Potenzial niedriger als dieser erste Schwellwert (V_{1H}) ist. Der erste Schwellwert (V_{1H}) ist vorzugsweise bis auf einen kleinen Toleranzbereich von vorzugsweise deutlich kleiner 25% dieses Wertes gleich dem dritten Schwellwert (V_{2H}).

In der weiteren Verarbeitung können nun Schaltungen aus dem Stand der Technik für einen Datenbus mit separater Datenleitung und Systemtaktleitung verwendet werden, sodass hier auf die Beschreibung verzichtet werden kann. Beispielhaft sei auf die WO 2006/102284 A2 verwiesen.

Es ergibt sich nun folgende Tabelle der Beträge der Signalpegel (TOW) und logischen Werte als eine mögliche Implementierung. Andere Signalpegel (TOW) und korrespondierende logische Werte sind natürlich möglich, wie dem Fachmann klar sein wird. Man beachte, dass hier in diesem Beispiel TCK=0 die dominierenden Schalter (T1a, T1b) schließt. Dies kann natürlich auch invertiert implementiert werden.

| **Senden** | | | **Betrachtete(r) Zweidrahtdaten-leitung / -leitungsabschnitt** | **Empfangen** | | |
|---|---|---|---|---|---|---|
| **TCK** | **TMS_TDI** | **TDOₙ** | **b1, b2, b3, bₙ** | **TCKₙ** | **TMS_TDIₙ** | **TDo** |
| **BM** | **BM** | **BSn** | | **BSn** | **BSn** | **BM** |
| 0 | 0 | 0 | -V_{IO1} | 0 | 0 | 0 |
| 0 | 0 | 1 | -V_{IO1} | 0 | 0 | 0 |
| 0 | 1 | 0 | -V_{IO1} | 0 | 0 | 0 |
| 0 | 1 | 1 | -V_{IO1} | 0 | 0 | 0 |
| 1 | 0 | 0 | V_{M} | 1 | 0 | 0 |
| 1 | 0 | 1 | V_{IO2} | 1 | 1 | 1 |
| 1 | 1 | 0 | V_{IO1} | 1 | 1 | 1 |
| 1 | 1 | 1 | V_{IO1/2} | 1 | 1 | 1 |

Vorzugsweise stimmen der dritte Schwellwert (V_{2H}) und der erste Schwellwert (V_{1H}) überein, wodurch der Bus-Master (BM) und die Busknoten die gleiche Datensequenz erkennen. Durch entsprechend gesteuerte zeitliche Abtastung können diese Daten dann geeignet den Zeitschlitzen (TIN0, TIN1, TDO_{Z}) zugeordnet werden.

Im Gegensatz zu den deutschen Patenten DE-B-10 2015 004 433, DE-B-10 2015 004 434, DE-B-10 2015 004 435 und DE-B-10 2015 004 436 weist der Busknoten typischerweise ein differentielles Transfer-Gate (TG) auf, das die Funktion zweier Schalter hat. Der erste Schalter kann einen vorausgehenden ersten Eindrahtdatenbusabschnitt (bna) des vorausgehenden Zweidrahtdatenbusabschnittes (bn) mit einem nachfolgenden ersten Eindrahtdatenbusabschnitt (b(n+1)a) des nachfolgenden Zweidrahtdatenbusabschnitts (b(n+1))verbinden. Der zweite Schalter kann einen vorausgehenden zweiten Eindrahtdatenbusabschnitt (bnb) des vorausgehenden Zweidrahtdatenbusabschnittes (bn) mit einem nachfolgenden zweiten Eindrahtdatenbusabschnitt (b(n+1)b) des nachfolgenden Zweidrahtdatenbusabschnitts (b(n+1))verbinden. Ist das Transfer-Gate (TGn) des betreffenden Busknotens (BSn) geöffnet, so verbinden vorzugsweise zwei weitere, nicht eingezeichnete Schalter den nachfolgenden Zweidrahtdatenbusabschnitt (b(n+1)) mit einem Haltepotenzial oder einem anderen geeigneten Potenzial. Hierdurch erhält der differentielle Signalpegel des nachfolgenden Zweidrahtdatenbusses (b(n+1)) einen vordefinierten Signalpegelbetrag ohne dass ein Systemtakt und damit Daten übertragen werden.

Zurück zu Fig. 8: Die beiden Spannungsteilerpaare, die beispielhaft den differentiellen Pull-Schaltkreis bilden, werden jeweils durch die ersten Widerstände (R1a, R1b) und die zweiten Widerstände (R2a, R2b) gebildet. Der differentielle Pull-Schaltkreis besteht aus einem ersten Spannungsteilerpaar mit einem ersten Widerstand (R1a) und einem zweiten Widerstand (R2a). Der differentielle Pull-Schaltkreis umfasst des Weiteren ein zweites Spannungsteilerpaar mit einem weiteren ersten Widerstand (R2a) und einem weiteren zweiten Widerstand (R2b). Der differentielle Pull-Schaltkreis hält den Betrag des differentiellen Spannungspegels (TOW) auf dem Zweidrahtdatenbus (b1b2b3) im zweiten Spannungsbetragsbereich (V_{B2}) auf einem mittleren zweiten differentiellen Spannungsbetragspegel (V_{M}), wenn keiner der anderen Sender (T1a, T1b, T2a, T2b, T3a, T3b) aktiv ist. Hier ist beispielhaft der erste Zweidrahtdatenbusabschnitt (b1) am Ausgang der Master-Zweidrahtdatenbusschnittstelle (OWM) angeschlossen. Der Datensender des Bus-Masters wird durch die zweiten Transistoren (T2a, T2b) gebildet. Der dominierende Taktsender wird durch die ersten Transistoren (T1a, T1b) gebildet. Der eine zweite Transistor (T2a) ist in diesem Beispiel ein P-Kanal-Transistor. Der weitere zweite Transistor (T2b) ist in diesem Beispiel ein N-Kanal-Transistor. Der eine erste Transistor (T1a) ist in diesem Beispiel ein N-Kanal-Transistor. Der weitere erste Transistor (T1b) ist in diesem Beispiel ein P-Kanal-Transistor. Über einen beispielhaften invertierenden Pufferschaltkreis (buf) wird der erste Transistor (T1a) mit dem Systemtakt (TCK) angesteuert. Der weitere erste Transistor (T1b) wird in dem Beispiel direkt angesteuert. Über ein NOR-Gatter (NOR) wird der zweite Transistor (T2a) mit dem kombinierten TMS-TDI Signal (TMS_TDI) angesteuert, wenn der Systemtakt (TCK) inaktiv ist. Über einen beispielhaft invertierenden dritten Pufferschaltkreis (buf3) wird der weitere zweite Transistor (T2b) angesteuert, wenn der Systemtakt (TCK) inaktiv ist. Der erste Verstärker (V1) bildet das differentielle Pegelsignal (DPSM) in der Bus-Master-Schnittstelle (OWM) auf Basis der differentiellen Spannungsdifferenz auf dem angeschlossenen ersten Zweidrahtdatenbusabschnitt (b1). Durch den Spannungsteiler (R3) wird eine Referenzspannung, der erste Schwellwert (V_{1H}), erzeugt, mit der der erste Komparator (cmp) den differentiellen Signalpegel (TOW) in Form des Werts des differentiellen Pegelsignals (DPSM) in der Bus-Master-Schnittstelle (OWM) vergleicht und das Datensignal (TDo) für die weitere Verarbeitung innerhalb des Bus-masters (BM) erzeugt. Gegebenenfalls wird das Vergleichsergebnis durch eine Verzögerungsvorrichtung (Δt) verzögert.

### Fig. 9

Fig. 9 zeigt eine beispielhafte Implementierung der n-ten Eindrahtdatenbusschnittstelle (OWSₙ) eines n-ten Busknotens (BSₙ) der Busknoten (BS1, BS2, BS3) passend zur Master-Zweidrahtdatenbusschnittstelle (OWM) der Fig. 8. Die Zweidrahtdatenbusschnittstelle (OWSₙ) des n-ten Busknotens (BSₙ) ist beispielhaft an den n-ten Zweidrahtdatenbusabschnitt (bₙ) angeschlossen. Der Datensender des n-ten Busknotens (BSₙ) wird durch die dritten Transistoren (T3a, T3b) gebildet. Deren Innenwiderstand (Widerstand im eingeschalteten Zustand) wird durch jeweils einen zu den jeweiligen dritten Transistoren (T3a, T3b) seriell geschalteten siebten Widerstand (R7a, R7b) bestimmt. Der zweite Verstärker (V2) bildet das differentielle Pegelsignal (DPS) in der Busknoten-Schittstelle (OWSn) auf Basis der differentiellen Spannungsdifferenz auf dem vorausgehenden angeschlossenen n-ten Zweidrahtdatenbusabschnitt (bn). Durch den Spannungsteiler aus dem vierten Widerstand (R4), dem fünften Widerstand (R5) und dem sechsten Widerstand (R6) werden zwei Referenzspannungen, ein dritter Schwellwert (V_{2H}) und ein zweiter Schwellwert (V_{2L}), aus der Versorgungsspannung (V_{bat}) des n-ten Busknotens (BSn) erzeugt. Mit diesen zwei Referenzspannungen, dem dritten Schwellwert (V_{2H}) und dem zweiten Schwellwert (V_{2L}), vergleichen ein zweiter Komparator (cmp2) und ein dritter Komparator (cmp3) den differentiellen Signalpegel (TOW) auf dem beispielhaft angeschlossenen vorausgehenden n-ten Zweidrahtdatenbusabschnitt (bₙ) in Form des Werts des differentiellen Pegelsignals (DPS). Sie erzeugen hieraus den rekonstruierten Systemtakt (TCKₙ) des n-ten Busknotens (BSₙ) und das n-te kombinierte TMS-TDI-Signal (TMS_TDIₙ) innerhalb des n-ten Busknotens (BSₙ) für die Ansteuerung des Test-Controllers (TAPC) der JTAG-Schnittstelle innerhalb des n-ten Busknotens (BSₙ). Hierbei werden Takt und Daten durch eine Verzögerungseinheit (Δt) für das kombinierte TMS-TDI-Signal (TMS_TDIₙ) wieder synchronisiert. Das Ausgangssignal der JTAG-Schnittstelle des n-ten Busknotens (BSₙ) wird in diesem Beispiel genutzt, um über einen invertierenden zweiten Pufferschaltkreis (buf2) den dritten Transistor (T3a) und direkt den weiteren dritten Transistor (T3b) anzusteuern. Dem Fachmann wird es ein Leichtes sein, die zeitliche Struktur der Signale durch eine geeignete Logik sicherzustellen.

### Fig. 10

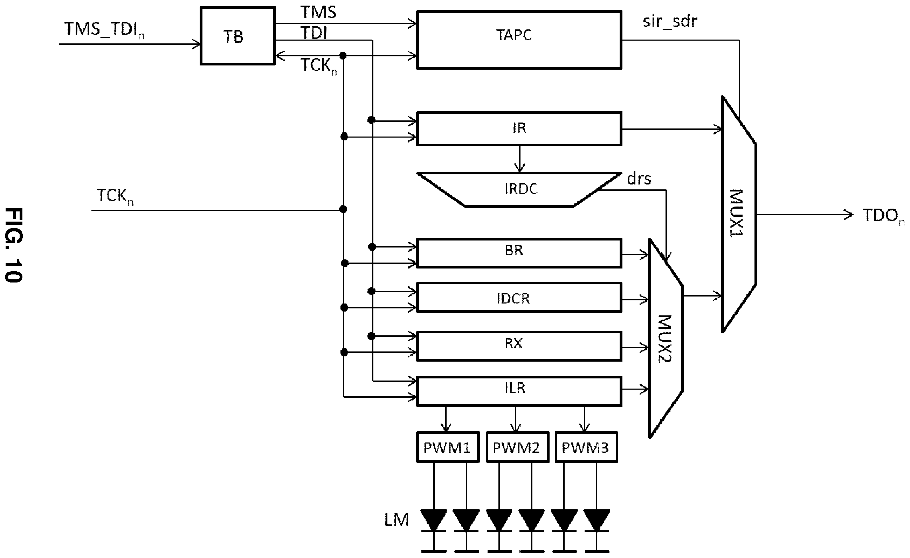

Fig. 10 zeigt die innere Struktur einer JTAG-Schnittstelle. Diese ist mit der in dem IEEE 1149 Standard vorgesehenen Architektur kompatibel, sodass die auf dem Markt erhältliche Software genutzt werden kann, was einen erheblichen Vorteil darstellt.

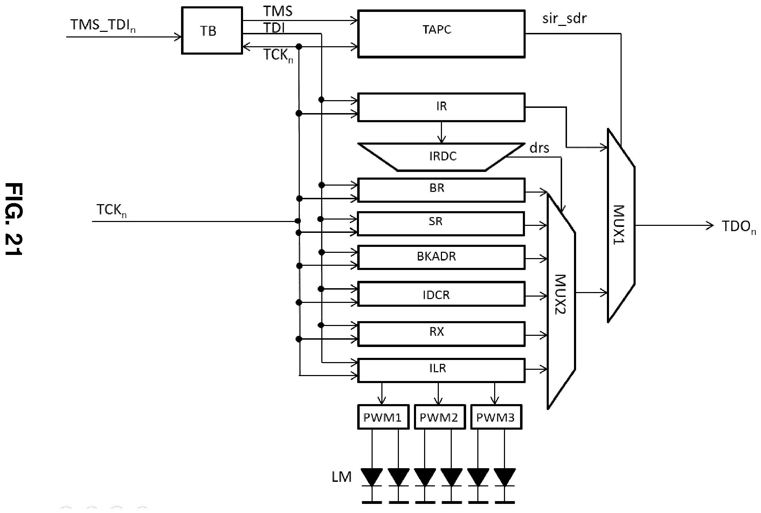

In diesem Beispiel wird das kombinierte TMS-TDI-Signal (TMS_TDIₙ) in einer Testdatenaufbereitung (TB) synchron zum rekonstruierten Systemtakt (TCKₙ) in das Test-Mode-Signal (TMS) und die seriellen Eingangsdaten (TDI) zerlegt. Mit dem Test-Mode-Signal (TMS) wird wieder der Test-Controller (TAPC) synchron zum Takt entsprechend dem bereits aus dem Stand der Technik bekannten und bei der Beschreibung der Fig. 1 besprochenem Zustandsdiagramm gesteuert. Dieses Zustandsdiagramm eines Test-Controllers (TAPC) kennzeichnet im Sinne eine JTAG-Schnittstelle, da durch Einhaltung dieses Zustandsdiagramms erst Software-Kompatibilität hergestellt wird. Durch das Steuersignal (sir_sdr) für den ersten Multiplexer (MUX1) schaltet der Test-Controller zwischen dem Instruktionsregister (IR) und den Datenregistern (BR, IDCR, RX, ILR) mittels des ersten Multiplexers (MUX1) um. Der serielle Dateneingang (TDI) wird auf alle Datenregister (BR, IDCR, RX, ILR), das Instruktionsregister (IR) und gegebenenfalls weitere Datenregister geleitet. Alle diese Register sind typischerweise zweistufig ausgeführt. Das bedeutet, dass sie über ein Schieberegister einer Bit-Länge m und parallel dazu über ein Schattenregister der gleichen Länge m verfügen. Das Schieberegister dient dem Datentransport, während das Schattenregister die gültigen Daten enthält. Wie oben beschrieben, werden die Daten in Abhängigkeit vom Zustand des Test-Controllers (TAPC) in das Schattenregister vom Schieberegister geladen oder vom Schattenregister in das Schieberegister geladen, geschoben oder die Daten ruhen. In dem Beispiel der Fig. 10 steuert ein Instruktionsdekoder (IRDC) in Abhängigkeit vom Inhalt des Instruktionsregisters (IR) die JTAG-Schnittstelle. Beispielsweise ist es denkbar, dass der betreffende Busknoten nur dann senden darf, wenn das Schattenregister des Instruktionsregisters (IR) an bestimmten Bit-Positionen bestimmte Werte, also eine bestimmte Sendeadresse enthält. Eine solche Adressierung kann aber auch in einem separaten Senderegister (SR) vorgenommen werden(siehe Fig. 21).

Besonders bevorzugt verfügt die JTAG-Schnittstelle über ein Busknotenadressregister (BKADR). (siehe Fig. 21) Dieses gibt die Identifikationsnummer des Busknotens an. Des Weiteren verfügt die JTAG-Schnittstelle bevorzugt über ein Senderegister (SR). Dieses Senderegister (SR) wird durch den Busmaster (BM) gesetzt und gibt die Nummer des Busknotens an, der senden soll / darf. Nur wenn beide Adressen, die Adresse im Busknotenadressregister (BKADR) und die Adresse im Senderegister (SR) übereinstimmen, darf der betreffende Busknoten (BSₙ) zur vorbestimmten Zeit senden. Um die Busknotenadressen in den Busknotenadressregistern (BKADR) der Busknoten bei der Initialisierung des Zweidrahtdatenbussystems zu setzen, sind zu Anfang alle Transfer-Gates (TG) aller Busknoten (BS1, BS2, BS3) geöffnet. Dies kann vorzugsweise durch einen speziellen Befehl an alle erreichbaren Instruktionsregister (IR) aller an den Zweidrahtdatenbus (b1b2b3) angeschlossenen JTAG-Schnittstellen und erreichbaren Busknoten geschehen. Hierfür müssen die Instruktionsregister (IR) dieser JTAG Schnittstellen in den niederwertigsten Bits, das sind die zuerst beschriebenen Schieberegisterbits, übereinstimmen. Der Busmaster (BM) vergibt nach einem festgelegten Algorithmus dann die erste Busadresse an den ersten und einzigen Busknoten (BS1), der direkt mit ihm verbunden ist durch Beschreiben des ersten Busknotenadressregister (BKADR) des ersten Busknotens (BS1). Dann testet der Busmaster (BM) typischer-, aber nicht notwendigerweise die Verbindung. Vorzugsweise kann das Busknotenadressregister (BKADR) des betreffenden Busknotens (BSn) nur beschrieben werden, wenn das Transfer-Gate (TGn) des betreffenden Busknotens (BSn) nicht geschlossen ist. Hierdurch wird sichergestellt, dass nur der letzte Busknoten, also der erste Busknoten in der Folge von Busknoten vom Busmaster aus, der sein Transfer-Gate (TG) nicht geschlossen hat, eine Busknotenadresse in sein Busknotenadressregister (BKADR) übernimmt. Nach einer solchen Übernahme wird das Transfer-Gate (TG) typischerweise automatisch oder per Software-Befehl des Bus-Masters (BM) geschlossen. Damit wird die im Busadressregister gespeicherte Busknotenadresse eingefroren. Gleichzeitig kann nun die Adressierung des nachfolgenden Busknotens erfolgen. Um ein geordnetes Rücksetzen des Bussystems zu ermöglichen, wird beispielsweise ein für alle Busknoten gleicher Befehl im Instruktionsregister (IR) vorgesehen, der alle Transfer-Gatter aller Busknoten öffnet, sodass eine Neuvergabe von Adressen erfolgen kann. Sofern nach einer Adressvergabe der Busknoten mit dieser Busknotenadresse nicht antwortet, ist der Busknoten entweder defekt oder existiert nicht. Im letzteren Fall kennt dann der Bus-Master die Position aller Busknoten und deren Anzahl.

Die beispielhafte JTAG-Schnittstelle der Fig. 10 umfasst ein Standard-gemäßes Bypass-Register (BR), das zum Vorbeileiten von Daten durch die JTAG-Schnittstelle dient. Darüber hinaus umfasst es in diesem Beispiel ein Identifikationsregister (IDCR) zum Auslesen einer Seriennummer des Schaltkreises und weitere Datenregister (RX), die dem JTAG-Standard entsprechen. Diese können beispielsweise Testregister und andere Register sein.

In einem Beleuchtungsregister (ILR) legt der Bus-Master (BM) Daten zur Einstellung der Energieversorgungen für die Leuchtmittel (LM) ab. Typischerweise handelt es sich bei den Energieversorgungen um ein oder mehrere (hier drei) Puls-Weiten-Modulations-(PWM-) Treiber (PWM1, PWM2, PWM3), die eine puls-weiten-(PWM-) modulierte Ausgangsspannung oder einen entsprechend modulierten Strom erzeugen.

### Fig. 11

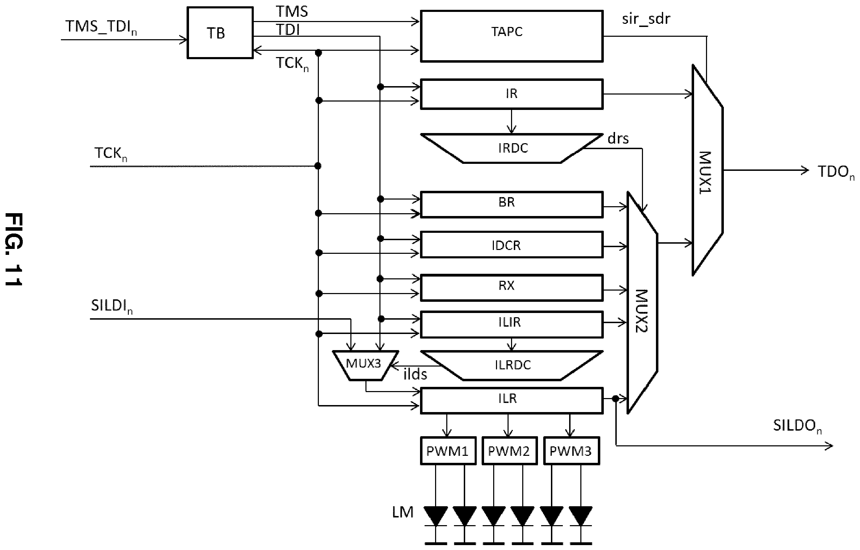

Fig. 11 zeigt die Fig. 10 mit dem Unterschied, dass die JTAG-Schnittstelle zusätzlich ein Beleuchtungsinstruktionsregister (ILIR) aufweist. Dieses steuert einen dritten Multiplexer (MUX3). Dieser kann die seriellen Eingabedaten für das Beleuchtungsregister (ILR) zwischen einem seriellen Eingang für Beleuchtungsdaten (SILDIₙ) und dem seriellen Dateneingang (TDI) mittels eines Beleuchtungsdatenauswahlsignals (ilds) umschalten. Gleichzeitig wird der Ausgang des Beleuchtungsregisters (ILR) auf den seriellen Ausgang für Beleuchtungsdaten (SILDOₙ) kopiert.

### Fig. 12

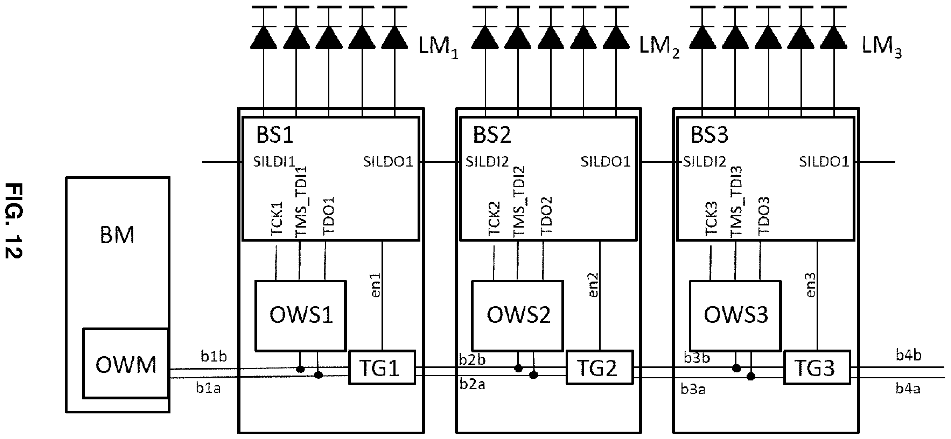

Fig. 12 zeigt die mögliche direkte Verbindung mehrerer Schaltkreise mit JTAG-Controllern entsprechend Fig. 11 über eine Verkettung mittels der Eingänge für Beleuchtungsdaten (SILDI1, SILDI2, SILDI3) und entsprechender Ausgänge für Beleuchtungsdaten (SILDO1, SILDO2, SILDO3).

Hierdurch ist es möglich, ohne komplizierte Adressierung schnell Daten für ganze Gruppen von Leuchtmitteln zu übertragen, da nur noch ein Baustein adressiert werden muss.

### Fig. 13

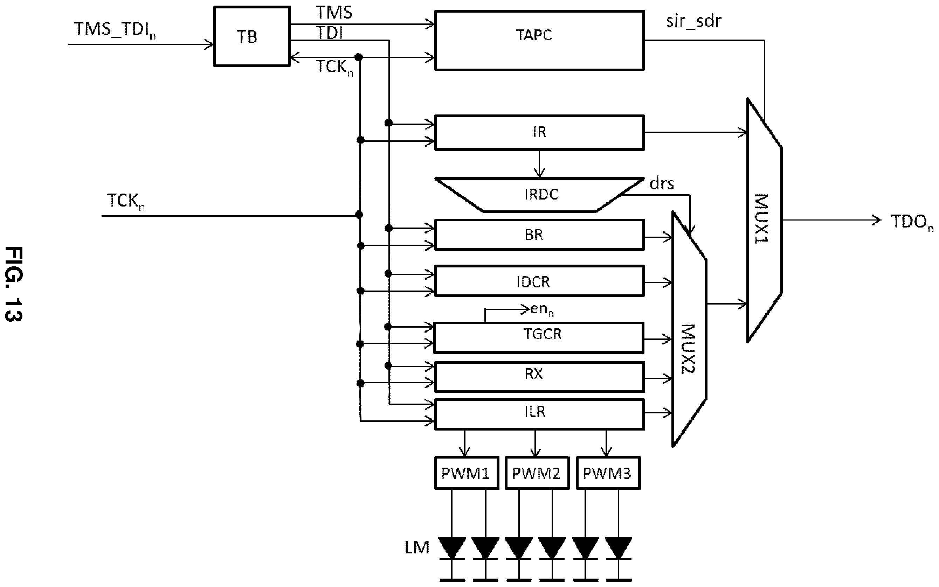

Fig. 13 zeigt eine JTAG-Schnittstelle wie in Fig. 10 mit dem Unterschied, dass sie ein separates Transfer-Gate-Control-Register (TGCR) aufweist. Anstatt das Flag für das Öffnen und Schließen des Transfer-Gate (TG) im Instruktionsregister (IR) zu platzieren, kann auch ein separates Transfer-Gate-Control-Register (TGCR) vorgesehen werden, das die entsprechende Enable-Leitung (enₙ) des entsprechenden Busknotens (BSₙ) erzeugt.

### Fig. 14

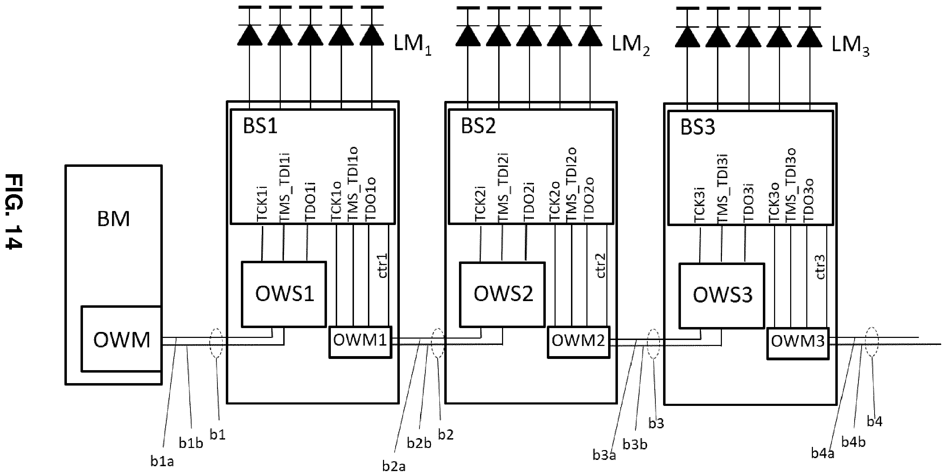

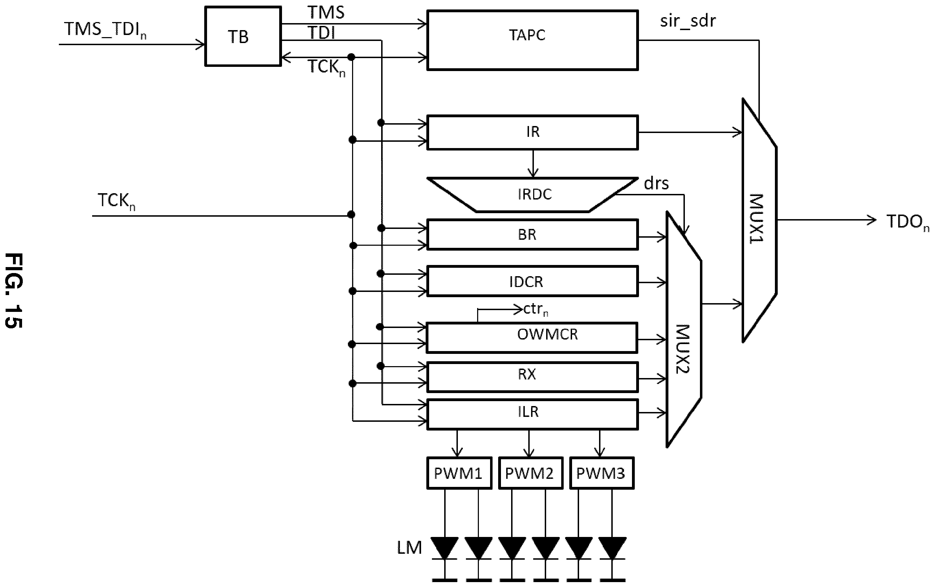

Fig. 14 zeigt die mögliche direkte Verbindung mehrerer Schaltkreise mit JTAG-Controllern entsprechend Fig. 15 über eine Verkettung mittels Point-to-Point-Verbindungen in denen bidirektional Daten und unidirektional ein Takt über die Eindrahtdatenbusabschnitte (b1, b2, b3) übertragen werden. Jeder Busknoten weist eine Zweidrahtdatenbusschnittstelle (OWS1, OWS2, OWS3) und eine Zweidraht-Bus-Master-Schnittstelle (OWM1, OWM2, OWM3) auf. Hierdurch entsteht eine äquivalente Verkettung wie in den anderen Figuren.

### Fig. 15

Fig. 15 zeigt eine JTAG-Schnittstelle wie in Fig. 10 mit dem Unterschied, dass sie ein separates Bus-Master-Control-Register (OWMCR) aufweist. Anstatt die Kontroll-Bits für die Steuerung der Bus-Master-Schnittstelle (OWM1, OWM2, OWM3) des betreffenden Busknotens (BS1, BS2, BS3) im Instruktionsregister (IR) zu platzieren, kann auch ein separates Bus-Master-Control-Register (OWMCR) vorgesehen werden, das die entsprechenden Kontrollleitungen (ctrₙ) innerhalb des entsprechenden Busknotens (BSₙ) erzeugt.

### Fig. 16

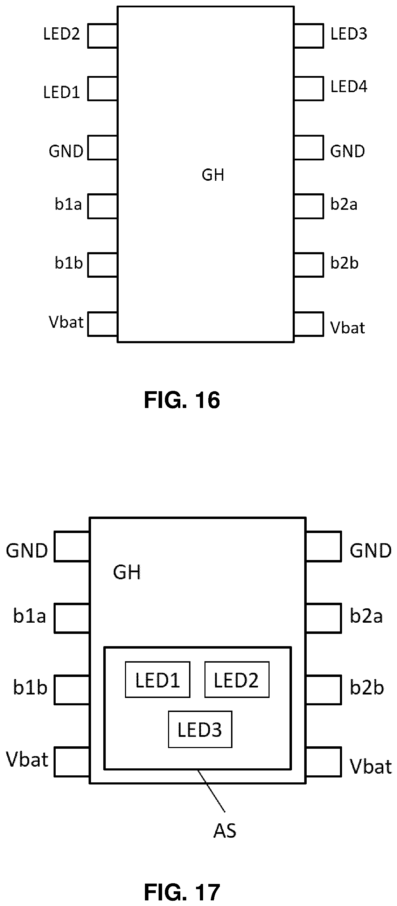

Die Fig. 16 zeigt ein beispielhaftes Gehäuse für einen Busknoten (BSn) in der Aufsicht. Die Versorgungsspannungsleitungen (V_{bat}, GND) können kreuzungsfrei miteinander verbunden werden. Die LEDs können kreuzungsfrei mit den entsprechenden Anschlüssen (LED1, LED2, LED3, LED4) und mit der negativen Versorgungsspannung, dem zweiten Bezugspotenzial (GND) der Bezugspotenzialleitung (GND) verbunden werden. Der Zweidrahtdatenbus (b1, b2) kann zwischen den Busknoten zwischen den beiden Versorgungsspannungsleitungen kreuzungsfrei geführt werden, was diesen noch besser abschirmt und die Verwendung von Microstrip-Leitungen mit einem definierten Wellenwiderstand zulässt. Dies wiederum lässt den definierten Abschluss des Datenbusses möglich erscheinen. Es ist daher dann besonders sinnvoll, wenn der Wellenwiderstand des Zweidrahtdatenbusses (b1b2b3) mit dem Widerstand des differentiellen Pull-Schaltkreises (R1a, R1b, R2a, R2b) übereinstimmt.

### Fig. 17

Fig. 17 zeigt ein Leuchtmodul für den anreihenden Verbau in der Aufsicht. Der Zweidrahtdatenbus kann hier vorzugsweise von links herangeführt werden. Der nachfolgende Zweidrahtdatenbusabschnitt (b2a, b2b) wird vorzugsweise rechts angeschlossen. Die Versorgungsspannungsleitungen können von links kommend nach rechts durchgezogen werden. In eine Aussparung (AS) des Gehäuses (GH) können die Leuchtmittel (LED1, LED2, LED3) montiert werden. Auch ist eine Montage auf dem Gehäuse (GH) möglich. Die Verwendung von optischen Elementen, wie Linsen und Spiegeln ist für eine Lichtstrahlmodifikation sinnvoll.

### Fig. 18

Fig. 18 zeigt eine noch weiter vereinfachte Version der Fig. 17. Das linke Gehäuse der Fig. 18 ist die bezüglich der Anschlüsse der Versorgungsspannung des Busknotens (V_{bat}) und des Anschluss des Bezugspotenzials (GND) vertikal und horizontal gespiegelte Variante der rechten Version. Hierdurch können die Gehäuse flächenhaft verbaut werden und benötigen nicht 16, sondern nur zwölf Anschlüsse. Ein Nachteil ist jedoch, dass zum einen eine Kreuzung notwendig wird, die aber beispielsweise über die Die-Insel des integrierten Schaltkreises, der den Busknoten darstellt, realisiert werden kann. Beispielsweise ist es sinnvoll, wenn der integrierte Schaltkreis des Busknotens auf einer Die-Insel montiert wird, die mit der negativen Versorgungsspannung, dem zweiten Bezugspotenzial (GND) der Bezugspotenzialleitung (GND), verbunden ist. Diese Die-Insel kann als Überbrückung zwischen den gegenüberliegenden Versorgungsspannungsanschlüssen der negativen Versorgungsspannung dienen. Ist diese Die-Insel zur gedruckten Schaltung hin elektrisch isoliert, so kann die positive Versorgungsspannung unter dem Lichtmodul auf der gedruckten Schaltung hindurchgeführt werden. Damit die Zweidrahtdatenbusse kreuzungsfrei verbaut werden können, ist der schachbrettartige Verbau der nicht gespiegelten und der gespiegelten Variante auf einer gedruckten Schaltung zur Bildung einer Lichtmodulzusammenstellung notwendig.

In Fig. 18 ist auch gezeigt, wie die Anschlüsse (V_{bat}) pro Gehäuse (GH) elektrisch miteinander verbunden sind, während auf gleicher Art und Weise die Bezugspotentialanschlüsse (GND) jedes Gehäuses (GH) elektrisch miteinander verbunden sind. Entweder werden dabei die beiden Anschlüsse für das Versorgungspotential (V_{bat}) über den sogenannten Die-Paddle eines Lead-Frame elektrisch verbunden oder aber die beiden zweiten Versorgungspotentialanschlüsse (GND). Die verbleibenden Versorgungspotentialanschlüsse, die nicht über den Lead-Frame elektrisch miteinander verbunden werden, können beispielsweise über im Die integrierte Leitungen oder aber über Leiterbahnen auf einer Leiterplatine (PCB) miteinander verbunden sein.

### Fig. 19

Fig. 19 zeigt, wie die beiden Lichtmodule gemäß Fig. 18 in Array-Form angeordnet sind. Wie man erkennt, befindet sich bei der Anordnung gemäß Fig. 19 unterhalb und oberhalb des linken Lichtmoduls der Fig. 18 ein Lichtmodul vom Typ des rechten Lichtmoduls der Fig. 18. Dementsprechend befindet sich bei der Array-Anordnung gemäß Fig. 19 oberhalb und unterhalb des rechten Lichtmoduls der Fig. 18 ein Lichtmodul vom Typ des linken Lichtmoduls der Fig. 18.

### Fig. 20

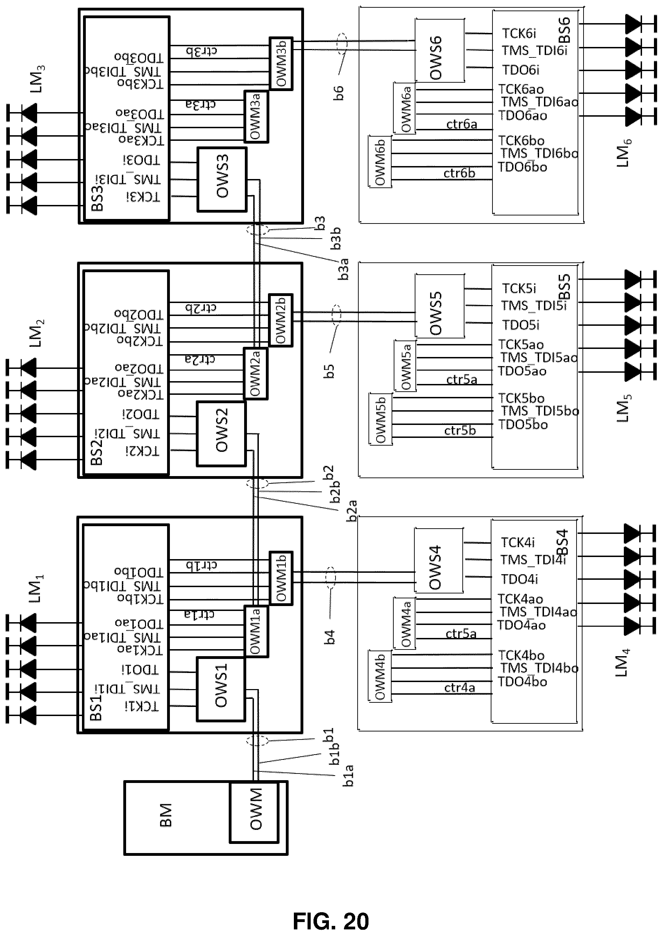

Fig. 20 zeigt eine flächenförmige Verkettung von sechs Lichtmodulen entsprechend Fig. 18 mit je zwei Zweidraht-Bus-Master-Schnittstellen (OWM1a bis OWM6a und OWM1b bis OWM6b) und einer Zweidrahtdatenbusschnittstelle (OWS1 bis OWS6). Fig. 20 zeigt die mögliche direkte Verbindung mehrerer Schaltkreise mit JTAG-Controllern entsprechend Fig. 14 über eine Verkettung mittels Point-to-Point-Verbindungen in denen bidirektional Daten und unidirektional ein Takt über die Eindrahtdatenbusabschnitte übertragen werden. Jeder Busknoten (BS1, BS2, BS3, BS4, BS5, BS6) weist eine Zweidrahtdatenbusschnittstelle (OWS1, OWS2, OWS3, OWS4, OWS5, OWS6) und eine erste Zweidraht-Bus-Master-Schnittstelle (OWM1a, OWM2a, OWM3a, OWM4a, OWM5a, OWM6a) sowie eine zweite Zweidraht- Bus-Master-Schnittstelle (OWM1b, OWM2b, OWM3b, OWM4b, OWM5b, OWM6b) auf. (Weitere Zweidrahtdatenbusschnittstellen sind denkbar, zur Vereinfachung hier aber nicht eingezeichnet.) Hierdurch entsteht eine äquivalente flächenhafte Verkettung wie in den anderen Figuren.

### Fig. 21

Fig. 21 zeigt vereinfacht eine JTAG-Schnittstelle mit Beleuchtungsregister (ILR), Busknotenadressregister (BKADR) und Senderegister (SR).

### BEZUGSZEICHENLISTE

- AS: Aussparung des Gehäuses
- b1b2b3: Zweidrahtdatenbus
- b1b2b3b4: Zweidrahtdatenbus
- b1: erster Zweidrahtdatenbusabschnitt
- b1a: erster Eindrahtdatenbusabschnitt des ersten Zweidrahtdatenbusabschnitts (b1)
- b1b: zweiter Eindrahtdatenbusabschnitt des ersten Zweidrahtdatenbusabschnitts (b1)
- b2: zweiter Zweidrahtdatenbusabschnitt
- b2a: erster Eindrahtdatenbusabschnitt des zweiten Zweidrahtdatenbusabschnitts (b2)
- b2b: zweiter Eindrahtdatenbusabschnitt des zweiten Zweidrahtdatenbusabschnitts (b2)
- b3: dritter Zweidrahtdatenbusabschnitt
- b3a: erster Eindrahtdatenbusabschnitt des dritten Zweidrahtdatenbusabschnitts (b3)
- b3b: zweiter Eindrahtdatenbusabschnitt des dritten Zweidrahtdatenbusabschnitts (b3)
- b4: vierter Zweidrahtdatenbusabschnitt
- b4a: erster Eindrahtdatenbusabschnitt des vierten Zweidrahtdatenbusabschnitts (b4)
- b4b: zweiter Eindrahtdatenbusabschnitt des vierten Zweidrahtdatenbusabschnitts (b4)
- b5: fünfter Zweidrahtdatenbusabschnitt
- b6: sechster Zweidrahtdatenbusabschnitt
- bn: n-ter Zweidrahtdatenbusabschnitt
- bna: erster Eindrahtdatenbusabschnitt des n-ten Zweidrahtdatenbusabschnitts (bn)
- bnb: zweiter Eindrahtdatenbusabschnitt des n-ten Zweidrahtdatenbusabschnitts (bn)
- b(n+1): (n+1)-ter Zweidrahtdatenbusabschnitt
- b(n+1)a: erster Eindrahtdatenbusabschnitt des (n+1)-ten Zweidrahtdatenbusabschnitts (b(n+1))
- b(n+1)b: zweiter Eindrahtdatenbusabschnitt des (n+1)-ten Zweidrahtdatenbusabschnitts (b(n+1))
- BKADR: Busknotenadressregister
- BKADRn: Busknotenadressregister des betrachteten Busknotens (BSn)
- BM: Bus-Master
- BR: Bypass-Register
- BRn: Bypass-Register des betrachteten Busknotens (BSn)
- BS1: beispielhafter erster Busknoten
- BS2: beispielhafter zweiter Busknoten
- BS3: beispielhafter dritter Busknoten
- BS4: beispielhafter vierter Busknoten
- BS5: beispielhafter fünfter Busknoten
- BS6: beispielhafter sechster Busknoten
- BSn: beispielhafter n-ter Busknoten (Der relevante oder betrachtete Busknoten wird an verschiedenen Stellen der obigen Beschreibung mit BSₙ bezeichnet). Es ist also ein beliebiger der Busknoten (BS1, BS2, BS3). Die Anzahl der Busknoten kann von 3 verschieden sein.
- BS(n+1): beispielhafter (n+1)-ter Busknoten
- buf: Pufferschaltkreis
- buf2: zweiter Pufferschaltkreis
- Buf3: dritter Pufferschaltkreis.
- Busknoten Busknoten-Schaltkreis.: Der Busknoten ist typischerweise der integrierte Schaltkreis oder ein sonstiges elektrisches System, das durch den Host-Prozessor, den Bus-Master, über den Zweidrahtdatenbus (b1b2b3) bzw. zumindest einen angeschlossenen Zweidrahtdatenbusabschnitt (b1, b2, b3) gesteuert wird.
- Bus-Master Masterschaltkreis.: Der Bus-Master (BM) ist typischerweise der Host-Prozessor, über den der integrierte Schaltkreis, der betreffende Busknoten (BSn), gesteuert wird.
- cmp: erster Komparator auf Master Seite. Der erste Komparator vergleicht den Betrag des differentiellen Signalpegels (TOW) auf dem Zweidrahtdatenbus (b1b2b3) bzw. auf dem angeschlossenen Zweidrahtdatenbusabschnitt (b1, b2, b3) in Form des Werts des differentiellen Pegelsignals (DPSM) in der Bus-Master-Schnittstelle (OWM) mit einem ersten Schwellwert (V_{1H}) und gibt das durch den Bus-Master (BM) empfangene Datensignal (TDo) an das Innere der Schaltung des Bus-Masters (BM), typischerweise den Host-Prozessor, weiter. Der erste Komparator detektiert das Wechseln des Betrags des Signalpegels (TOW) auf dem Zweidrahtdatenbus (b1b2b3) bzw. auf dem angeschlossenen Zweidrahtdatenbusabschnitt (b1, b2, b3) vom dritten Spannungsbetragsbereich (V_{B3}) einerseits in den ersten Spannungsbetragsbereich (V_{B1}) oder zweiten Spannungsbetragsbereich (V_{B2}) andererseits und umgekehrt.
- cmp2: zweiter Komparator auf Busknoten Seite. Der zweite Komparator vergleicht den differentiellen Signalpegel (TOW) auf dem Zweidrahtdatenbus (b1b2b3) bzw. auf dem angeschlossenen Zweidrahtdatenbusabschnitt (b1, b2, b3) in Form des Werts des differentiellen Pegelsignals (DPS) mit einem zweiten Schwellwert (V_{2L}) und gibt den durch den betreffenden Busknoten (BSn) empfangenen rekonstruierten Systemtakt (TCKₙ) an das Innere der Schaltung des betreffenden Busknotens (BSn), typischerweise der integrierten Schaltung oder des zu steuernden Systems weiter. Der zweite Komparator detektiert das Wechseln des Betrags des differentiellen Signalpegels (TOW) auf dem Zweidrahtdatenbus (b1,b2,b3) bzw. auf dem angeschlossenen Zweidrahtdatenbusabschnitt (b1b2b3) vom ersten Spannungsbetragsbereich (V_{B1}) einerseits in den zweiten Spannungsbetragsbereich (V_{B2})oder dritten Spannungsbetragsbereich (V_{B3}) andererseits und umgekehrt.
- cmp3: dritter Komparator auf Busknoten Seite. Der dritte Komparator vergleicht den Wert des differentiellen Signalpegels (TOW) auf dem Zweidrahtdatenbus (b1b2b3) bzw. auf dem angeschlossenen Zweidrahtdatenbusabschnitt (b1, b2, b3) in Form des Werts des differentiellen Pegelsignals (DPSn) des betrachteten Busknotens (BSn) mit einem dritten Schwellwert (V_{2H}) und gibt das durch den betrachteten Busknoten (BSn) empfangene Datensignal (TMS_TDIₙ) an das Innere der Schaltung des betrachteten Busknotens (BSn), typischerweise der integrierten Schaltung oder des zu testenden oder zu steuernden Systems weiter. Der dritte Komparator detektiert das Wechseln des Betrags des differentiellen Signalpegels (TOW) auf dem Zweidrahtdatenbus (b1b2b3) bzw. auf dem angeschlossenen Zweidrahtdatenbusabschnitt (b1, b2, b3) vom dritten Spannungsbetragsbereich (V_{B3}) einerseits in den ersten Spannungsbetragsbereich (V_{B1}) oder zweiten Spannungsbetragsbereich (V_{B2}) andererseits und umgekehrt.
- CIR: Zustand "Instruktionsregisterdaten laden" des Test-Controllers (TAPC)
- CDR: Zustand "Datenregisterdaten laden" des Test-Controllers (TAPC)
- ctr1: Kontrollleitungen zur Steuerung der Busmasterschnittstelle (OWM1) des ersten Busknotens (BS1)
- ctr1a: Kontrollleitungen zur Steuerung der ersten Busmasterschnittstelle (OWM1a) des ersten Busknotens (BS1)
- ctr1b: Kontrollleitungen zur Steuerung der zweitenBusmasterschnittstelle (OWM1b) des ersten Busknotens (BS1)
- ctr2: Kontrollleitungen zur Steuerung der Busmasterschnittstelle (OWM2) des zweiten Busknotens (BS2)
- ctr2a: Kontrollleitungen zur Steuerung der ersten Busmasterschnittstelle (OWM2a) des zweiten Busknotens (BS2)
- ctr2b: Kontrollleitungen zur Steuerung der zweiten Busmasterschnittstelle (OWM2b) des zweiten Busknotens (BS2)
- ctr3: Kontrollleitungen zur Steuerung der Busmasterschnittstelle (OWM3) des dritten Busknotens (BS3)
- ctr3a: Kontrollleitungen zur Steuerung der ersten Busmasterschnittstelle (OWM3a) des dritten Busknotens (BS3)
- ctr3b: Kontrollleitungen zur Steuerung der zweiten Busmasterschnittstelle (OWM3b) des dritten Busknotens (BS3)
- ctr4: Kontrollleitungen zur Steuerung der Busmasterschnittstelle (OWM4) des vierten Busknotens (BS4)
- ctr4a: Kontrollleitungen zur Steuerung der ersten Busmasterschnittstelle (OWM4a) des vierten Busknotens (BS4)
- ctr4b: Kontrollleitungen zur Steuerung der zweiten Busmasterschnittstelle (OWM4b) des vierten Busknotens (BS4)
- ctr5: Kontrollleitungen zur Steuerung der Busmasterschnittstelle (OWM5) des fünften Busknotens (BS5)
- ctr5a: Kontrollleitungen zur Steuerung der ersten Busmasterschnittstelle (OWM5a) des fünften Busknotens (BS5)
- ctr5b: Kontrollleitungen zur Steuerung der zweiten Busmasterschnittstelle (OWM5b) des fünften Busknotens (BS5)
- ctr6: Kontrollleitungen zur Steuerung der Busmasterschnittstelle (OWM6) des sechsten Busknotens (BS6)
- ctr6a: Kontrollleitungen zur Steuerung der ersten Busmasterschnittstelle (OWM6a) des sechsten Busknotens (BS6)
- ctr6b: Kontrollleitungen zur Steuerung der zweiten Busmasterschnittstelle (OWM6b) des sechsten Busknotens (BS6)
- ctrₙ: Kontrollleitungen zur Steuerung der Busmasterschnittstelle (OWMₙ) des n-ten Busknotens (BSₙ)
- DPS: Pegelsignal des Busknotens. Das Pegelsignal wird durch den Ausgang des zweiten differentiellen Eingangsverstärkers (V2) der jeweiligen Zweidrahtdatenbusschnittstelle (OWSₙ) eines Busknotens gebildet.
- DPSn: Pegelsignal des betreffenden Busknotens (BSn). Das Pegelsignal wird durch den Ausgang des zweiten differentiellen Eingangsverstärkers (V2n) des betreffenden Busknotens (BSn) der jeweiligen Zweidrahtdatenbusschnittstelle (OWSₙ) eines betreffenden Busknotens (BSn) gebildet.
- DPSM: Pegelsignal des betreffenden Bus-Masters (BM). Das Pegelsignal wird durch den Ausgang des ersten differentiellen Eingangsverstärkers (V1) des Bus-Masters (BM) der jeweiligen Zweidrahtdatenbusschnittstelle (OWM) des Bus-Masters (BM) gebildet.
- DR: Datenregister der JTAG-Schnittstelle (Es sind typischerweise mehrere Datenregister parallel geschaltet und werden über den zweiten Multiplexer (MUX2) während der Lesens der Datenregister (DR) ausgewählt.)
- DRn: Datenregister der JTAG-Schnittstelle des betreffenden Busknotens (BSn) (Es sind typischerweise mehrere Datenregister parallel geschaltet und werden über den zweiten Multiplexer (MUX2n) des betreffenden Busknotens (BSn) während der Lesens der Datenregister (DR) ausgewählt.)
- drs: Auswahlsignal für das Datenregister, das gelesen werden soll.
- Δt: Verzögerungseinheit für das kombinierte TMS-TDI-Signal im Busknoten (TMS_TDIₙ) bzw. das TDo-Signal im Bus-Master;
- EDR1: Zustand "Datenregister Exit 1" des Test-Controllers (TAPC)
- EDR2: Zustand "Datenregister Exit 2" des Test-Controllers (TAPC)
- EIR1: Zustand "Instruktionsregister Exit 1" des Test-Controllers (TAPC)
- EIR2: Zustand "Instruktionsregister Exit 2" des Test-Controllers (TAPC)
- en1: erste Enable-Leitung zum Öffnen und Schließen des ersten TransferGates (TG1) des ersten Busknotens (BS1)
- en2: zweite Enable-Leitung zum Öffnen und Schließen des zweiten Transfer-Gates (TG2) des zweiten Busknotens (BS2)
- en3: dritte Enable-Leitung zum Öffnen und Schließen des dritten TransferGates (TG3) des dritten Busknotens (BS3)
- enₙ: n-te Enable-Leitung zum Öffnen und Schließen des n-ten TransferGates (TGn) des n-ten, betreffenden Busknotens (BSₙ)
- GH: Gehäuse
- GND: Bezugspotenzialleitung. Diese liegt typischerweise aber nicht notwendigerweise auf Masse. Sie besitzt das zweite Bezugspotenzial (GND).
- iTCKₙ: interner Systembasistakt des betroffenen Busknoten (BSn)
- IDCR: Identifikationsregister
- IDCRn: Identifikationsregister des betrachteten Busknotens (BSn)
- Ilds: Beleuchtungsdatenauswahlsignal
- Ildsn: Beleuchtungsdatenauswahlsignal des betrachteten Busknotens (BSn)
- ILR: Beleuchtungsregister
- ILRn: Beleuchtungsregister des betrachteten Busknotens (BSn)
- ILIR: Beleuchtungsinstruktionsregister
- ILIRn: Beleuchtungsinstruktionsregister des betrachteten Busknotens (BSn)
- IR: Instruktionsregister der JTAG-Schnittstelle
- IRn: Instruktionsregister der JTAG-Schnittstelle des betrachteten Busknotens (BSn)
- IRDC: Instruktionsdekoder
- IRDCn: Instruktionsdekoder des betrachteten Busknotens (BSn)
- LED: Leuchtdiode. Es kann sich im Sinne dieser Erfindung auch um die Parallel- und/oder Serienschaltung mehrerer LEDs handeln.
- LED1: Anschluss für die erste LED-Gruppe (eine LED oder mehrere LEDs in Serie und/oder in Reihe geschaltet)
- LED2: Anschluss für die zweite LED-Gruppe (eine LED oder mehrere LEDs in Serie und/oder in Reihe geschaltet)
- LED3: Anschluss für die dritte LED-Gruppe (eine LED oder mehrere LEDs in Serie und/oder in Reihe geschaltet)
- LED4: Anschluss für die vierte LED-Gruppe (eine LED oder mehrere LEDs in Serie und/oder in Reihe geschaltet)
- LM1: Leuchtmittelgruppe 1, die durch den ersten Busknoten (BS1) gesteuert wird.
- LM2: Leuchtmittelgruppe 2, die durch den zweiten Busknoten (BS2) gesteuert wird.
- LM3: Leuchtmittelgruppe 3, die durch den dritten Busknoten (BS3) gesteuert wird.
- LM4: Leuchtmittelgruppe 4, die durch den vierten Busknoten (BS4) gesteuert wird.
- LM5: Leuchtmittelgruppe 5, die durch den fünften Busknoten (BS5) gesteuert wird.
- LM6: Leuchtmittelgruppe 6, die durch den sechsten Busknoten (BS6) gesteuert wird.
- LMn: Leuchtmittelgruppe , die durch den betrachteten Busknoten (BSn) gesteuert wird.
- MUX1: erster Multiplexer innerhalb der JTAG Schnittstelle zum Umschalten zwischen den Datenregistern (DR) und dem Instruktionsregister (IR)
- MUX2: zweiter Multiplexer innerhalb der JTAG-Schnittstelle zum Auswählen des aktiven Datenregisters (DR)
- MUX3: dritter Multiplexer zum Umschalten zwischen einem seriellen Eingang für Beleuchtungsdaten (SILDI) und den seriellen Eingangsdaten (TDI).
- MUXn: Multiplexer zum Umschalten zwischen einem seriellen Eingang für Beleuchtungsdaten (SILDIₙ) und den seriellen Eingangsdaten (TDIn) des betrachteten Busknotens.
- NOR: invertierender ODER-Schaltkreis
- OWM: Master-Zweidrahtdatenbusschnittstelle
- OWM1: Master-Zweidrahtdatenbusschnittstelle des ersten Busknotens (BS1)
- OWM1a: erste Master-Zweidrahtdatenbusschnittstelle des ersten Busknotens (BS1)
- OWM1b: zweite Master-Zweidrahtdatenbusschnittstelle des ersten Busknotens (BS1)
- OWM2: Master-Zweidrahtdatenbusschnittstelle des zweiten Busknotens (BS2)
- OWM2a: erste Master-Zweidrahtdatenbusschnittstelle des zweiten Busknotens (BS2)
- OWM2b: zweite Master-Zweidrahtdatenbusschnittstelle des zweiten Busknotens (BS2)
- OWM3: Master-Zweidrahtdatenbusschnittstelle des dritten Busknotens (BS3)
- OWM3a: erste Master-Zweidrahtdatenbusschnittstelle des dritten Busknotens (BS3)
- OWM3b: zweite Master-Zweidrahtdatenbusschnittstelle des dritten Busknotens (BS3)
- OWM4: Master-Zweidrahtdatenbusschnittstelle des vierten Busknotens (BS4)
- OWM4a: erste Master-Zweidrahtdatenbusschnittstelle des vierten Busknotens (BS4)
- OWM4b: zweite Master-Zweidrahtdatenbusschnittstelle des vierten Busknotens (BS4)
- OWM5: Master-Zweidrahtdatenbusschnittstelle des fünften Busknotens (BS5)
- OWM5a: erste Master-Zweidrahtdatenbusschnittstelle des fünften Busknotens (BS5)
- OWM5b: zweite Master-Zweidrahtdatenbusschnittstelle des fünften Busknotens (BS5)
- OWM6: Master-Zweidrahtdatenbusschnittstelle des sechsten Busknotens (BS6)
- OWM6a: erste Master-Zweidrahtdatenbusschnittstelle des sechsten Busknotens (BS6)
- OWM6b: zweite Master-Zweidrahtdatenbusschnittstelle des sechsten Busknotens (BS6)
- OWMn: Master-Zweidrahtdatenbusschnittstelle des betrachteten Busknotens (BSn)
- OWMCR: Bus-Master-Control-Register
- OWMCRn: Bus-Master-Control-Register des betrachteten Busknotens (BSn)
- OWS1: Zweidrahtdatenbusschnittstelle des ersten Busknotens (BS1)
- OWS2: Zweidrahtdatenbusschnittstelle des zweiten Busknotens (BS2);
- OWS3: Zweidrahtdatenbusschnittstelle des dritten Busknotens (BS3);
- OWS4: Zweidrahtdatenbusschnittstelle des vierten Busknotens (BS4);
- OWS5: Zweidrahtdatenbusschnittstelle des fünften Busknotens (BS5);
- OWS6: Zweidrahtdatenbusschnittstelle des sechsten Busknotens (BS6);
- OWSₙ: Zweidrahtdatenbusschnittstelle des betrachteten Busknotens (BSn);
- PCM: Puls-Code-Modulation
- PDM: Puls-Dichte-Modulation
- PDR: Zustand "Pause Datenregister" des Test-Controllers (TAPC)
- PFM: Puls Frequenz Modulation
- PIR: Zustand "Pause Instruktionsregister" des Test-Controllers (TAPC)
- POM: Pulse-On-Time Modulation und/oder Pulse-Off-Time-Modulation
- PWM: Puls-Weiten-Modulation. (Dieser Begriff umfasst im Sinne dieser Erfindung alle bekannten Arten der Puls-Modulation wie beispielsweise PFM, PCM, PDM, POM etc.)
- PWM1: erste PWM-Einheit
- PWM2: zweite PWM-Einheit
- PWM3: dritte PWM-Einheit
- PWMn: PWM-Einheit des betrachteten Busknotens (BSn)
- R₀: Innenwiderstand des Pull-Schaltkreises (R₁ₐ, R_{1b}, R₂ₐ, R_{2b}), der als vierte reale Spannungsquelle den Zweidrahtdatenbus (b1b2b3) bzw. den angeschlossenen Zweidrahtdatenbusabschnitt (b1, b2, b3) auf einem mittleren zweiten differentiellen Spannungsbetragspegel (V_{M}) hält, wenn die anderen Sender (T1a, T1b, T2a, T2b, T3a, T3b) nicht aktiv sind. (Nicht in den Fig.en? eingezeichnet)
- R1a: oberer Widerstand des ersten Spannungsteilers, der beispielhaft den differentiellen Pull-Schaltkreis zusammen mit dem zweiten Spannungsteiler bildet. Der differentielle Pull-Schaltkreis hält den Betrag des differentiellen Signalpegels (TOW) auf dem Zweidrahtdatenbus (b1b2b3, b4) im zweiten Spannungsbetragsbereich (V_{B2}) auf einem mittleren zweiten differentiellen Spannungsbetragspegel (V_{M}), wenn keiner der anderen Sender (T1a, T1b, T2a, T2b, T3a, T3b) aktiv ist.
- R1b: oberer Widerstand des zweiten Spannungsteilers, der beispielhaft den differentiellen Pull-Schaltkreis zusammen mit dem ersten Spannungsteiler bildet. Der differentielle Pull-Schaltkreis hält den Betrag des differentiellen Signalpegels (TOW) auf dem Zweidrahtdatenbus (b1b2b3, b4) im zweiten Spannungsbetragsbereich (V_{B2}) auf einem mittleren zweiten differentiellen Spannungsbetragspegel (V_{M}), wenn keiner der anderen Sender (T1a, T1b, T2a, T2b, T3a, T3b) aktiv ist.
- R2a: unterer Widerstand des ersten Spannungsteilers, der beispielhaft den differentiellen Pull-Schaltkreis zusammen mit dem zweiten Spannungsteiler bildet. Der differentielle Pull-Schaltkreis hält den Betrag des differentiellen Signalpegels (TOW)auf dem Zweidrahtdatenbus (b1b2b3, b4) im zweiten Spannungsbetragsbereich (V_{B2}) auf einem mittleren zweiten differentiellen Spannungsbetragspegel (V_{M}), wenn keiner der anderen Sender (T1a, T1b, T2a, T2b, T3a, T3b) aktiv ist.
- R2b: unterer Widerstand des zweiten Spannungsteilers, der beispielhaft den differentiellen Pull-Schaltkreis zusammen mit dem ersten Spannungsteiler bildet. Der differentielle Pull-Schaltkreis hält den Betrag des differentiellen Signalpegels (TOW)auf dem Zweidrahtdatenbus (b1b2b3, b4) im zweiten Spannungsbetragsbereich (V_{B2}) auf einem mittleren zweiten differentiellen Spannungsbetragspegel (V_{M}), wenn keiner der anderen Sender (T1a, T1b, T2a, T2b, T3a, T3b) aktiv ist.
- R1: erster Widerstand
- R_{1H}: Innenwiderstand der zweiten schaltbaren realen Spannungsquelle im eingeschalteten Zustand, die durch die schaltbare Stromquelle, die Transistoren (T1a, T1b), des Bus-Masters (BM) gebildet wird. (Nicht in den Figuren eingezeichnet)
- R2: zweiter Widerstand
- R_{2H}: Innenwiderstand der dritten schaltbaren realen Spannungsquelle im eingeschalteten Zustand, die durch die schaltbare Stromquelle, die Transistoren (T3a, T3b), des betreffenden Busknotens (BSn) gebildet wird. (Nicht in den Figuren eingezeichnet)
- R3: Spannungsteiler
- R4: vierter Widerstand
- R5: fünfter Widerstand
- R6: sechster Widerstand
- R7a: siebter Widerstand zur Einstellung des Innenwiderstands des Schalters der steuerbaren Stromquelle (T3a) für den Sender des betreffenden Busknotens (BSn)
- R7b: siebter Widerstand zur Einstellung des Innenwiderstands des Schalters der steuerbaren Stromquelle (T3b) für den Sender des betreffenden Busknotens (BSn)
- RUN: Zustand "Warten" des Test-Controllers (TAPC)
- RX: weitere Datenregister (DR), die dem JTAG-Standard entsprechen
- RXn: weitere Datenregister (DRn) des betreffenden Busknotens (BSn), die dem JTAG-Standard entsprechen
- SDRS: Zustand "Start des Datenregisterschiebens" im Test-Controller (TAPC)
- SILDIn: serieller Eingang für Beleuchtungsdaten des betreffenden Busknotens (BSn)
- SILDI1: serieller Eingang für Beleuchtungsdaten des ersten Busknotens (BS1)
- SILDI2: serieller Eingang für Beleuchtungsdaten des zweiten Busknotens (BS2)
- SILDI3: serieller Eingang für Beleuchtungsdaten des dritten Busknotens (BS3)
- SILDOn: serieller Ausgang für Beleuchtungsdaten des betreffenden Busknotens (BSn)
- SILDO1: serieller Ausgang für Beleuchtungsdaten des ersten Busknotens (BS1)
- SILDO2: serieller Ausgang für Beleuchtungsdaten des zweiten Busknotens (BS2)
- SILDO3: serieller Ausgang für Beleuchtungsdaten des dritten Busknotens (BS3)
- SIRS: Zustand "Start des Instruktionsregisterschiebens" im Test-Controller (TAPC)
- SIR: Zustand "Schieben Instruktionsregister" des Test-Controllers (TAPC)
- sir_sdr: Steuersignal für den ersten Multiplexer (MUX1) zwischen Instruktionsregister (IR) und Datenregistern (DR)
- SDR: Zustand "Schieben Datenregister" des Test-Controllers (TAPC)
- SR: Senderegister
- SRn: Senderegister des betreffenden Busknotens (BSn)
- T: Systembasistaktperiode
- T1a: erster Transistor für die Ansteuerung des ersten Eindrahtdatenbusses (bla, b2a, b3a, b4a) des Zweidrahtdatenbusses (b1b2b3b4) zum Senden des Systemtakts vom Bus-Master (BM) zu Busknoten. Der erste Transistor bildet einen dominierenden Schalter gegenüber anderen Sendern (T2a, T3a, R1a, R2a) auf dem ersten Eindrahtdatenbus (bla, b2a, b3a, b4a) des Zweidrahtdatenbusses (b1b2b3b4).
- T1b: weiterer erster Transistor für die Ansteuerung des zweiten Eindrahtdatenbusses (b1b, b2b, b3b, b4b) des Zweidrahtdatenbusses (b1b2b3b4) zum Senden des Systemtakts vom Bus-Master (BM) zu Busknoten. Der weitere erste Transistor bildet einen dominierenden Schalter gegenüber anderen Sendern (T2b, T3b, R1b, R2b) auf dem zweiten Eindrahtdatenbus (b1b, b2b, b3b, b4b) des Zweidrahtdatenbusses (b1b2b3b4).
- T_{1H}: erste Halbtaktperiode von mindestens zwei Halbtaktperioden (T_{1H}, T_{2H}) der Systemtaktperiode
- T2a: zweiter Transistor für die Ansteuerung des ersten Eindrahtdatenbusses (bla, b2a, b3a, b4a) des Zweidrahtdatenbusses (b1b2b3b4) zum Senden von Daten vom Bus-Master (BM) zu Busknoten. Der zweite Transistor bildet einen dominierenden Schalter gegenüber dem Spannungsteiler des differentiellen Pull-Schaltkreises (R1a, R2a) auf dem ersten Eindrahtdatenbus (bla, b2a, b3a, b4a) des Zweidrahtdatenbusses (b1b2b3b4). Der Innenwiderstand des zweiten Transistors im eingeschalteten Zustand ist so eingestellt, dass der erste Transistor (T1a) einen oder mehrere zweite und dritte Transistoren, die auf dem ersten Eindrahtdatenbus (bla, b2a, b3a, b4a) des Zweidrahtdatenbusses (b1b2b3b4) senden, überschreiben kann. Der zweite Transistor ist vorzugsweise einem dritten Transistor (T3a) gegenüber gleichberechtigt.
- T2b: weiterer zweiter Transistor für die Ansteuerung des zweiten Eindrahtdatenbusses (b1b, b2b, b3b, b4b) des Zweidrahtdatenbusses (b1b2b3b4) zum Senden von Daten vom Bus-Master (BM) zu Busknoten. Der weitere zweite Transistor bildet einen dominierenden Schalter gegenüber dem Spannungsteiler des differentiellen Pull-Schaltkreises (R1b, R2b) auf dem zweiten Eindrahtdatenbus des Zweidrahtdatenbusses (b1b2b3b4). Der Innenwiderstand des weiteren zweiten Transistors im eingeschalteten Zustand ist so eingestellt, dass der weitere erste Transistor (T1b) einen oder mehrere weitere zweite und weitere dritte Transistoren, die auf dem zweiten Eindrahtdatenbus (b1b, b2b, b3b, b4b) des Zweidrahtdatenbusses (b1b2b3b4) senden, überschreiben kann. Der weitere zweite Transistor ist vorzugsweise einem weiteren dritten Transistor (T3b) gegenüber gleichberechtigt.
- T_{2H}: zweite Halbtaktperiode von mindestens zwei Halbtaktperioden (T_{1H}, T_{2H}) der Systemtaktperiode
- T3a: dritter Transistor für die Ansteuerung des ersten Eindrahtdatenbusses (bla, b2a, b3a, b4a) des Zweidrahtdatenbusses (b1b2b3b4) zum Senden von Daten vom betrachteten Busknoten (BSn) zum Bus-Master (BM). Der dritte Transistor bildet einen dominierenden Schalter gegenüber dem Spannungsteiler des differentiellen Pull-Schaltkreises (R1a, R2a) auf dem ersten Eindrahtdatenbus des Zweidrahtdatenbusses (b1b2b3b4). Der Innenwiderstand des dritten Transistors im eingeschalteten Zustand ist so eingestellt, dass der erste Transistor (T1a) einen oder mehrere zweite und dritte Transistoren, die auf dem ersten Eindrahtdatenbus (bla, b2a, b3a, b4a) des Zweidrahtdatenbusses (b1b2b3b4) senden, überschreiben kann. Der dritte Transistor ist vorzugsweise einem zweiten Transistor (T2a) gegenüber gleichberechtigt.
- T3b: weiterer dritter Transistor für die Ansteuerung des zweiten Eindrahtdatenbusses (b1b, b2b, b3b, b4b) des Zweidrahtdatenbusses (b1b2b3b4) zum Senden von Daten vom betrachteten Busknoten (BSn) zum Bus-Master (BM). Der weitere dritte Transistor bildet einen dominierenden Schalter gegenüber dem weiteren Spannungsteiler des differentiellen Pull-Schaltkreises (R1b, R2b) auf dem zweiten Eindrahtdatenbus (b1b, b2b, b3b, b4b) des Zweidrahtdatenbusses (b1b2b3b4). Der Innenwiderstand des weiteren dritten Transistors im eingeschalteten Zustand ist so eingestellt, dass der weitere erste Transistor (T1b) einen oder mehrere weitere zweite und weitere dritte Transistoren, die auf dem zweiten Eindrahtdatenbus des Zweidrahtdatenbusses (b1b2b3b4) senden, überschreiben kann. Der weitere dritte Transistor ist vorzugsweise einem weiteren zweiten Transistor (T2b) gegenüber gleichberechtigt.
- TAPC: Test-Controller
- TAPCn: Test-Controller des betreffenden Busknotens (BSn)
- TB: Datenaufbereitung
- TCK: Takteingang (Testtakteingang) und Systemtakt und durch den BusMaster (BM) zu sendendes Taktsignal (Systemtakt).
- TCK1: rekonstruierter Systemtakt innerhalb des ersten Busknotens (BS1)
- TCK1i: rekonstruierter Systemtakt innerhalb des ersten Busknotens (BS1) von der ersten Zweidrahtdatenbusschnittstelle (OWS1) des ersten Busknotens (BS1) kommend
- TCK1o: rekonstruierter Systemtakt innerhalb des ersten Busknotens (BS1) für die Master-Zweidrahtdatenbusschnittstelle (OWM1) des ersten Busknotens (BS1)
- TCK1ao: rekonstruierter Systemtakt innerhalb des ersten Busknotens (BS1) für die erste Master-Zweidrahtdatenbusschnittstelle (OWM1a) des ersten Busknotens (BS1)
- TCK1bo: rekonstruierter Systemtakt innerhalb des ersten Busknotens (BS1) für die zweite Master-Zweidrahtdatenbusschnittstelle (OWM1b) des ersten Busknotens (BS1)
- TCK2: rekonstruierter Systemtakt innerhalb des zweiten Busknotens (BS2)
- TCK2i: rekonstruierter Systemtakt innerhalb des zweiten Busknotens (BS2) von der zweiten Zweidrahtdatenbusschnittstelle (OWS2) des zweiten Busknotens (BS2) kommend
- TCK2o: rekonstruierter Systemtakt innerhalb des zweiten Busknotens (BS2) für die Master-Zweidrahtdatenbusschnittstelle (OWM2) des zweiten Busknotens (BS2)
- TCK2ao: rekonstruierter Systemtakt innerhalb des zweiten Busknotens (BS2) für die erste Master-Zweidrahtdatenbusschnittstelle (OWM2a) des zweiten Busknotens (BS2)
- TCK2bo: rekonstruierter Systemtakt innerhalb des zweiten Busknotens (BS2) für die zweite Master-Zweidrahtdatenbusschnittstelle (OWM2b) des zweiten Busknotens (BS2)
- TCK3: rekonstruierter Systemtakt innerhalb des dritten Busknotens (BS3)
- TCK3i: rekonstruierter Systemtakt innerhalb des dritten Busknotens (BS3) von der dritten Zweidrahtdatenbusschnittstelle (OWS3) des dritten Busknotens (BS3) kommend
- TCK3o: rekonstruierter Systemtakt innerhalb des dritten Busknotens (BS3) für die Master-Zweidrahtdatenbusschnittstelle (OWM3) des dritten Busknotens (BS3))
- TCK3ao: rekonstruierter Systemtakt innerhalb des dritten Busknotens (BS3) für die erste Master-Zweidrahtdatenbusschnittstelle (OWM3a) des dritten Busknotens (BS3))
- TCK3bo: rekonstruierter Systemtakt innerhalb des dritten Busknotens (BS3) für die zweite Master-Zweidrahtdatenbusschnittstelle (OWM3b) des dritten Busknotens (BS3)
- TCK4: rekonstruierter Systemtakt innerhalb des vierten Busknotens (BS4)
- TCK4i: rekonstruierter Systemtakt innerhalb des vierten Busknotens (BS4) von der vierten Zweidrahtdatenbusschnittstelle (OWS4) des vierten Busknotens (BS4) kommend
- TCK4o: rekonstruierter Systemtakt innerhalb des vierten Busknotens (BS4) für die Master-Zweidrahtdatenbusschnittstelle (OWM4) des vierten Busknotens (BS4))
- TCK4ao: rekonstruierter Systemtakt innerhalb des vierten Busknotens (BS4) für die erste Master-Zweidrahtdatenbusschnittstelle (OWM4a) des vierten Busknotens (BS4)
- TCK4bo: rekonstruierter Systemtakt innerhalb des vierten Busknotens (BS4) für die zweite Master-Zweidrahtdatenbusschnittstelle (OWM4b) des vierten Busknotens (BS4)
- TCK5: rekonstruierter Systemtakt innerhalb des fünften Busknotens (BS5)
- TCK5i: rekonstruierter Systemtakt innerhalb des fünften Busknotens (BS5)von der fünften Zweidrahtdatenbusschnittstelle (OWS5) des fünften Busknotens (BS5) kommend
- TCK5o: rekonstruierter Systemtakt innerhalb des fünften Busknotens (BS5) für die Master-Zweidrahtdatenbusschnittstelle (OWM5) des fünften Busknotens (BS5)
- TCK5ao: rekonstruierter Systemtakt innerhalb des fünften Busknotens (BS5) für die erste Master-Zweidrahtdatenbusschnittstelle (OWM5a) des fünften Busknotens (BS5)
- TCK5bo: rekonstruierter Systemtakt innerhalb des fünften Busknotens (BS5) für die zweite Master-Zweidrahtdatenbusschnittstelle (OWM5b) des fünften Busknotens (BS5)
- TCK6: rekonstruierter Systemtakt innerhalb des sechste Busknotens (BS6)
- TCK6i: rekonstruierter Systemtakt innerhalb des sechste Busknotens (BS6) von der sechsten Zweidrahtdatenbusschnittstelle (OWS6) des sechste Busknotens (BS6) kommend
- TCK6o: rekonstruierter Systemtakt innerhalb des sechste Busknotens (BS6) für die Master-Zweidrahtdatenbusschnittstelle (OWM6) des sechste Busknotens (BS6)
- TCK6ao: rekonstruierter Systemtakt innerhalb des sechste Busknotens (BS6)für die erste Master-Zweidrahtdatenbusschnittstelle (OWM6a) des sechste Busknotens (BS6)
- TCK6bo: rekonstruierter Systemtakt innerhalb des sechste Busknotens (BS6) für die zweite Master-Zweidrahtdatenbusschnittstelle (OWM6b) des sechste Busknotens (BS6)
- TCKₙ: rekonstruierter Systemtakt innerhalb des betreffenden Busknotens (BSn)
- TDI: serieller Dateneingang (Testdateneingang)
- TDO_{z}: dritter Zeitschlitz oder Busknotensendezeitschlitz. Der dritte Zeitschlitz wird typischerweise zur Übertragung des TDO-Signals des JTAG Test-Ports nach IEEE Standard 1149 vom angesprochenen Busknoten mit Sendeberechtigung zum Bus-Master (BM) verwendet. Es ist aber nicht zwingend notwendig, dass dieser Zeitschlitz an der dritten zeitlichen Position platziert wird. Andere zeitliche Reihenfolgen sind möglich.
- TDo: serieller Datenausgang (Testdatenausgang) und durch den Bus-Master (BM) empfangenes Datensignal
- TDO1i: rekonstruiertes Datensignal innerhalb des ersten Busknotens (BS1) von der ersten Zweidrahtdatenbusschnittstelle (OWS1) des ersten Busknotens (BS1) kommend
- TDO1o: rekonstruiertes Datensignal innerhalb des ersten Busknotens (BS1) für die Master-Zweidrahtdatenbusschnittstelle (OWM1) des ersten Busknotens (BS1)
- TDO1ao: rekonstruiertes Datensignal innerhalb des ersten Busknotens (BS1) für die erste Master-Zweidrahtdatenbusschnittstelle (OWM1a) des ersten Busknotens (BS1)
- TDO1bo: rekonstruiertes Datensignal innerhalb des ersten Busknotens (BS1) für die zweite Master-Zweidrahtdatenbusschnittstelle (OWM1b) des ersten Busknotens (BS1)
- TDO2i: rekonstruiertes Datensignal innerhalb des zweiten Busknotens (BS2) von der zweiten Zweidrahtdatenbusschnittstelle (OWS2) des zweiten Busknotens (BS2) kommend
- TDO2o: rekonstruiertes Datensignal innerhalb des zweiten Busknotens (BS2) für die Master-Zweidrahtdatenbusschnittstelle (OWM2) des zweiten Busknotens (BS2)
- TDO2ao: rekonstruiertes Datensignal innerhalb des zweiten Busknotens (BS2) für die erste Master-Zweidrahtdatenbusschnittstelle (OWM2a) des zweiten Busknotens (BS2)
- TDO2bo: rekonstruiertes Datensignal innerhalb des zweiten Busknotens (BS2) für die zweite Master-Zweidrahtdatenbusschnittstelle (OWM2b) des zweiten Busknotens (BS2)
- TDO3i: rekonstruiertes Datensignal innerhalb des dritten Busknotens (BS3) von der dritten Zweidrahtdatenbusschnittstelle (OWS3) des dritten Busknotens (BS3) kommend
- TDO3o: rekonstruiertes Datensignal innerhalb des dritten Busknotens (BS3) für die Master-Zweidrahtdatenbusschnittstelle (OWM3) des dritten Busknotens (BS3)
- TDO3ao: rekonstruiertes Datensignal innerhalb des dritten Busknotens (BS3) für die erste Master-Zweidrahtdatenbusschnittstelle (OWM3a) des dritten Busknotens (BS3)
- TDO3bo: rekonstruiertes Datensignal innerhalb des dritten Busknotens (BS3) für die zweite Master-Zweidrahtdatenbusschnittstelle (OWM3b) des dritten Busknotens (BS3)
- TDO4i: rekonstruiertes Datensignal innerhalb des vierten Busknotens (BS4) von der vierten Zweidrahtdatenbusschnittstelle (OWS4) des vierten Busknotens (BS4) kommend
- TDO4o: rekonstruiertes Datensignal innerhalb des vierten Busknotens (BS4) für die Master-Zweidrahtdatenbusschnittstelle (OWM4) des vierten Busknotens (BS4)
- TDO4ao: rekonstruiertes Datensignal innerhalb des vierten Busknotens (BS4) für die erste Master-Zweidrahtdatenbusschnittstelle (OWM4a) des vierten Busknotens (BS4)
- TDO4bo: rekonstruiertes Datensignal innerhalb des vierten Busknotens (BS4) für die zweite Master-Zweidrahtdatenbusschnittstelle (OWM4b) des vierten Busknotens (BS4)
- TDO5i: rekonstruiertes Datensignal innerhalb des fünften Busknotens (BS5) von der fünften Zweidrahtdatenbusschnittstelle (OWS5) des fünften Busknotens (BS5) kommend
- TDO5o: rekonstruiertes Datensignal innerhalb des fünften Busknotens (BS5) für die Master-Zweidrahtdatenbusschnittstelle (OWM5) des fünften Busknotens (BS5)
- TDO5ao: rekonstruiertes Datensignal innerhalb des fünften Busknotens (BS5) für die erste Master-Zweidrahtdatenbusschnittstelle (OWM5a) des fünften Busknotens (BS5)
- TDO5bo: rekonstruiertes Datensignal innerhalb des fünften Busknotens (BS5) für die zweite Master-Zweidrahtdatenbusschnittstelle (OWM5b) des fünften Busknotens (BS5)
- TDO6i: rekonstruiertes Datensignal innerhalb des sechsten Busknotens (BS6) von der sechsten Zweidrahtdatenbusschnittstelle (OWS6) des sechsten Busknotens (BS6) kommend
- TDO6o: rekonstruiertes Datensignal innerhalb des sechsten Busknotens (BS6) für die Master-Zweidrahtdatenbusschnittstelle (OWM6) des sechsten Busknotens (BS6)
- TDO6ao: rekonstruiertes Datensignal innerhalb des sechsten Busknotens (BS6) für die erste Master-Zweidrahtdatenbusschnittstelle (OWM6a) des sechsten Busknotens (BS6)
- TDO6bo: rekonstruiertes Datensignal innerhalb des sechsten Busknotens (BS6) für die zweite Master-Zweidrahtdatenbusschnittstelle (OWM6b) des sechsten Busknotens (BS6)
- TDOₙ: aus dem Innern des betrachteten Busknotens (BSn) zu übertragende serielle Daten;
- TIN0: erster Zeitschlitz. Der erste Zeitschlitz wird typischerweise zur Übertragung des TMS-Signals des JTAG Test-Ports nach IEEE Standard 1149 vom Bus-Master (BM) zum jeweiligen Busknoten (BS1, BS2, BS3) verwendet. Es ist aber nicht zwingend notwendig, dass dieser Zeitschlitz an der ersten zeitlichen Position platziert wird. Andere zeitliche Reihenfolgen sind möglich.
- TIN1: zweiter Zeitschlitz. Der zweite Zeitschlitz wird typischerweise zur Übertragung des TDI-Signals des JTAG Test-Ports nach IEEE Standard 1149 vom Bus-Master zum Busknoten (BS1, BS2, BS3) verwendet. Es ist aber nicht zwingend notwendig, dass dieser Zeitschlitz an der zweiten zeitlichen Position platziert wird. Andere zeitliche Reihenfolgen sind möglich.
- TLR: Zustand "Testlogik zurücksetzen".
- TMS: Mode-Eingang (Testmode-Eingang) bzw. Test-Mode-Signal
- TMS_TDI1: kombiniertes TMS-TDI-Signal innerhalb des ersten Busknotens (BS1)
- TMS_TDI1i: kombiniertes TMS-TDI-Signal innerhalb des ersten Busknotens (BS1) von der ersten Zweidrahtdatenbusschnittstelle (OWS1) des ersten Busknotens (BS1) kommend
- TMS_TDI1o: kombiniertes TMS-TDI-Signal innerhalb des ersten Busknotens (BS1)für die Master-Zweidrahtdatenbusschnittstelle (OWM1) des ersten Busknotens (BS1)
- TMS_TDI1ao: kombiniertes TMS-TDI-Signal innerhalb des ersten Busknotens (BS1) für die erste Master-Zweidrahtdatenbusschnittstelle (OWM1a) des ersten Busknotens (BS1)
- TMS_TDI1bo: kombiniertes TMS-TDI-Signal innerhalb des ersten Busknotens (BS1) für die zweite Master-Zweidrahtdatenbusschnittstelle (OWM1b) des ersten Busknotens (BS1)
- TMS_TDI2: kombiniertes TMS-TDI-Signal innerhalb des zweiten Busknotens (BS2)
- TMS_TDI2i: kombiniertes TMS-TDI-Signal innerhalb des zweiten Busknotens (BS2) von der zweiten Zweidrahtdatenbusschnittstelle (OWS2) des zweiten Busknotens (BS2) kommend
- TMS_TDI2o: kombiniertes TMS-TDI-Signal innerhalb des zweiten Busknotens (BS2) für die Master-Zweidrahtdatenbusschnittstelle (OWM2) des zweiten Busknotens (BS2)
- TMS_TDI2ao: kombiniertes TMS-TDI-Signal innerhalb des zweiten Busknotens (BS2) für die erste Master-Zweidrahtdatenbusschnittstelle (OWM2a) des zweiten Busknotens (BS2)
- TMS_TDI2bo: kombiniertes TMS-TDI-Signal innerhalb des zweiten Busknotens (BS2) für die zweite Master-Zweidrahtdatenbusschnittstelle (OWM2b) des zweiten Busknotens (BS2)
- TMS_TDI3: kombiniertes TMS-TDI-Signal innerhalb des dritten Busknotens (BS3)
- TMS_TDI3i: kombiniertes TMS-TDI-Signal innerhalb des dritten Busknotens (BS3) von der dritten Zweidrahtdatenbusschnittstelle (OWS3) des dritten Busknotens (BS3) kommend
- TMS_TDI3o: kombiniertes TMS-TDI-Signal innerhalb des dritten Busknotens (BS3) für die Master-Zweidrahtdatenbusschnittstelle (OWM3) des dritten Busknotens (BS3))
- TMS_TDI3ao: kombiniertes TMS-TDI-Signal innerhalb des dritten Busknotens (BS3) für die erste Master-Zweidrahtdatenbusschnittstelle (OWM3a) des dritten Busknotens (BS3))
- TMS_TDI3bo: kombiniertes TMS-TDI-Signal innerhalb des dritten Busknotens (BS3) für die zweite Master-Zweidrahtdatenbusschnittstelle (OWM3b) des dritten Busknotens (BS3)
- TMS_TDI4: kombiniertes TMS-TDI-Signal innerhalb des vierten Busknotens (BS4)
- TMS_TDI4i: kombiniertes TMS-TDI-Signal innerhalb des vierten Busknotens (BS4) von der vierten Zweidrahtdatenbusschnittstelle (OWS4) des vierten Busknotens (BS4) kommend
- TMS_TDI4o: kombiniertes TMS-TDI-Signal innerhalb des vierten Busknotens (BS4) für die Master-Zweidrahtdatenbusschnittstelle (OWM4) des vierten Busknotens (BS4))
- TMS_TDI4ao: kombiniertes TMS-TDI-Signal innerhalb des vierten Busknotens (BS4) für die erste Master-Zweidrahtdatenbusschnittstelle (OWM4a) des vierten Busknotens (BS4)
- TMS_TDI4bo: kombiniertes TMS-TDI-Signal innerhalb des vierten Busknotens (BS4) für die zweite Master-Zweidrahtdatenbusschnittstelle (OWM4b) des vierten Busknotens (BS4)
- TMS_TDI5: kombiniertes TMS-TDI-Signal innerhalb des fünften Busknotens (BS5)
- TMS_TDI5i: kombiniertes TMS-TDI-Signal innerhalb des fünften Busknotens (BS5) von der fünften Zweidrahtdatenbusschnittstelle (OWS5) des fünften Busknotens (BS5) kommend
- TMS_TDI5o: kombiniertes TMS-TDI-Signal innerhalb des fünften Busknotens (BS5) für die Master-Zweidrahtdatenbusschnittstelle (OWM5) des fünften Busknotens (BS5)
- TMS_TDI5ao: kombiniertes TMS-TDI-Signal innerhalb des fünften Busknotens (BS5) für die erste Master-Zweidrahtdatenbusschnittstelle (OWM5a) des fünften Busknotens (BS5)
- TMS_TDI5bo: kombiniertes TMS-TDI-Signal innerhalb des fünften Busknotens (BS5) für die zweite Master-Zweidrahtdatenbusschnittstelle (OWM5b) des fünften Busknotens (BS5)
- TMS_TDI6: kombiniertes TMS-TDI-Signal innerhalb des sechsten Busknotens (BS6)
- TMS_TDI6i: kombiniertes TMS-TDI-Signal innerhalb des sechsten Busknotens (BS6) von der sechsten Zweidrahtdatenbusschnittstelle (OWS6) des sechsten Busknotens (BS6) kommend
- TMS_TDI6o: kombiniertes TMS-TDI-Signal innerhalb des sechsten Busknotens (BS6) für die Master-Zweidrahtdatenbusschnittstelle (OWM6) des sechsten Busknotens (BS6)
- TMS_TDI6ao: kombiniertes TMS-TDI-Signal innerhalb des sechsten Busknotens (BS6) für die erste Master-Zweidrahtdatenbusschnittstelle (OWM6a) des sechsten Busknotens (BS6)
- TMS_TDI6bo: kombiniertes TMS-TDI-Signal innerhalb des sechsten Busknotens (BS6) für die zweite Master-Zweidrahtdatenbusschnittstelle (OWM6b) des sechsten Busknotens (BS6)
- TMS_TDIₙ: kombiniertes TMS-TDI-Signal innerhalb des betrachteten Busknotens (BSn)
- TRST: optionaler Rücksetzeingang (Testrücksetzeingang)
- TG1: Transfer-Gate des beispielhaft ersten Busknotens (BS1)
- TG2: Transfer-Gate des beispielhaft zweiten Busknotens (BS2)
- TG3: Transfer-Gate des beispielhaft dritten Busknotens (BS3)
- TGn: Transfer-Gate des beispielhaft betrachteten Busknotens (BSn)
- TGCR: Transfer-Gate-Control-Register
- TGCRn: Transfer-Gate-Control-Register des betrachteten Busknotens (BSn)
- TOW: differentieller Signalpegel. Der differentielle Signalpegel auf dem Zweidrahtdatenbus (b1b2b3b4) ist die Potentialdifferenz zwischen dem ersten Eindrahtdatenbus und dem zweiten Eindrahtdatenbus des Zweidrahtdatenbusses (b1b2b3b4).
- UDR2: Zustand "Datenregister schreiben" des Test-Mode-Controllers
- UIR2: Zustand "Instruktionsregister schreiben" des Test-Mode-Controllers
- V_{bat}: Versorgungsspannung des Busknotens
- V_{M}: mittlerer zweiter differentieller Spannungsbetragspegel im zweiten Spannungsbetragsbereich (V_{B2}), der sich einstellt, wenn kein anderer Sender (T1a, T1b, T2a, T2b, T3a, T3b) aktiv ist und sich somit der Pull-Schaltkreis (R1a, R1b, R2a, R2b) durchsetzt.
- V_{1H}: erster Schwellwert. Der erste Schwellwert separiert den dritten Spannungsbetragsbereich (V_{B3}) einerseits vom ersten Spannungsbetragsbereich (V_{B1}) und zweiten Spannungsbetragsbereich (V_{B2}) andererseits auf Bus-Master-Seite. Der erste Schwellwert ist vorzugsweise gleich oder ähnlich dem dritten Schwellwert (V_{2H}). Er wird zur Übertragung von Daten verwendet.
- V_{2L}: zweiter Schwellwert. Der zweite Schwellwert separiert den ersten Spannungsbetragsbereich (V_{B1}) einerseits vom dritten Spannungsbetragsbereich (V_{B3}) und zweiten Spannungsbetragsbereich (V_{B2}) andererseits auf der Busknoten-Seite. Er wird zur Übertragung des Taktes verwendet.
- V_{2H}: dritter Schwellwert. Der dritte Schwellwert separiert den dritten Spannungsbetragsbereich (V_{B3}) einerseits vom ersten Spannungsbetragsbereich (V_{B1}) und zweiten Spannungsbetragsbereich (V_{B2}) andererseits auf Busknoten-Seite. Der dritte Schwellwert ist vorzugsweise gleich oder ähnlich dem ersten Schwellwert (V_{1H}). Er wird zur Übertragung von Daten verwendet.
- V_{B1}: erster Spannungsbetragsbereich, der zum zweiten Spannungsbetragsbereich (V_{B2}) hin durch den zweiten Schwellwert (V_{2L}) begrenzt wird. Er wird zur Übertragung des Taktes verwendet.
- V_{B2}: zweiter Spannungsbetragsbereich zwischen dem ersten Spannungsbetragsbereich (V_{B1}) und dem dritten Spannungsbetragsbereich (V_{B3}), der zum ersten Spannungsbetragsbereich (V_{B1}) hin durch den zweiten Schwellwert (V_{2L}) begrenzt wird und der zum dritten Spannungsbetragsbereich (V_{B3}) hin durch den dritten Schwellwert (V_{2H}) des Busknotens und/oder durch den ersten Schwellwert (V_{1H}) des Bus-Masters (BM) begrenzt wird. Er wird zur Übertragung von Daten verwendet.
- V_{B3}: dritter Spannungsbetragsbereich, der zum zweiten Spannungsbetragsbereich (V_{B2}) hin durch den dritten Schwellwert (V_{2H}) des Busknotens und/oder durch den ersten Schwellwert (V_{1H}) des Bus-Masters (BM) begrenzt wird. Er wird zur Übertragung von Daten verwendet.
- Vₑₓₜ₁: externe Versorgungsspannung
- -V_{IO}: erster differentieller Spannungsbetragspegel
- V_{IO}: dritter differentieller Spannungsbetragspegel und Versorgungsspannung für den Pull-Schaltkreis, hier den Spannungsteiler (R1a, R2a; R1b, R2b).
- V_{IO1}: Versorgungsspannung der schaltbaren Stromquelle (T2a, T2b) des Bus-Masters, also des Host-Prozessors. Der Spannungspegel liegt im dritten Spannungsbetragsbereich (V_{B3}).
- V_{IO2}: Versorgungsspannung der schaltbaren Stromquelle (T3a, T3b) des Busknotens, also der integrierten Schaltung oder des zu testenden oder steuernden Systems. Der Spannungspegel liegt im dritten Spannungsbetragsbereich (V_{B3}).
- VREF: Referenzspannung

## Patentansprüche

1. Vorrichtung mit
- einem Gehäuse (GH),
- wobei das Gehäuse (GH) mindestens drei Reihen von Anschlüssen, nämlich eine erste Anschlussreihe (V_{bat}, b1a, b1b), eine zweite Anschlussreihe (GND, b2a, b2b) und eine dritte Anschlussreihe (V_{bat}, b3a, b3b) und gegebenenfalls eine vierte Anschlussreihe (GND, b4a, 4b4) aufweist,
- wobei an dem Gehäuse (GH) jede der drei bzw. vier Anschlussreihen mindestens eine benachbarte Anschlussreihe aufweist, die in einem Winkel, insbesondere in einem spitzen Winkel oder in einem stumpfen Winkel oder in einem Winkel von 90° zur besagten Anschlussreihe angeordnet ist,
- mindestens einem Leuchtmittel (LED1, LED2, LED3), wobei das mindestens eine Leuchtmittel (LED1, LED2, LED3) in einer Aussparung (ASP) des Gehäuses (GH) oder auf dem Gehäuse (GH) angeordnet ist,
**dadurch gekennzeichnet, dass** die Vorrichtung zum Anschließen als Busknoten an einen differenziellen Zweidrahtdatenbus (b1b2b3) eines Datenbussystems zur Übertragung von Beleuchtungsdaten für Leuchtmittel (LED1, LED2, LED3, LED4) ist, wobei der Zweidrahtdatenbus mehrere durch Busknoten unterteilte Zweidrahtdatenbusabschnitte (b1, b2, b3) aufweist,
- wobei jede Anschlussreihe einen Anschluss für entweder ein erstes, insbesondere negatives Versorgungspotential (GND) oder ein zweites, insbesondere positives Versorgungspotential (Vbat) aufweist,
- wobei von zwei benachbarten Anschlussreihen des Gehäuses (GH) die eine Anschlussreihe einen Anschluss für das erste Versorgungspotential (GND) und die andere Anschlussreihe einen Anschluss für das zweite Versorgungspotential (Vbat) aufweist,
- wobei der jeweilige Versorgungspotentialanschluss sämtlicher Anschlussreihen des Gehäuses (GH) bezogen auf eine Zählrichtung im Uhrzeigersinn oder gegen den Uhrzeigersinn jeweils der erste Anschluss der Anschlussreihe ist,
- wobei jede Anschlussreihe zwei Busanschlüsse (b1a, b1b, b2a, b2b, b3a, b3b, b4a, b4b) für jeweils einen Zweidrahtdatenbusabschnitt (b1, b2, b3) umfasst,
- wobei die beiden Busanschlüsse (b1a, b1b, b2a, b2b, b3a, b3b, b4a, b4b) für einen Zweidrahtdatenbusabschnitt (b1, b2, b3) benachbart zu dem Versorgungspotentialanschluss der betreffenden Anschlussreihe liegen.

2. Vorrichtung nach Anspruch 1, **gekennzeichnet durch**
- ein elektrisch leitendes Montageelement (Lead-Frame) zum Herausführen von Kontaktfeldern eines in dem Gehäuse (GH) eingebetteten, eine IC-Schaltung aufweisenden Die aus dem Gehäuse (GH) heraus,
- wobei das Gehäuse (GH) zwei gegenüberliegende Anschlussreihen aufweist, von denen jede einen Versorgungspotentialanschluss für entweder das erste Versorgungspotential (GND) oder das zweite Versorgungspotential (V_{bat}) aufweist, und
- wobei die Versorgungspotentialanschlüsse dieser beiden Anschlussreihen durch das Montageelement (Lead-Frame) elektrisch leitend miteinander verbunden sind.

3. Vorrichtung nach Anspruch 2, **dadurch gekennzeichnet, dass** das Montageelement (Lead-Frame) ein das Die tragendes Stützteil (Die-Paddle) aufweist und dass das Stützteil die beiden Versorgungspotentialanschlüsse für entweder das erste Versorgungspotential (GND) oder das zweite Versorgungspotential (V_{bat}) der beiden besagten gegenüberliegenden Anschlussreihen elektrisch leitend miteinander verbindet.

## Claims

1. A device comprising
- a housing (GH),
- wherein the housing (GH) comprises at least three rows of connectors, namely a first row of connectors (V_{bat}, b1a, b1b,) and a second row of connectors (GND, b2a, b2b) and a third row of connectors (V_{bat}, b3a, b3b) and possibly a fourth row of connectors (GND, b4a, b4b),
- wherein each of the three or four rows of connectors has at least one adjacent row of connectors on the housing (GH), which is arranged at an angle, in particular an acute angle or an obtuse angle or an angle of 90° with respect to said row of connectors,
- at least one light emitting means (LED1, LED2, LED3),
- wherein the at least one light emitting means (LED1, LED2, LED3 is arranged in a recess (ASP) of a housing (GH) or on the housing (GH),
**characterized in that** the device for connection as a bus node to a differential two-wire data bus (b1b2b3) of a data bus system for the transmission of illumination data for light emitting means (LED1, LED2, LED3, LED4), wherein the two-wire data bus (b1b2b3) comprises a plurality of two-wire data bus sections (b1, b2, b3) divided by bus nodes,
- wherein each row of connectors has a connector for either a first, in particular negative supply potential (GND) or a second, in particular positive supply potential (V_{bat}),
- wherein, of two adjacent rows of connectors of the housing (GH), one row of connectors has a connector for the first supply potential (GND) and the other row of connectors has a connector for the second supply potential (V_{bat}),
- wherein, with respect to a clockwise or counter-clockwise counting direction, the respective supply potential connector of all rows of connectors of the housing (GH) is the first connector of the row of connectors, respectively,
- wherein each row of connectors comprises two bus connectors (b1a, b1b, b2a, b2b, b3a, b3b, b4a, b4b) for one respective two-wire data bus section (b1, b2, b3),
- wherein the two bus connectors (b1a, b1b, b2a, b2b, b3a, b3b, b4a, b4b) for a two-wire data bus section (b1, b2, b3) are situated adjacent to the supply potential connector of the respective row of connectors.

2. The device of claim 1, **characterized by**
- an electrically conductive mounting element (lead frame) for leading contact fields of a die out of the housing (GH), the die being embedded in the housing (GH) and comprising an IC circuit,
- wherein the housing (GH) has two opposite rows of connectors, each of which has a supply potential connector for either the first supply potential (GND) or the second supply potential (V_{bat}), and
- wherein the supply potential connectors of these two rows of connectors are connected with each other in an electrically conductive manner by the mounting element (lead frame).

3. The device as defined in claim 2, **characterized in that** the mounting element (lead frame) has a support member (die paddle) supporting the die, and that the support member connects the two supply potential connectors for the first supply potential (GND) or the second supply potential (V_{bat}) of said two opposite rows of connectors in an electrically conductive manner.

## Revendications

1. Dispositif doté
- d'un boîtier (GH),
- dans lequel le boîtier (GH) comporte au moins trois rangées de bornes de connexion, à savoir une première rangée de bornes (V_{bat}, b1a, b1b), une deuxième rangée de bornes (GND, b2a, b2b) et une troisième rangée de bornes (V_{bat}, b3a, b3b) et éventuellement une quatrième rangée de bornes (GND, b4a, 4b4),
- dans lequel chacune des trois ou quatre rangées de bornes du boîtier (GH) comporte au moins une rangée de bornes adjacente disposée comme formant un angle avec ladite rangée de bornes, en particulier un angle aigu ou un angle obtus ou un angle de 90°,
- au moins un moyen d'éclairage (LED1, LED2, LED3), dans lequel l'au moins un moyen d'éclairage (LED1, LED2, LED3) est disposé dans un évidement (ASP) du boîtier (GH) ou sur le boîtier (GH), **caractérisé en ce que** le dispositif est destiné à la connexion en tant que nœud de bus à un bus de données différentiel à deux fils (b1b2b3) d'un système de bus de données pour la transmission de données d'éclairage pour des moyens d'éclairage (LED1, LED2, LED3, LED4), dans lequel le bus de données à deux fils comporte plusieurs sections de bus de données à deux fils (b1, b2, b3) divisées par des nœuds de bus,
- dans lequel chaque rangée de bornes comporte une borne ou bien pour un premier potentiel d'alimentation (GND), en particulier négatif, ou bien pour un deuxième potentiel d'alimentation (V_{bat}), en particulier positif,
- dans lequel parmi deux rangées de bornes adjacentes du boîtier (GH), l'une rangée de bornes comporte une borne pour le premier potentiel d'alimentation (GND) et l'autre rangée de bornes comporte une borne pour le deuxième potentiel d'alimentation (V_{bat}),
- dans lequel la borne de potentiel d'alimentation respective de toutes les rangées de bornes du boîtier (GH) est respectivement la première borne de la rangée de bornes, par rapport à une direction de comptage dans le sens horaire ou dans le sens antihoraire,
- dans lequel chaque rangée de bornes comprend deux bornes de bus respectives (b1a, b1b, b2a, b2b, b3a, b3b, b4a, b4b) pour une section de bus de données à deux fils (b1, b2, b3),
- dans lequel les deux bornes de bus (b1a, b1b, b2a, b2b, b3a, b3b, b4a, b4b) pour une section de bus de données à deux fils (b1, b2, b3) sont adjacentes à la borne de potentiel d'alimentation de la rangée de bornes concernées.

2. Dispositif selon la revendication 1, **caractérisé par**
- un élément de montage électriquement conducteur (Lead-Frame) destiné à sortir hors du boîtier (GH) les plaques de contact d'un die comportant un circuit intégré et incorporé dans le boîtier (GH),
- dans lequel le boîtier (GH) comporte deux rangées de bornes opposées, desquelles chacune comprend une borne de potentiel d'alimentation ou bien pour le premier potentiel d'alimentation (GND) ou bien pour le deuxième potentiel d'alimentation (V_{bat}), et
- dans lequel les bornes de potentiel d'alimentation de ces deux rangées de bornes sont reliées l'une à l'autre de manière électriquement conductrice par l'élément de montage (Lead-Frame).

3. Dispositif selon la revendication 2, **caractérisé en ce que** l'élément de montage (Lead-Frame) comporte une pièce de soutien portant le die (Die-Paddle) et **en ce que** la pièce de soutien relie l'une à l'autre de manière électriquement conductrice les deux bornes de potentiel d'alimentation ou bien pour le premier potentiel d'alimentation (GND) ou bien pour le deuxième potentiel d'alimentation (V_{bat}) desdites deux rangées de bornes opposées.
